(19) Europäisches Patentamt
European Patent Office
Office européen des brevets

(11) **EP 4 345 665 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **23201005.8**

(22) Anmeldetag: **29.09.2023**

(51) Internationale Patentklassifikation (IPC):
**G06F 21/55** (2013.01)  **H04L 9/40** (2022.01)

(52) Gemeinsame Patentklassifikation (CPC):
**G06F 21/552; H04L 63/1425**

(54) **DETEKTIEREN EINES ANGRIFFS AUF EIN ZU SCHÜTZENDES COMPUTERSYSTEM**

DETECTING AN ATTACK ON A COMPUTER SYSTEM TO BE PROTECTED

DÉTECTION D'UNE ATTAQUE SUR UN SYSTÈME INFORMATIQUE À PROTÉGER

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.09.2022 DE 102022125399**

(43) Veröffentlichungstag der Anmeldung:
**03.04.2024 Patentblatt 2024/14**

(73) Patentinhaber: **Bundesdruckerei GmbH 10969 Berlin (DE)**

(72) Erfinder:
• **Wilke, Andreas Dr.**
  **13507 Berlin (DE)**
• **Fabian, David**
  **13465 Berlin (DE)**
• **Kunaht-Huhsmann, Neele**
  **10245 Berlin (DE)**
• **Schleich, Wolfgang Prof. Dr.**
  **89081 Ulm (DE)**

(74) Vertreter: **Richardt Patentanwälte PartG mbB Wilhelmstraße 7 65185 Wiesbaden (DE)**

(56) Entgegenhaltungen:
**US-B2- 11 159 564**

• **STUDIAWAN HUDAN ET AL: "Graph clustering and anomaly detection of access control log for forensic purposes", DIGITAL INVESTIGATION, ELSEVIER, AMSTERDAM, NL, vol. 21, 3 May 2017 (2017-05-03), pages 76 - 87, XP085052765, ISSN: 1742-2876, DOI: 10.1016/J.DIIN.2017.05.001**

EP 4 345 665 B1

**Beschreibung**

Die Erfindung betrifft ein Verfahren zum Detektieren eines Angriffs auf ein zu schützendes Computersystem, ein Computersystem zum Detektieren des Angriffs sowie ein verteiltes Computersystem zum Detektieren des Angriffs.

Im Zuge der zunehmenden Digitalisierung, Automatisierung und Vernetzung in allen Lebens- und Arbeitsbereichen nimmt die Bedeutung und Komplexität der hierfür verwendeten Datenverarbeitungssysteme immer mehr zu. Mit der zunehmenden Vernetzung geht aber auch eine erhöhte Angreifbarkeit der Systeme einher. Um die Systeme vor solchen Angriffen zu schützen kommen beispielsweise sogenannte Angriffserkennungssysteme bzw. Intrusion Detection Systeme (IDS) zum Einsatz. Ein Intrusion Detection System ist dazu konfiguriert auf Computer, Server oder Netzwerke gerichtete Angriffe zu erkennen und darüber zu informieren. Im Allgemeinen erkennt ein Detection System anhand bestimmter Muster selbständig Angriffe auf Computersysteme oder Netzwerke und informiert Anwender oder Administrationen. Entsprechende Angriffe, insbesondere wenn diese geschickt erfolgen, stellt eine Herausforderung dar.

Die US 11 159 564 B2 beschreibt ein Verfahren zum Erkennen von Zero-Day-Angriffen mit unbekannten Angriffssignaturen durch Korrelation von Verhaltensunterschieden einer Vielzahl von Entitäten. Es wird ein Entitäts-Basisverhalten für jede Entität der Vielzahl von Entitäten bestimmt, das Entitäts-Basisverhalten umfasst mehrere Variablen. Ein Entitätsverhaltensunterschied wird für jede Entität zu einer Reihe von Zeitpunkten bestimmt. Korrelationen zwischen den Entitätsverhaltensunterschieden für die Vielzahl von Entitäten werden zu der Reihe von Zeitpunkten bestimmt. Basierend auf diesen Korrelationen wird bestimmt, ob die Vielzahl von Entitäten koordinierte Verhaltensunterschiede aufweist. Eine Angriffssignatur wird basierend auf den Entitätsverhaltensunterschieden und den Korrelationen bestimmt. Eine Datenbank mit Angriffssignaturen wird generiert.

Der Artikel "Graph clustering and anomaly detection of access control log for forensic purposes" von Studiawan Hudan et al. in Digital Investigation, Elsevier Ltd., Amsterdam, Niederlande, Band 21, 2017, Seiten 76 bis 87 beschreibt ein Verfahren zum automatischen Erkennen einer Anomalie in einem Zugriffskontrollprotokoll eines Betriebssystems. Die Protokolle werden zunächst vorverarbeitet und dann mithilfe eines verbesserten MajorClust-Algorithmus gruppiert, um ein besseres Cluster zu erhalten. Die Clustering-Ergebnisse werden anhand einer Bewertung auf Anomalien überprüft, die eine Mehrzahl von Faktoren berücksichtigt, wie etwa eine Gesamtzahl an Mitglieder in einem Cluster, eine Häufigkeit der Ereignisse in einer Protokolldatei und eine Zeitspanne bis zu einem Eintreffen einer bestimmten Aktivität. Schließlich wird eine graphenbasierte Visualisierung der Protokolle bereitgestellt, um eine einfachen Analyse zu unterstützen.

Der Erfindung liegt die Aufgabe zugrunde, ein verbessertes Verfahren zum Detektieren eines Angriffs auf ein zu schützendes Computersystem zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Detektieren eines Angriffs auf ein zu schützendes Computersystem unter Verwendung von protokollierten Zugriffsdaten von Zugriffen auf das zu schützende Computersystem. Das Verfahren umfasst:

- Protokollieren der Zugriffsdaten, wobei das Protokollieren der Zugriffsdaten ein Speichern von Zugriffsdatensätzen in ein oder mehreren Datenbanken umfasst, wobei die Zugriffsdatensätze im Zuge von Zugriffen auf das zu schützende Computersystem erfasste Zugriffsdaten mit Werten zu einer Mehrzahl von Zugriffsparametern umfassen, wobei die Zugriffsdatensätze ferner jeweils eine Zeitangabe umfassen, welche angibt, wann die protokollierten Werte erfasst wurden,
- auf ein Auftreten eines Angriffs auf das zu schützende Computersystem hin, Ausführen einer Anomalieanalyse, wobei die Anomalieanalyse ein Bestimmen von ein oder mehreren Anomalien innerhalb erster Zugriffsdatensätze der protokollierten Zugriffsdatensätze umfasst, deren protokollierte Zugriffsdaten innerhalb eines den Angriff zumindest teilweise umfassenden vordefinierten ersten Zeitintervalls erfasst wurden, wobei die Anomalien jeweils eine Kombination von Werten von Zugriffsparametern sind, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdatensätze unterscheidet, deren Werte in einem vordefinierten zweiten Zeitintervall erfasst wurden,
- Identifizieren derjenigen Zugriffsparameter der Zugriffsdaten von Zugriffen auf das zu schützende Computersystem, deren Werte von den bestimmten ein oder mehreren Anomalien umfasst sind,
- Überwachen der für die identifizierten Zugriffsparameter der Zugriffsdaten in den Zugriffsdatensätzen protokollierten Werte, wobei das Überwachen ein Detektieren eines erneuten Angriffs umfasst auf ein Erfassen von Werten für die identifizierten Zugriffsparameter der Zugriffsdaten von Zugriffen auf das zu schützende Computersystem innerhalb eines vordefinierten dritten Zeitintervalls, für welche sich ein dritter Unterschied in einer dritten Wahrscheinlichkeit eines Auftretens der entsprechenden Werte innerhalb von dritten Zugriffsdatensätzen der protokollierten Zugriffsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Ausführungsformen können den Vorteil haben, dass basierend auf der Anomalieanalyse Zugriffsparameter identifiziert werden können, deren Werte von ein oder mehreren Anomalien umfasst werden, welche im Zuge eines Angriffs auftreten. Da es sich um Anomalien handelt, d.h. um Kombinationen von Werten, deren relative Wahrscheinlichkeit im Falle eines Angriffs deutlich abweicht von ihrer üblichen relativen Wahrscheinlichkeit, können diese Anomalien als ein Indiz für einen Angriff verwendet werden. Die Unterschiede in den Wahrscheinlichkeiten sind ein Maß für eine Korrelation zwischen den betrachteten Werten der Zugriffsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation im Zuge eines Angriffs signifikant zu- oder abnimmt. Es wird dabei nach ein oder mehreren Kombinationen von Zugriffsparametern gesucht, für deren Werte sich eine Korrelation bei einem Angriff signifikant ändert und die damit als Indikator für den entsprechenden Angriff dienen können. Die identifizierten Zugriffsparameter werden dem Angriff bzw. einem Identifikator desselben zugeordnet. Die resultierende Zuordnung wird beispielsweise gespeichert und als Vergleichsdatensatz für ein Detektieren eines Angriffs verwendet werden. Die Idee dahinter ist, dass auch wenn Angriffe im Einzelfall jeweils anders aussehen können, sie doch ähnliche Muster bilden, welche sich von den üblichen Verteilungen von Zugriffsdaten abheben.

Zunächst werden im Zuge einer Anomalieanalyse beispielsweise diejenigen Zugriffsparameter identifiziert, deren Unterschied in den Wahrscheinlichkeiten eine Anomalie in einem einen Angriff zumindest teilweise umfassenden vordefinierten Zeitintervall aufweist. Beispielsweise umfasst das entsprechende Zeitintervall den vollständigen Angriff. Das entsprechende Zeitintervall umfasst den Angriff zumindest teilweise, wenn innerhalb des Zeitintervalls Handlungen erfolgen, welche Teil des Angriffs sind. Bei entsprechenden Handlungen handelt es sich beispielsweise zum Handlungen im Zuge von Zugriffen und/oder Zugriffsversuchen auf das zu schützende Computersystem. Das entsprechende Zeitintervall umfasst den Angriff vollständig, wenn innerhalb des Zeitintervalls sämtliche Handlungen erfolgen, welche Teil des Angriffs sind. Eine Anomalie liegt vor, wenn die für das den Angriff zumindest teilweise umfassende vordefinierte Zeitintervall bestimmte Korrelation signifikant von einer Referenzkorrelation bzw. Referenzwahrscheinlichkeiten eines Referenzzeitintervalls abweicht, d.h. der Unterschied größer oder gleich einem vordefinierten Größenwert ist.

Bei dem zweiten Unterschied in der zweiten Wahrscheinlichkeit des Auftretens der entsprechenden Werte innerhalb von zweiten Zugriffsdatensätze der protokollierten Zugriffsdatensätze, deren Werte in dem vordefinierten zweiten Zeitintervall erfasst wurden, handelt es sich um eine solche Referenzwahrscheinlichkeit für das Auftreten der entsprechenden Werte innerhalb von Referenzzugriffsdatensätze eines Referenzzeitintervralls.

Die Länge des Referenzzeitintervalls, dessen Referenzzugriffsdatensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenzzugriffsdatensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenzzugriffsdatensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Ausführungsformen können den Vorteil haben, dass anhand der Anomalieanalyse Zugriffsparameter des zu schützenden Computersystems ermittelt werden können, bei deren Werten im Zuge eines Angriffs Anomalien auftreten. Mit anderen Worten kann bestimmt werden, welche Anomalien innerhalb der in den Zugriffsdatensätzen protokollierten Zugriffsdaten während eines Angriffs auftreten, die sonst nicht auftreten und mithin für ein Detektieren des Angriffs mit einer hohen Wahrscheinlichkeit geeignet sind.

Beispielsweise wird für die Anomalieanalyse ein einziger Angriff herangezogen, d.h. die ersten Zugriffsdatensätze umfassen ausschließlich protokollierte Zugriffsdatensätze, deren protokollierte Werte innerhalb eines den Angriff zumindest teilweise umfassenden vordefinierten ersten Zeitintervalls erfasst wurden. Beispielsweise wird für die Anomalieanalyse eine Mehrzahl von Angriffen herangezogen. Bei den herangezogenen Angriffen handelt es sich beispielsweise um identische oder ähnliche Angriffe. In diesem Fall wird beispielsweise eine Mehrzahl von ersten Zeitintervallen, welche jeweils einen Angriff der Mehrzahl von Angriffen jeweils zumindest teilweise umfassen, berücksichtigt. Dabei umfassen die ersten Zugriffsdatensätze dann protokollierte Zugriffsdatensätze, deren protokollierte Werte innerhalb eines der ersten Zeitintervalle der Mehrzahl von ersten Zeitintervallen erfasst wurden.

Die ein oder mehreren Anomalien in den identifizierten Zugriffsparametern des Computersystems werden beispielsweise dem Angriff zugeordnet und die identifizierten Zugriffsparameter werden zur weiteren Überwachung der protokollierten Zugriffsdaten verwendet. Im Zuge der Überwachung der Zugriffsdaten werden nachfolgend protokollierte Zugriffsdaten daraufhin überprüft, ob in diesen identifizierten Zugriffsparametern entsprechende Anomalien auftreten. Entsprechende Anomalien liegen vor, wenn Werte für die identifizierten Zugriffsparameter des Computersystems innerhalb eines vordefinierten Zeitintervalls erfasst werden, für welche sich ein Unterschied in der Wahrscheinlichkeit des Auftretens der entsprechenden Werte innerhalb des entsprechenden Zeitintervalls, mindestens um den vordefinierten Größenwert von einem Referenzunterschied in der Referenzwahrscheinlichkeit des Auftretens der entsprechenden Werte innerhalb von Referenzzugriffsdatensätze eines Referenzzeitintervalls unterscheidet.

Wird ein Auftreten ein oder mehrerer entsprechender Anomalien für Werte der identifizierten Zugriffsparameter erfasst, kann dies als Trigger zum Detektieren eines, beispielsweise wiederholten bzw. erneuten, Angriffs verwendet werden. Um den entsprechenden Angriff abzuwehren können beispielsweise ein oder mehrere vordefinierte Gegenmaßnahmen eingeleitet werden.

Die Länge des Referenzzeitintervalls, dessen Referenzzugriffsdatensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenzzugriffsdatensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenzzugriffsdatensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Nach Ausführungsformen kann ein Auftreten ein oder mehrerer Anomalien in den überwachten Zugriffsdatensätzen als Trigger zum Detektieren eines Angriffs verwendet werden. Beispielsweise kann ein Auftreten ein oder mehrerer der entsprechenden Anomalien verwendet werden, um dem Angriff möglichst schnell und frühzeitig detektieren und entgegentreten zu können.

Beispielsweise wird das erste Zeitintervall, dessen protokollierte Zugriffsdatensätze zur Anomalieanalyse verwendet werden, variiert. Beispielsweise wird zunächst ein vordefiniertes Zeitintervall, welches den Angriff zumindest teilweise umfasst, herangezogen. Dieses Zeitintervall kann dann beispielsweise verlängert oder verkürzt werden und/oder von dem Angriff in der Zeit zurückverschoben werden, bis eine oder mehrere Anomalien aufgefunden werden deren Wahrscheinlichkeitsunterschiede gegenüber dem Referenzzeitintervall ausreichenden groß ist, d.h. mindestens den vordefinierten Größenwert aufweist.

Ausführungsformen können den Vorteil haben, dass sie ein effektives Detektieren von Angriffen auf ein zu schützendes Computersystem ermöglichen.

Nach Ausführungsformen handelt es sich bei den Kombinationen von Werten jeweils um Wertepaare. Beispielsweise umfassen die Anomalien jeweils Wertepaare, d.h. zwei Werte für zwei Zugriffsparameter von Zugriffen auf das zu schützende Computersystem. Bei dem Unterschied in den Wahrscheinlichkeiten des Auftretens der Werte eines Wertepaars handelt es sich beispielsweise um eine Differenz zwischen den Wahrscheinlichkeiten für die einzelnen Werte des entsprechenden Wertepaars. Diese Differenz wird beispielsweise in Bezug auf das Auftreten in einem vordefinierten Zeitintervall, etwa das erste oder dritte Zeitintervall, berechnet und mit der entsprechenden Differenz für ein Referenzzeitintervall, d.h. einer Referenzdifferenz, verglichen. Falls ein Unterschied zwischen diesen Differenzen größer oder gleich einem vordefinierten Größenwert ist, liegt eine Anomalie vor.

Ausführungsformen können den Vorteil haben, dass ein effektiver und effizienter Ansatz zum Bestimmen von Anomalien in beliebigen Datensätzen bereitgestellt wird.

Die Zugriffsparameter werden beispielsweise als diskrete Zufallsvariablen betrachtet, welche gemäß der Anzahl des Auftretens der ihnen zugeordneten Werte in den Zugriffsdatensätzen verteilt sind. Die Wahrscheinlichkeit, dass ein Zugriffsparameter X den Wert x annimmt, ist:

$$p(X = x) = \frac{|I_X(x)|}{N}.$$

Dabei ist N die Gesamtzahl an Zugriffsdatensätze, welche beispielsweise jeweils anhand einer zugeordneten "ID", d.h. einem zugeordneten Identifikator, eindeutig identifizierbar sind.

Nach Ausführungsformen ist der Unterschied in der Wahrscheinlichkeit eines Auftretens eines ersten Werts $x_0$ eines ersten Zugriffsparameters X eines Wertepaars und eines zweiten Werts $y_0$ eines zweiten Zugriffsparameters Y des Wertepaars innerhalb der Zugriffsdatensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \sum_Z \sum_{z \in V(z)} |p_{Z|X=x_0}(z) - p_{Z|Y=y_0}(z)|.$$

Die Summation läuft über alle weiteren, d.h. über dritte Zugriffsparameter Z und deren Werte, d.h. über alle dritten Werte z, welche für die entsprechenden weiteren Zugriffsparameter Z innerhalb der Zugriffsdatensätze der ein oder mehreren Datenbanken protokolliert sind. V(Z) ist die Menge aller protokollierter dritter Werte z der dritten Zugriffsparameter Z. Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem ersten Wert $x_0$ des ersten Zugriffsparameters X ist definiert als

$$p_{Z|X=x_0}(z) = \frac{\left| I_Z(z) \cap I_X^{\triangle t_i}(x_0) \right|}{\left| I_X^{\triangle t_i}(x_0) \right|}.$$

$I_X^{\triangle t_i}(x_0)$ ist die Menge der Zugriffsdatensätze des entsprechenden vordefinierten Zeitintervalls $\triangle t_i$, welche den ersten Wert $x_0$ für den ersten Zugriffsparameter X umfassen. $I_Z(z)$ ist die Menge der Zugriffsdatensätze der ein oder mehreren Datenbanken, welche den dritten Wert z für den weiteren dritten Zugriffsparameter Z umfassen. Die Schnittmenge $I_Z(z) \cap I_X^{\triangle t_i}(x_0)$ ist somit die Menge aller Zugriffsdatensätze des vordefinierten Zeitintervalls $\triangle t_i$, welche sowohl den bestimmten dritten Wert z des weiteren dritten Zugriffsparameters Z, als auch den ersten Wert $x_0$ des ersten Zugriffsparameters X umfassen.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem zweiten Wert $y_0$ des zweiten Zugriffsparameters Y ist definiert als

$$p_{Z|Y=y_0}(z) = \frac{\left| I_Z(z) \cap I_Y^{\triangle t_i}(y_0) \right|}{\left| I_Y^{\triangle t_i}(y_0) \right|}.$$

$I_Y^{\triangle t_i}(y_0)$ ist die Menge der Zugriffsdatensätze des entsprechenden vordefinierten Zeitintervalls $\triangle t_i$ ist, welche den zweiten Wert $y_0$ für den zweiten Zugriffsparameter Y umfassen. Die Schnittmenge $I_Z(z) \cap I_Y^{\triangle t_i}(y_0)$ ist somit die Menge aller Zugriffsdatensätze des vordefinierten Zeitintervalls $\triangle t_i$, welche sowohl den bestimmten dritten Wert z des weiteren dritten Zugriffsparameters Z, als auch den zweiten Wert $y_0$ des zweiten Zugriffsparameters Y umfassen.

Ausführungsformen können den Vorteil haben, dass ein effektiver und effizienter Ansatz zum Bestimmen von Anomalien in beliebigen Datensätzen bereitgestellt wird.

Eine in der zugrunde liegenden Datenmenge, d.h. in den ein oder mehreren Datenbanken protokollierten Zugriffsdatendatensätze, gespeicherte Information wird beispielsweise eindeutig identifiziert durch das Tuple (ID, K, V), wobei "ID" ein eindeutiger Identifikator eines entsprechenden Zugriffsdatensatzes, "K" ein entsprechender Zugriffsparameter und "V" ein entsprechender Wert ist. Je nach Reihenfolge, in der auf die einzelnen Komponenten des Tulpes zugegriffen wird, um im Zuge einer Datenbankoperation die entsprechende Information zu verwenden, können beispielsweise unterschiedliche Datenbanktypen identifiziert werden.

Beispielsweise handelt es sich bei einer oder mehreren der Datenbanken um eine dokumentenorientierte Datenbank. In einer dokumentenorientierten Datenbank ist die Zugriffsreihenfolge beispielsweise Zugriffsdatensatz, Zugriffsparameter, Wert. Beispielsweise wird zum Auffinden eines Werts für einen Zugriffsparameter nacheinander auf die Zugriffsdatensätze zugegriffen, in diesen jeweils nach dem entsprechenden Zugriffsparameter gesucht und geprüft, ob für diesen der entsprechende Wert in dem Zugriffsdatensatz eingetragen ist. Eine dokumentenorientierte Datenbank ist eine Datenbank, bei der Dokumente die Grundeinheit zur Speicherung der Daten bilden, d.h. ein entsprechendes Datenbankmanagementsystem speichert die Inhalte der Datenbank inForm der Dokumente ab. Eine dokumentenorientierte Datenbank enthält beispielsweise eine Mehrzahl einzelner Dokumente, welchen jeweils ein eindeutiger Identifikator zugeordnet ist. Hierbei entspricht ein Dokument beispielsweise einer Zeile in einer Datenbanktabelle.

Beispielsweise handelt es sich bei einer oder mehreren der Datenbanken um eine spaltenorientierte Datenbank. In einer spaltenorientierten Datenbank ist die Zugriffsreihenfolge beispielsweise Zugriffsparameter, Zugriffsdatensatz, Wert. Beispielsweise wird zunächst der Zugriffsparameter identifiziert und dann werden für diesen Zugriffsparameter nacheinander die in den einzelnen Zugriffsdatensätzen protokollierten Werte geprüft. Im Falle einer spaltenorientieren Datenbank speichert ein entsprechendes Datenbankmanagementsystem die Inhalte der Datenbank beispielsweise spaltenweise physisch ab.

Beispielsweise handelt es sich bei einer oder mehreren der Datenbanken um eine indexorientierte Datenbank. In einer indexorientierten Datenbank ist die Zugriffsreihenfolge beispielsweise Zugriffsparameter, Wert, Zugriffsdatensatz. Beispielsweise wird unter Verwendung eines Indexes bzw. einer Indexstruktur zunächst geprüft, ob für einen Zugriffsparameter der gesuchte Wert protokolliert wurde, d.h. in den Zugriffsdatensätzen vorkommt, und falls ja, in welchem Zugriffsdatensatz er vorkommt. Die Indexstruktur kann den entsprechenden Zugriffsdatensatz beispielsweise anhand seiner ID identifizieren, mit deren Hilfe dann auf den identifizierten Zugriffsdatensatz zugegriffen werden kann. Im Falle einer indexorientierten Datenbank wird zusätzlich zu den Daten der Datenbank, d.h. der Datenstruktur, eine Indexstruktur bereitgestellt, welche beispielsweise ein Suchen nach bestimmten Inhalten der Datenbank vereinfacht und beschleunigt. So kann die Indexstruktur beispielsweise für jeden in den Zugriffsdatensätzen vorkommenden Zugriffsparameter jeweils angeben, welche Werte für den entsprechenden Zugriffsparameter in den Zugriffsdatensätzen gespeichert sind. Beispielsweise umfasst die Indexstruktur für jeden der Zugriffsparameter jeweils eine Teilstruktur bzw. einen Index, welcher die für diesen Zugriffsparameter in den Zugriffsdatensätzen gespeicherten Werte auflistet. Der Index umfasst beispielsweise für jeden der Werte der Zugriffsparameter jeweils einen Zeiger bzw. Verweise, etwa in Form der IDs der Zugriffsdatensätze, der den Zugriffsdatensatz angibt, in welchem der jeweilige Wert protokolliert ist. Nach Ausführungsformen kann dem Index ferner beispielsweise auch entnommen werden, wann die protokollierten Werte erfasst wurden. Beispielsweise ist diesen jeweils eine entsprechende Zeitangabe zugeordnet.

Dass sich die gespeicherte Information beispielsweise durch Tuple der Form (ID, K, V) eindeutig identifiziert werden, bedeutet, dass die der Anomalieanalyse zugrundeliegende Datenmenge, d.h. die Daten der in einer entsprechenden Datenbank protokollierten Zugriffsdatendatensätze, drei Teilmengen umfassen: die Menge der umfassten IDs der Zugriffsdatensätze $\mathcal{J}$, die Menge der umfassten Zugriffsparameter $\mathcal{K}$ und die Menge der umfassten Werte $\mathcal{V}$. Mit anderen Worten umfassen die Daten D der Datenbank beispielsweise eine Kombination dieser drei Teilmengen, d.h. $D \subset \mathcal{J} \times \mathcal{K} \times \mathcal{V}$. Eine Menge von Werten, welche $k \in \mathcal{K}$ entsprechen, ist gegeben durch $V_k = \{v \in \mathcal{V} | \exists i \in I: (i,k,v) \in D\}$. Eine Abbildung auf die IDs ist $I: \mathcal{K} \to \bigcup_{k \in \mathcal{K}} \text{Map}(V_k, 2^{\mathcal{J}})$, $k \to (I_k: v \to \{i \in \mathcal{J} | (i,k,v) \in D\})$.

Nach Ausführungsformen ist der Unterschied in der Wahrscheinlichkeit des Auftretens des ersten Werts $x_0$ des ersten Zugriffsparameters X des Wertepaars und des zweiten Werts $y_0$ des zweiten Zugriffsparameters Y des Wertepaars innerhalb der Zugriffsdatensätze eines der vordefinierten Zeitintervalle $\Delta t_i$ definiert als ein redundanzfreier Unterschied der Form:

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\|p_{Z|X=x_0 \wedge Y=y_0} - p_{Z|X=x_0}\|_1 = \frac{1}{2} \cdot \sum_Z \sum_{z \in V(z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \sum_Z \sum_{z \in V(z)} |p_{Z|X=x_0 \wedge Y=y_0}(z) - p_{Z|Y=y_0}(z)|.$$

Eine Wahrscheinlichkeit eines Auftretens eines bestimmten dritten Werts z eines weiteren dritten Zugriffsparameters Z aus der Menge der dritten Zugriffsparameter, über welche summiert wird, in Kombination mit dem ersten Wert $x_0$ des ersten Zugriffsparameters X sowie dem zweiten Wert $y_0$ des zweiten Zugriffsparameters Y ist definiert als

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

$I_X^{\triangle t_i}(x_0)$ ist die Menge der Zugriffsdatensätze des entsprechenden vordefinierten Zeitintervalls $\Delta t_i$, welche den ersten Wert $x_0$ für den ersten Zugriffsparameter X umfassen. $I_Y^{\triangle t_i}(y_0)$ ist die Menge der Zugriffsdatensätze des entsprechenden vordefinierten Zeitintervalls $\Delta t_i$ ist, welche den zweiten Wert $y_0$ für den zweiten Zugriffsparameter Y umfassen. $I_Z(z)$ ist die Menge der Zugriffsdatensätze der ein oder mehreren Datenbanken, welche den dritten Wert z für den weiteren dritten Zugriffsparameter Z umfassen. Die Schnittmenge $I_Z(z) \cap I_X^{\triangle t_i}(x_0) \cap I_Y^{\triangle t_i}(y_0)$ ist somit die Menge aller Zugriffsdatensätze des vordefinierten Zeitintervalls $\triangle t_i$, welche sowohl den bestimmten dritten Wert z des weiteren dritten Zugriffsparameters Z, als auch den ersten Wert $x_0$ des ersten Zugriffsparameters X und den zweiten Wert $y_0$ des zweiten Zugriffsparameters Y umfassen.

Im Falle des redundanzfreien Unterschieds wird die Wahrscheinlichkeit eines Auftretens der Kombination der Werte $x_0$ und z bzw. $y_0$ und z von der Wahrscheinlichkeit eines Auftretens der Kombination der Werte $x_0$, $y_0$ und z abgezogen.

Ausführungsformen können den Vorteil haben, dass ein effektiver und effizienter Ansatz zum Bestimmen von Anomalien in beliebigen Datensätzen bereitgestellt wird.

Nach Ausführungsformen wird auf das Detektieren des Angriffs hin ein Warnhinweis ausgegeben. Der Warnhinweis kann beispielsweise an dem Computersystem ausgegeben werden, welches die in den Zugriffsdatensätzen protokollierten Werte überwacht, an dem Computersystem, auf welchen der detektierte Angriff erfolgt, d.h. dem zu schützenden Computersystem, und/oder an mehreren oder allen Einzelcomputersystemen eines verteilten Computersystems, bei welchem es sich beispielsweise um das zu schützende Computersystem handelt. Beispielsweise wird der Warnhinweis von dem Computersystem erstellt, welches die Überwachung der Zugriffsdatensätze ausführt, und zum Ausgeben an ein oder mehrere weitere Computersysteme gesendet, bei welchem es sich beispielsweise um ein oder mehrere zu schützende Computersysteme handelt. Die Ausgabe kann beispielsweise visuell oder akustisch über eine Ausgabevorrichtung einer Benutzerschnittstelle des ausgebenden Computersystems erfolgen. Beispielsweise wird das Warnsignal visuell, etwa auf einem Display, oder akustisch, etwa über einen Lautsprecher, ausgegeben. Ausführungsformen können den Vorteil haben, dass ein oder mehrere Nutzer über den Angriff informiert werden. Vielmehr können die Nutzer dadurch in die Lage versetzt werden, Maßnahmen zu ergreifen, um den Angriff abzuwehren und/oder abzuschwächen.

Nach Ausführungsformen umfassen die Zugriffsdaten ein oder mehrere der folgenden Daten: Log-Daten zu Zugriffen auf das zu schützende Computersystem, Kernel-Daten zu Zugriffen auf das zu schützende Computersystem, Daten aus Paketen, welche an das zu schützende Computersystem oder von dem zu schützenden Computersystem gesendet werden.

Ausführungsformen können den Vorteil haben, dass es sich bei den entsprechenden Daten um Daten handelt, welche mit Zugriffen auf ein Computersystem in Verbindung stehen und anhand derer Merkmale und Eigenschaften entsprechender Zugriffe auf ein Computersystem bestimmt werden können. Somit können es entsprechende Zugriffsdaten ermöglichen Angriffe auf das zu schützende Computersystem zu detektieren.

Log-Daten zu Zugriffen auf das zu schützende Computersystem sind Log-Daten, welche im Kontext eines Zugriffs auf das zu schützende Computersystem protokolliert werden. Log-Daten oder auch Protokolldaten bezeichnen automatisch protokollierte Daten aller oder bestimmter Betriebsparameter eines Computersystems, wie etwa Zustandsparameter des Computersystems oder Aktionen von Prozessen auf einem Computersystem. So werden beispielsweise alle Aktionen protokolliert, welche für eine spätere Analyse erforderlich sind oder sein könnten. Beispielsweise umfassen die entsprechenden Log-Daten neben der protokollierten Aktion einen Zeitstempel mit Datum und Uhrzeit. Die Zeitstempel dienen beispielsweise als Zeitangabe der Erfassung der von den protokollierten Log-Daten umfassten Werte für die Betriebsparameter des Computersystems. Werden im Zuge eines Zugriffs auf ein zu schützendes Computersystem Aktionen auf dem Computersystem ausgeführt und/oder dessen Zustand geändert, finden sich diese Maßnahmen in den protokollierten Log-Daten wieder.

Kernel-Daten zu Zugriffen auf das zu schützende Computersystem sind Kernel-Daten, welche im Kontext eines Zugriffs auf das zu schützende Computersystem protokolliert werden. Bei Kernel-Daten handelt es sich automatisch protokollierte Daten aller oder bestimmter Betriebsparameter eines Kernels eines Computersystems, wie etwa Zustandsparameter des Kernels oder Aktionen von Prozessen, in welche der Kernel involviert ist. Kernel-Daten beziehen sich somit den Kernel als einen zentralen Bestandteil eines Betriebssystems. Der Kernel fungiert als Kanal zwischen der Software und der Hardware deines Computers. Ein Kernel, auch als Betriebssystemkern oder Systemkern bezeichnet, ist ein zentraler Bestandteil eines Betriebssystems, in welchem die Prozess- und Datenorganisation festgelegt wird, auf der alle weiteren Softwarebestandteile des Betriebssystems aufbauen. Er bildet die unterste Softwareschicht des Systems und hat direkten Zugriff auf die Hardware. Weitere Softwarekomponenten eines Betriebssystems liegen in der Regel in einer übergeordneten Schicht. Werden im Zuge eines Zugriffs auf ein zu schützendes Computersystem Aktionen unter Verwendung des Kernels ausgeführt und/oder dessen Zustand geändert, finden sich diese Maßnahmen in den protokollierten Kernel-Daten wieder.

Beispielsweise im Zuge eines externen Zugriffs auf ein zu schützendes Computersystem werden im Allgemeinen Datenpakete an das entsprechende zu schützende Computersystem gesendet und/oder Datenpakete von dem zu schützenden Computersystem gesendet. Daten der entsprechenden im Kontext eines Zugriffs auf das zu schützende Computersystem gesendeten Datenpakete definieren beispielsweise Eigenschaften und Charakteristika eines Zugriffs auf das entsprechende Computersystem. Somit kann anhand der Daten der entsprechenden Datenpakete beispielsweise bestimmt werden, ob es sich bei einem Zugriff auf das Computersystem um einen Angriff handelt. Bei den entsprechenden Datenpaketen kann es sich beispielsweise um an das zu schützende Computersystem gesendete und/oder um von dem zu schützenden Computersystem gesendete Datenpakete handeln.

Die Werte der Zugriffsparameter umfassen beispielsweise numerische Angaben. Die Werte der Zugriffsparameter umfassen beispielsweise alphanumerische Angaben handeln. Die Werte der Zugriffsparameter umfassen beispielsweise alphabetische Angaben.

Im Zuge der Anomalieanalyse und/oder des Überwachens von Zugriffsdaten können beispielsweise diskrete Werte der Zugriffsparameter verwendet werden, wie sie in den Zugriffsdatensätzen für die betrachteten Zugriffsparameter protokolliert sind. Im Zuge der Anomalieanalyse und/oder des Überwachens von Zugriffsdaten können beispielsweise Werteintervalle, in welche die Werte der Zugriffsparameter fallen, verwendet werden. Beispielsweise wird ein in den Zugriffsdatensätzen für einen betrachteten Zugriffsparameter protokollierter Wert einem Werteintervall zugeordnet und das entsprechende Werteintervall wird der Anomalieanalyse und/oder dem Überwachen der Zugriffsdaten zugrunde gelegt. Nach Ausführungsformen kann es sich bei Wahrscheinlichkeiten für ein Auftreten von Werten von Zugriffsparametern in Zugriffsdatensätzen beispielsweise um Wahrscheinlichkeiten für ein Auftreten von diskreten Werten handeln. Zur Bestimmung der Wahrscheinlichkeiten werden beispielsweise diejenigen Zugriffsdatensätze in einem vordefinierten Zeitintervalle $\Delta t_i$ berücksichtigt, welche den entsprechenden diskreten Wert für einen bestimmten Zugriffsparameter umfassen. Nach Ausführungsformen kann es sich bei Wahrscheinlichkeiten für ein Auftreten von Werten von Zugriffsparametern in Zugriffsdatensätzen beispielsweise um Wahrscheinlichkeiten für ein Auftreten von Werten handeln, welche von einem bestimmten Werteintervall umfasst sind. Zur Bestimmung der Wahrscheinlichkeiten werden beispielsweise diejenigen Zugriffsdatensätze in einem vordefinierten Zeitintervalle $\Delta t_i$ berücksichtigt, welche für einen bestimmten Zugriffsparameterr jeweils einen Wert umfassen, der von dem entsprechenden Werteintervall umfasst sind.

Nach Ausführungsformen werden auszuführende Gegenmaßnahmen zur Vermeidung des Angriffs festgelegt. Eine Zuordnung der auszuführenden Gegenmaßnahmen zu dem Angriff wird gespeichert. Auf das Detektieren des Angriffs hin, werden automatisch die dem Angriff zugeordneten Gegenmaßnahmen ausgeführt.

Ausführungsformen können den Vorteil haben, dass automatisch auszuführende Gegenmaßnahmen hinterlegt werden können. Somit kann ein automatisiertes Verhindern und/oder Abwehren von Angriffen implementiert werden. Beispielsweise können Datenströme blockiert oder gefiltert werden. Beispielsweise kann ein Ausführen von Anweisungen blockiert werden.

Nach Ausführungsformen umfassen die dem Angriff zugeordneten Gegenmaßnahmen ein oder mehrere der folgenden Gegenmaßnahmen:

- ein Unterbrechen einer Verbindung, über welche der Angriff erfolgt;
- ein Blockieren von Anweisungen, welche im Zug des Angriffs an das zu schützende Computersystem gesendet werden;
- ein Verwerfen von Datenpakten, welche die erfassten Werten für die identifizierten Zugriffsparameter der Zugriffsdaten von Zugriffen auf das zu schützende Computersystem innerhalb eines vordefinierten dritten Zeitintervalls umfassen, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet;
- ein Verändern der Zugriffsdaten von Zugriffen auf das zu schützende Computersystem innerhalb des vordefinierten dritten Zeitintervalls, wobei das Verändern der Zugriffdaten ein Verändern der erfassten Werten für die identifizierten Zugriffsparameter der Zugriffsdaten von Zugriffen auf das zu schützende Computersystem umfasst, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Ausführungsformen können den Vorteil haben, dass detektierte Angriffe auf das zu schützende Computersystem effektiv abgewehrt und/oder deren negativen Auswirkungen auf das Computersystem abgeschwächt werden können. Beispielsweise wird eine Verbindung unterbrochen, über welche der Angriff erfolgt. Wird ein Angriff detektiert, kann bestimmt werden, über welche Verbindung der detektierte Angriff erfolgt. Beispielsweise kann bestimmt werden, über welche Verbindung Zugriffsdaten gesendet werden, anhand derer der Angriff detektiert wird. Beispielsweise kann bestimmt werden, über welche Verbindung Zugriffsdaten beeinflusst werden, z.B. in den Log-Daten und/oder Kernel-Daten protokollierte Aktionen und/oder Zustandsänderungen initiiert werden, anhand derer der Angriff detektiert wird. Eine so bestimmte Verbindung kann unterbrochen werden. Beispielsweise können sämtliche Verbindungen des zu schützenden Computersystems nach außen, d.h. aus dem zu schützenden Computersystem oder aus einer schützenden Umgebungen, etwa einem geschützten Netzwerk, hinaus unterbrochen werden. Der Angriff wird detektiert, falls die entsprechenden Zugriffdaten die erfassten Werten für die identifizierten Zugriffsparameter der Zugriffsdaten von Zugriffen auf das zu schützende Computersystem innerhalb eines vordefinierten dritten Zeitintervalls umfassen, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Beispielsweise wird ein Ausführen von Anweisungen blockiert, welche im Zug des Angriffs an das zu schützende Computersystem gesendet wurden. Beispielsweise werden Anweisungen blockiert, welche als Teil von Datenpakten an das Computersystem gesendet wurden, anhand derer der Angriff detektiert wird. Beispielsweise werden Anweisungen blockiert, welche von einem Sender empfangen werden, von welchem Datenpakten an das Computersystem gesendet wurden, anhand derer der Angriff detektiert wird. Beispielsweise werden Anweisungen blockiert, welche im Kontext von Aktionen und/oder Zustandsänderungen stehen, welche z.B. in den Log-Daten und/oder Kernel-Daten protokollierte wurden und anhand derer der Angriff detektiert wird. Der Angriff wird detektiert, falls die entsprechenden Zugriffdaten die erfassten Werten für die identifizierten Zugriffsparameter der Zugriffsdaten von Zugriffen auf das zu schützende Computersystem innerhalb eines vordefinierten dritten Zeitintervalls umfassen, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Beispielsweise werden Datenpakete verworfen anhand derer der Angriff detektiert wird. Somit kann ein Beitrag der entsprechenden Datenpakte zu dem Angriff effektiv verhindert werden. Der Angriff wird anhand von Datenpaketen detektiert, welche die erfassten Werten für die identifizierten Zugriffsparameter der Zugriffsdaten von Zugriffen auf das zu schützende Computersystem innerhalb eines vordefinierten dritten Zeitintervalls umfassen, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet;

Beispielsweise werden Datenpakete verändert anhand derer der Angriff detektiert wird. Somit kann ein Beitrag der entsprechenden Datenpakte zu dem Angriff verhindert werden. Beispielsweise werden Zugriffdaten von Zugriffen auf das zu schützende Computersystem innerhalb des vordefinierten dritten Zeitintervalls verändert, anhand derer der Angriff detektiert wird. Somit kann ein Beitrag der entsprechenden Zugriffdaten bzw. des durch die entsprechenden Zugriffdaten definierten Zugriffs zu dem Angriff verhindert werden. Das Verändern der Zugriffdaten umfasst beispielsweise ein Verändern der erfassten Werten für die identifizierten Zugriffsparameter der Zugriffsdaten von Zugriffen auf das zu schützende Computersystem, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Nach Ausführungsformen erfolgt die Speicherung der Zuordnung der auszuführenden Gegenmaßnahmen beispielsweis durch das die Anomalieanalyse ausführende Computersystem, d.h. einem Analysecomputersystem. Nach Ausführungsformen erfolgt die Speicherung der Zuordnung der auszuführenden Gegenmaßnahmen beispielsweis durch das zu schützende Computersystem. Ausführungsformen können den Vorteil haben, dass die auszuführenden Gegenmaßnahmen lokal hinterlegt werden und somit im Bedarfsfall lokal zur sofortigen Ausführung bereitstehen. Nach Ausführungsformen erfolgt die Speicherung der Zuordnung der auszuführenden Gegenmaßnahmen beispielsweise durch das die Zugriffsdaten protokollierende Computersystem, d.h. ein Protokolliercomputersystem. Nach Ausführungsformen erfolgt die Speicherung der Zuordnung der auszuführenden Gegenmaßnahmen beispielsweis durch das die Zugriffsdaten überwachende Computersystem, d.h. einem Überwachungscomputersystem.

Das Überwachungscomputersystem, welches die protokollierten Zugriffsdatensätze überwacht, sendet die auszuführenden Gegenmaßnahmen beispielsweise an diejenigen Computersysteme, welche die entsprechenden auszuführenden Gegenmaßnahmen ausführen sollen, etwa das zu schützende Computersystem und/oder ein zum Schutz des zu schützenden Computersystems konfiguriertes Computersystem. Ausführungsformen können insbesondere im Falle eines verteilten Computersystems mit einer Mehrzahl von Servern von Vorteil sein, da das Überwachungscomputersystem beispielsweise serverindividuelle Gegenmaßnahmen unter Verwendung der hinterlegten Gegenmaßnahmen bestimmen und die bestimmten serverindividuellen Gegenmaßnahmen ein oder mehreren der Server zum Ausführen zusenden kann. Beispielsweise umfassen die hinterlegten Gegenmaßnahmen Angaben dazu, welche Server welche Gegenmaßnahmen auszuführen hat bzw. geben Kriterien an, anhand derer bestimmt werden kann, welcher Server welche der Gegenmaßnahmen auszuführen hat. Bei Angriffen im Zuge von Datenübertragungen zwischen zwei oder mehr Servern können beispielsweise Gegenmaßnahmen für sendende und/oder für empfangende Server hinterlegt sein, wobei angegeben sein kann, welche der Gegenmaßnahmen von sendenden Servern und welche Gegenmaßnahmen von empfangenden Servern auszuführen sind.

Nach Ausführungsformen umfassen die auszuführenden Gegenmaßnahmen auszuführende Programminstruktionen. Nach Ausführungsformen umfassen die auszuführenden Gegenmaßnahmen durch ein Computersystem, etwa das zu schützende Computersystem und/oder ein zum Schutz des zu schützenden Computersystems konfiguriertes Computersystem, auszuführende Programminstruktionen. Im Falle eines verteilten Computersystems umfassen die auszuführenden Gegenmaßnahmen beispielsweise durch ein oder mehrere Computersysteme bzw. Server des verteilten Computersystems auszuführende Programminstruktionen. Ausführungsformen können den Vorteil haben, dass zum automatischen Ausführen der Gegenmaßnahmen beispielsweise die hinterlegten Programminstruktionen aufgerufen und ausgeführt werden. Diese Programminstruktionen können Programmroutinen zur automatisierten Abwehr und/oder Abschwächung von Angriffen bereitstellen.

Nach Ausführungsformen erfolgt das Detektieren des Angriffs auf ein Erfassen der Werte für eine vorbestimmte Mindestanzahl von Zugriffsparametern der identifizierten Zugriffsparameter der Zugriffsdaten von Zugriffen auf das zu schützende Computersystem innerhalb des vordefinierten dritten Zeitintervalls hin, für welche sich der dritte Unterschied in der dritten Wahrscheinlichkeit des Auftretens der entsprechenden Werte innerhalb der dritten Zugriffsdatensätzen mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Ausführungsformen können den Vorteil haben, dass eine frühere Detektion möglich ist. Beispielsweise wird ein Angriff bereits dann detektiert, falls nicht für alle identifizierten Zugriffsparameter Anomalien erfasst werden. Ferner ist das Verfahren dadurch beispielsweise weniger anfällig gegenüber Abweichungen im Zuge von Variationen der Angriffe. Beispielsweise kann ein Angriff erfolgen, ohne dass für alle identifizierten Zugriffsparameter Anomalien auftreten. Solche Abweichungen können durch eine Verwendung einer Mindestanzahl von Zugriffsparametern der identifizierten Zugriffsparameter ebenfalls abgedeckt werden.

Nach Ausführungsformen erfolgt das Detektieren des Angriffs auf das Erfassen der Werte für alle identifizierten Zugriffsparameter der Zugriffsdaten von Zugriffen auf das zu schützende Computersystem innerhalb des vordefinierten dritten Zeitintervalls hin, für welche sich der dritte Unterschied in der dritten Wahrscheinlichkeit des Auftretens der entsprechenden Werte innerhalb der dritten Zugriffsdatensätzen mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Ausführungsformen können den Vorteil haben, dass die Gefahr eines False Positive beim Detektieren von Angriffen verringert werden kann. Dadurch das ein Auftreten von Anomalien für alle identifizierten Zugriffsparameter notwendig für ein positives Detektieren eines Angriffs ist, erfolgt eine entsprechende Detektion nur unter diesen relativ strengen Bedingungen.

Nach Ausführungsformen handelt es sich bei dem vordefinierten Größenwert um einen positiven Größenwert. Dies bedeutet, dass der erste Unterschied bzw. der dritte Unterschied größer sind als der zweite Unterschied. Mit anderen Worten, dass es sich bei der Anomalie um eine relative Abnahme der Korrelation zwischen den Werten der Zugriffsparameter gegenüber einer Referenzkorrelation bzw. dem zweiten Unterschied handelt.

Nach Ausführungsformen handelt es sich bei dem vordefinierten Größenwert um einen negativen Größenwert. Dies bedeutet, dass der erste Unterschied bzw. der dritte Unterschied kleiner sind als der zweite Unterschied. Mit anderen Worten, dass es sich bei der Anomalie um eine relative Zunahme der Korrelation zwischen den Werten der Zugriffsparameter gegenüber der Referenzkorrelation bzw. dem zweiten Unterschied handelt.

Nach Ausführungsformen handelt es sich bei dem vordefinierten Größenwert um den Betrag des Unterschieds zwischen den beiden entsprechenden Unterschieden in den Wahrscheinlichkeiten des Auftretens der entsprechenden Werte handelt. Durch Verwendung des Betrags lassen Anomalien sowohl in Form einer Zunahme, als auch Abnahmen der Korrelation berücksichtigen.

Nach Ausführungsformen handelt es sich bei dem vordefinierten Größenwert um einen prozentualen Größenwert. Nach Ausführungsformen handelt es sich bei dem vordefinierten Größenwert um einen absoluten Größenwert, d.h. eine Differenz.

Nach Ausführungsformen umfasst das Speichern der Zugriffsdatensätze ein Erstellen und Speichern eines normalisierten Index der von den Zugriffsdatensätzen umfassten Werte für die Zugriffsparameter des Computersystems. Die Anomalieanalyse wird unter Verwendung des normalisierten Indexes ausgeführt.

Nach Ausführungsformen umfasst das Speichern der Zugriffsdaten ein Normalisieren der Zugriffsdaten in Form des normalisierten Indexes. Nach Ausführungsformen erfüllt das Normalisieren die sechste Normalform erfüllt. Ausführungsformen können den Vorteil haben, dass Redundanzen vermieden werden können. Ausführungsformen können den Vorteil haben, dass eine zeitliche Einordnung der Zugriffsdaten berücksichtigt wird.

Nach Ausführungsformen können die Zugriffsdaten in Form von Relationen oder äquivalenten Strukturen gespeichert sein. Unter einer Relation wird hier im Sinn der relationalen Datenbanktheorie eine Menge von Tupel verstanden. Ein Tupel ist eine Menge von Attributwerten. Ein Attribut bezeichnet einen Datentyp bzw. eine ein oder mehreren Daten zugeordnete Eigenschaft. Dabei bestimmt die Anzahl der Attribute den Grad, die Anzahl der Tupel die Kardinalität einer Relation.

Unter einer Normalisierung, insbesondere unter einer Normalisierung eines relationalen Datenmodells, wird eine Aufteilung von Attributen in eine Mehrzahl von Relationen gemäß einer Normalisierungsregel verstanden, sodass Redundanzen reduziert bzw. minimiert werden. Ein relationales Datenmodell lässt sich beispielsweise in tabellenartigen Datenstrukturen implementieren, in denen die Relationen in Form von Tabellen, die Attribute in Form von Tabellenspalten und die Tupel in Form von Tabellenzeilen realisiert sind.

Datenredundanzen haben die Gefahr, dass es bei Änderungen von Daten, welche mehrfach umfasst sind, zu Inkonsistenzen kommen kann und Anomalien auftreten. Ferner steigt durch Redundanzen unnötiger Weise der Speicherplatzbedarf. Durch eine Normalisierung können solche Redundanzen verringert bzw. minimiert werden. Ein relationales Datenmodell kann beispielsweise in eine Normalform gebracht werden, indem die Relationen des Datenschemas fortschreitend anhand der für die entsprechende Normalform geltenden funktionalen Abhängigkeiten in einfachere Relationen zerlegt.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF).

Die Normalisierungskriterien nehmen dabei von Normalform zu Normalform zu und umfassen jeweils die Normalisierungskriterien der vorhergehenden Normalformen, d.h. $1NF \subseteq 2NF \subseteq 3NF \subseteq BCNF \subseteq 4NF \subseteq 5NF \subseteq 6NF$.

Eine Relation ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attribute, d.h. relationenwertigen Attributwertebereichen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst.

Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Nach Ausführungsformen handelt es sich bei einer oder mehreren der Datenbanken um eine Multi-Modell Datenbank mit einem Multi-Modell-Datenbankmanagementsystem, welches zum Speichern der Zugriffsdaten eine Mehrzahl von Datenmodellen verwendet. Beispielsweise werden die Zugriffsdaten in einem ersten dokumentenorientierten Datenmodell gespeichert. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Somit kann jederzeit auf die ursprünglichen Datenbestände zurückgreifen und diese in bei der weiteren Verarbeitung berücksichtigen. Basierend auf diesem Datenpool an Rohdaten, welchen das dokumentenbasierte Datenmodell bereitstellt, wird die Normalisierung der Daten ausgeführt und ein Index erzeugt. Bei diesem Index handelt es sich beispielsweise um eine inhaltsbasierte mehrstufige Indexstruktur. Dieser Index stellt ein zweites Datenmodell dar, welches beispielsweise die sechste Normalform aufweist. So können alle Felder und Feldinhalte redundanzfrei von dem ersten Datenmodell in das normalisierte zweite Datenmodell übertragen werden, welches beispielsweise die Form eines mehrdimensionalen Schlüssel/Wert-Speichers (Key/Value-Store) bzw. einer mehrdimensionalen Key-Value-Datenbanken aufweist.

Beispielsweise werden zusätzlich Transaktionszeit und Gültigkeitszeit der Datensätze bitemporal gespeichert. Die Transaktionszeit gibt den Zeitpunkt an, zu dem eine Änderung eines Datenobjekts in der Datenbank erfolgt. Die Gültigkeitszeit gibt einen Zeitpunkt oder Zeitintervall an, in dem ein Datenobjekt im modellierten Abbild der realen Welt den beschriebenen Zustand aufweist. Sind sowohl Gültigkeits- als auch Transaktionszeit relevant, spricht man von bitemporal. Zu jedem Datensatz wird mithin nicht nur der Zustand des Datensatzes bei der letzten Transaktion bzw. Änderung ersichtlich, sondern auch dessen Historie. In diesem Fall spricht man von bitemporaler Datenbank, bei welcher sowohl Gültigkeits- als auch Transaktionszeit der Datensätze berücksichtigt werden.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

Ausführungsformen können den Vorteil haben, dass die Zugriffsdaten in beiden Datenmodellen abgespeichert und für Analysen zur Verfügung gestellt werden können.

Nach Ausführungsformen wird das Verfahren von ein oder mehreren Netzwerkkomponenten eines Netzwerks ausgeführt. Beispielsweise handelt es sich bei ein oder mehreren zum Schutz des zu schützenden Computersystems konfigurierten Computersystemen um die entsprechenden Netzwerkkomponenten oder die entsprechenden Computersysteme umfassen die Netzwerkkomponenten. Beispielsweise umfasst das entsprechende Netzwerk das zu schützende Computersystem. Beispielsweise schützen die ein oder mehreren Netzwerkkomponenten das Netzwerk und damit das zu schützenden Computersystem vor Angriffen.

Nach Ausführungsformen wird das Verfahren von ein oder mehreren zusätzlichen Computersystemen ausgeführt. Diese ein oder mehreren zusätzlichen Computersysteme sind beispielsweise zum Schutz des zu schützenden Computersystems konfiguriert. Beispielsweise werden unterschiedliche Schritte des Verfahrens von unterschiedlichen zusätzlichen Computersystemen ausgeführt. Beispielsweise umfassen die zusätzlichen Computersysteme ein oder mehrere Analysecomputersysteme, ein oder mehrere Protokolliercomputersysteme und/oder ein oder mehrere Überwachungscomputersysteme. Beispielsweise sind die ein oder mehreren zusätzlichen Computersysteme dazu konfiguriert ein oder mehrere Schritte des verfahren zu parallelisieren, sodass ein entsprechender Schritt parallel auf mehreren der zusätzlichen Computersysteme ausgeführt werden. Beispielsweise wird die Anomalieanalyse parallelisiert, etwa indem unterschiedliche Zugriffsdatensätze von unterschiedlichen Analysecomputersystemen analysiert werden. Beispielsweise wird das Protokollieren parallelisiert, etwa indem unterschiedliche Zugriffsdatensätze von unterschiedlichen Protokolliercomputersystemen protokolliert werden. Beispielsweise wird das Überwachen parallelisiert, etwa indem unterschiedliche Zugriffsdatensätze von unterschiedlichen Überwachungscomputersystemen überwacht werden. Nach Ausführungsformen handelt es sich bei den ein oder mehreren Datenbanken um Datenbank, welche von den ein oder mehreren zusätzlichen Computersystemen zur Verfügung gestellt werden.

Nach Ausführungsformen wird das Verfahren von dem zu schützenden Computersystem selbst ausgeführt. Ausführungsformen können den Vorteil haben, dass der Schutz durch das zu schützende Computersystem selbst sichergestellt werden kann.

Nach Ausführungsformen protokolliert das zu schützende Computersystem selbst die Zugriffsdaten. Nach Ausführungsformen führt das zu schützende Computersystem selbst die Anomalieanalyse durch. Nach Ausführungsformen überwacht das zu schützende Computersystem selbst die Zugriffsdaten. Nach Ausführungsformen handelt es sich bei den ein oder mehreren Datenbanken um Datenbank des das zu schützende Computersystems. Ausführungsformen können den Vorteil haben, dass das Computersystem die Zugriffsdaten selbst protokolliert, auf ein Auftreten von Anomalien analysiert und/oder unter Verwendung der Ergebnisse der Anomalieanalyse eine Zugriffsdatenüberwachung ausführt.

Nach Ausführungsformen führt ein Analysecomputersystem, d.h. ein weiteres Computersystem, die Anomalieanalyse durch. Dies kann beispielsweise der Fall sein, falls es sich bei dem zu schützenden Computersystem um einen Server eines verteilten Computersystems handelt, welches eine Mehrzahl von Servern umfasst. Beispielsweise führt einer der Server als Analysecomputersystem die Zugriffsdatenanalyse für ein, mehrere und/oder alle Einzelcomputersysteme bzw. Server des verteilten Computersystems durch. Nach Ausführungsformen handelt es sich bei den ein oder mehreren Datenbanken um Datenbanken des zu schützenden Computersystems. Das Protokollieren der Zugriffsdaten in der Datenbank kann beispielsweise lokal auf den einzelnen Servern durch die jeweiligen Server erfolgen, wobei das Analysecomputersystem Zugriff auf die lokal gespeicherten Zugriffsdatensätze besitzt. Das Protokollieren der Zugriffsdaten kann in einer oder mehreren zentralen Datenbanken erfolgen, auf welche sowohl das oder die protokollierenden Computersysteme bzw. Server als auch das Analysecomputersystem Zugriff besitzen. Nach Ausführungsformen handelt es sich bei den ein oder mehreren Datenbanken um Datenbanken des Analysecomputersystems.

Zum Ausführen der Anomalieanalyse benötigt das Analysecomputersystem Zugriff auf die zu analysierenden Zugriffsdatensätze. Dieser Zugriff kann beispielsweise einen Zugriff auf ein oder mehrere Datenbänke umfassen, in welchen die zu analysierenden Zugriffsdatensätze gespeichert sind. Beispielsweise sendet das zu schützende Computersystem die entsprechenden Zugriffsdatensätze zur Anomalieanalyse an das Analysecomputersystem.

Nach Ausführungsformen überwacht das zu schützende Computersystem selbst die protokollierten Zugriffsdaten. Hierzu empfängt das zu schützende Computersystem beispielsweise die im Zuge der Anomalieanalyse identifizierte Zugriffsparameter von dem Analysecomputersystem. Für diese von dem Analysecomputersystem identifizierten Zugriffsparameter werden dann beispielsweise von dem zu schützenden Computersystem die in den Zugriffsdatensätzen des zu schützenden Computersystems protokollierten Werte überwacht. Ausführungsformen können den Vorteil haben, dass die Überwachung lokal erfolgen kann. Dies kann beispielsweise ein zeitnahes lokales Detektieren des Angriffs ermöglichen. Gegebenenfalls können so auch zeitnahe lokale Gegenmaßnahmen eingeleitet werden, um den Angriff abzuwehren und/oder nachteilige Folgen des Angriffs zu verhindern oder abzuschwächen.

Die Überwachung der Zugriffsdaten kann ebenfalls durch das Analysecomputersystem oder ein weiteres Überwachungscomputersystem erfolgen. Hierzu benötigt das die Überwachung ausführende Computersystem Zugriff auf die zu überwachenden Zugriffsdaten. Dieser Zugriff kann beispielsweise einen Zugriff auf ein oder mehrere Datenbänke umfassen, in welchen die Zugriffsdatensätze gespeichert sind. Beispielsweise sendet das zu schützende Computersystem protokollierte Zugriffsdatensätze zur Überwachung an das Analysecomputersystem und/oder Überwachungscomputersystem. Beispielsweise werden die protokollierten Zugriffsdatensätze von dem Computersystem in einer Datenbank gespeichert, auf welche das Analysecomputersystem und/oder das Überwachungscomputersystem zur Überwachung Zugriff besitzt.

Ausführungsformen können den Vorteil haben, dass ein spezifisch hierfür konfiguriertes Analysecomputersystem zum Ausführen der Anomalieanalyse verwendet werden kann. Ausführungsformen können den Vorteil haben, dass ein spezifisch hierfür konfiguriertes Überwachungscomputersystem zum Ausführen der Überwachung der für die identifizierten Zugriffsparameter protokollierten Werte verwendet werden kann. In einem verteilten Computersystem, welches eine Mehrzahl von Einzelcomputersystemen, wie etwa Server umfasst, kann beispielsweise einer der Server als Analysecomputersystem eine Anomalieanalyse für das verteilte Computersystem ausführen. Dabei kann das Analysecomputersystem zur Zugriffsdatenanalyse Zugriffsdaten von mehreren oder allen Servern des Systems verwendet. Dies kann beispielsweise den Vorteil haben, dass eine Anomalieanalyse über eine Mehrzahl von Servern hinweg ermöglicht wird. Ferner können bei der Überwachung Anomalien über mehrere Server hinweg berücksichtigt und zum Detektieren eines Angriffs verwendet werden. In einem verteilten Computersystem, welches eine Mehrzahl von Einzelcomputersystemen, wie etwa Server umfasst, kann beispielsweise einer der Server als Überwachungscomputersystem eine Überwachung der protokollierten Zugriffsdaten des verteilten Computersystems ausführen. Dabei kann das Überwachungscomputersystem zur Zugriffsdatenanalyse Zugriffsdaten von mehreren oder allen Servern des Systems verwendet. Dies kann beispielsweise den Vorteil haben, dass eine Überwachung über eine Mehrzahl von Servern hinweg ermöglicht wird. Dabei können Anomalien über mehrere Server hinweg berücksichtigt und zum Detektieren eines Angriffs verwendet werden.

Nach Ausführungsformen werden für die Anomalieanalyse Zugriffsdatensätze ein und desselben zu schützenden Computersystems verwendet. Im Falle eines verteilten Computersystems, welches eine Mehrzahl von Einzelcomputersystemen bzw. Servern umfasst, wird die Anomalieanalyse beispielsweise jeweils Zugriffsdatensätze ein und desselben Einzelcomputersystems verwendet. Die identifizierten Zugriffsparameter werden beispielsweise nur zur Überwachung desjenigen Einzelcomputersystems verwendet, für welche die entsprechenden Zugriffsparameter identifiziert wurden. Beispielsweise werden die identifizierten Zugriffsparameter zur Überwachung aller Einzelcomputersystems des verteilten Computersystems verwendet.

Nach Ausführungsformen werden für die Anomalieanalyse die Zugriffsdatensätze einer Mehrzahl von zu schützenden Computersystemen gemeinsam ausgewertet bzw. die Zugriffsdatensätze einer Mehrzahl von Einzelcomputersystemen eines zu schützenden verteilten Computersystems. Dabei erfolgt die Anomalieanalyse also beispielsweise über Zugriffsdatensätze einer Mehrzahl von Einzelcomputersystemen, wie etwa Servern, hinweg. Beispielsweise werden die identifizierten Zugriffsparameter zur Überwachung aller Computersystems der Mehrzahl von Computersystemen, etwa aller Einzelcomputersysteme eines verteilten Computersystems, verwendet. Somit können beispielsweise Korrelationen zwischen den Zugriffsdatensätzen der mehreren Einzelcomputersysteme bei der Anomalieanalyse berücksichtigt und in Form der identifizierten Zugriffsparameter zum Detektieren eines Angriffs auf einen oder mehrere der Einzelcomputersysteme verwendet werden. Entsprechende Korrelationen können beispielsweise auf kausalen Zusammenhängen zwischen Ereignissen beruhen, welche auf verschiedenen Einzelcomputersysteme auftreten. Entsprechende Korrelationen können beispielsweise auf einem kausalen Zusammenhang von Ereignissen beruhen, welche auf verschiedenen Einzelcomputersystemen auftreten.

Nach Ausführungsformen handelt es sich bei dem zu schützenden Computersystem um ein verteiltes Computersystem, welches eine Mehrzahl von Servern umfasst. Auf ein oder mehreren der der Server der Mehrzahl von Servern werden jeweils Zugriffsdaten protokolliert. Beispielsweise werden auf jedem der Server der Mehrzahl von Servern werden jeweils Zugriffsdaten protokolliert.

Ausführungsformen können den Vorteil haben, dass ein Angriff auf ein verteiltes Computersystem detektiert werden kann. Die Überwachung der Zugriffsdaten kann beispielsweise lokal auf den einzelnen Servern oder zentral erfolgen.

Nach Ausführungsformen erfolgt das Ausführen der Anomalieanalyse und das Identifizieren derjenigen Zugriffsparameter der Zugriffsdaten, deren Werte von den bestimmten ein oder mehreren Anomalien umfasst sind, durch einen ersten Server der Mehrzahl von Servern. Die identifizierten Zugriffsparameter werden von dem ersten Server an die weiteren Server der Mehrzahl von Servern des verteilten Computersystems weitergeleitet. Die weiteren Server speichern jeweils die identifizierten Zugriffsparameter. Das Überwachen der für die identifizierten Zugriffsparameter in den Zugriffsdatensätzen protokollierten Werte erfolgt jeweils durch den die entsprechenden Werte protokollierenden Server der Mehrzahl von Servern.

In diesem Fall handelt es sich bei dem ersten Server beispielsweise um ein Analysecomputersystem. Ferner handelt es sich in diesem Fall bei den protokollierenden Servern der Mehrzahl von Servern beispielsweise um Protokollier- und Überwachungscomputersysteme. Ausführungsformen können den Vorteil haben, dass die Anomalieanalyse und das Identifizieren derjenigen Zugriffsparameter der Zugriffsdaten, deren Werte von den bestimmten ein oder mehreren Anomalien umfasst sind, zentral durch den ersten Server, die Überwachung der Zugriffsdatensätze und das Detektieren des Angriffs aber lokal auf den einzelnen Servern des verteilten Computersystems erfolgt.

Nach Ausführungsformen wird die Zuordnung der auszuführenden Gegenmaßnahmen zu dem Angriff jeweils in den einzelnen Servern der Mehrzahl von Servern gespeichert. Auf das Detektieren des Angriffs durch einen Server der Mehrzahl von Servern hin, werden automatisch die gespeicherten, dem Angriff zugeordneten Gegenmaßnahmen durch den entsprechenden Server der Mehrzahl von Servern ausgeführt.

Ausführungsformen können den Vorteil haben, dass die Gegenmaßnahmen auf das Detektieren eines Angriffs von den einzelnen Servern jeweils lokal initiiert werden.

Nach Ausführungsformen erfolgt das Ausführen der Anomalieanalyse, das Identifizieren derjenigen Zugriffsparameter der Zugriffsdaten, deren Werte von den bestimmten ein oder mehreren Anomalien umfasst sind, und das Überwachen der für die identifizierten Zugriffsparameter in den Zugriffsdatensätzen protokollierten Werte durch den ersten Server. Auf das Detektieren des Angriffs hin, werden durch den ersten Server ein oder mehrere Server der Mehrzahl von Servern bestimmt, auf welche der Angriff erfolgt.

Ausführungsformen können den Vorteil haben, dass sowohl die Anomalieanalyse, als auch die Überwachung der Zugriffsdatensätze unter Verwendung des Ergebnisses der Anomalieanalyse jeweils zentral durch den ersten Server erfolgt. In diesem Fall ist der erste Server beispielsweise als Analysecomputersystem und Überwachungscomputersystem konfiguriert.

Nach Ausführungsformen wird für die ein oder mehreren bestimmten Server durch den ersten Server jeweils ein Warnhinweis ausgegeben. Ausführungsformen können den Vorteil haben, dass Warnhinweise für die Server zentral von dem ersten Server, auf ein Detektieren eines lokalen Angriffs auf die entsprechenden Server hin, ausgegeben werden.

Nach Ausführungsformen wird die Zuordnung der auszuführenden Gegenmaßnahmen zu dem Angriff in dem ersten Server der Servergruppe gespeichert. Auf das Detektieren des Angriffs durch den ersten Server hin, werden automatisch ein oder mehrere Befehle an die ein oder mehrere bestimmten Server der Servergruppe gesendet, welche die durch die ein oder mehrere bestimmten Server auszuführenden Gegenmaßnahmen definieren, welche dem Angriff zugeordneten sind.

Ausführungsformen können den Vorteil haben, dass die Gegenmaßnahmen auf den einzelnen Servern zentral auf das Detektieren eines Angriffs hin von dem ersten Server initiiert werden.

Nach Ausführungsformen wird das Verfahren unter Verwendung eines Angriffserkennungssystems ausgeführt. Ausführungsformen können den Vorteil haben, dass eine effektive Angriffserkennung implementiert werden kann.

Ein solches Angriffserkennungssystem (engl.: "Intrusion Detection System"/IDS) bezeichnet ein System zur Erkennung von Angriffen, die gegen ein Computersystem und/oder Computersysteme eines Rechnernetzes gerichtet sind. Das IDS kann beispielsweise auf dem zu schützenden Computersystem implementiert sein. Das IDS kann beispielsweise in einem weiteren Computersystem, etwa zur Ergänzung einer Firewall, implementiert sein. Unter Verwendung des IDS kann so die Sicherheit eines Computersystems und/oder von Computersystemen eines Netzwerks erhöht werden. Detektierte Angriffe werden beispielsweise in Log-Dateien gespeichert. Wird ein Angriff detektiert, wird ferner beispielsweise ein Nutzer und/oder ein Administrator über den Angriff informiert.

Eine anomaliebasierte Detektion von Angriffen, wie im vorliegenden Fall, vergleicht beobachtete Ereignisse bzw. Zugriffsdaten, welche die entsprechenden Ereignisse widerspiegeln, mit dem was als normal erachtet wird, um Abweichungen zu ermitteln. Diese Detektionsmethode kann beispielsweise auch bei der Entdeckung bisher unbekannter Bedrohungen bzw. abweichender Angriffsvarianten wirksam sein.

Bei der Anomalieerkennung auf Basis statistischer Daten wird davon ausgegangen, dass das Computersystem im Angriffsfall signifikant von einem durch statistische Kennwerte festgelegten Normalverhalten abweicht.

Das IDS kann beispielsweise zu einer Systemüberwachung eines zu schützenden Computersystems konfiguriert sein. In diesem Fall werden Zugriffe auf Dateien und Applikationen sowie Systemzugänge überwacht. Detektierte Angriffe umfassen beispielsweise häufig fehlgeschlagene Anmeldeversuche, Zugriffsverletzungen und anormale Verhaltensmuster im Zuge auf Zugriffe auf das zu schützende Computersystem. Die Überwachung erfolgt beispielsweise durch Auswertung von Log-Daten des zu schützenden Systems, beispielsweise inklusive Kernel-Logs bzw. Kernel-Daten.

Das IDS kann beispielsweise zu einer Applikationsüberwachung von auf dem zu schützenden Computersystem ausgeführten Applikationen konfiguriert sein. Durch applikationsüberwachende Sensoren beispielsweise ist eine Überwachung spezifischer Applikationen möglich. Die Überwachung kann beispielsweise durch Auswertung von Log-Daten der entsprechenden Applikationen erfolgen.

Unter Verwendung von netzbasierte Sensoren können verteilte Computersysteme bzw. Computernetze effektiv geschützt werden. Entsprechende Sensoren eignen sich zur Erkennung von netzbasierten Angriffen, die sich gegen mehrere Computersysteme und/oder Einzelcomputersysteme eines verteilten Computersystems richten, wie etwa SYN flooding und/oder verschiedene Arten von Denial-of-Service Angriffen. Solche Angriffe könnten unter Berücksichtigung nur eines einzelnen der mehreren Angriffsziele für sich alleine genommen beispielsweise nicht als ein verteilter Angriff interpretiert werden, welcher sich gegen mehrere Computersysteme und/oder Einzelcomputersysteme eines verteilten Computersystems richtet.

Das IDS umfasst beispielsweise ein oder mehrere der folgenden Komponenten: ein oder mehrere Netzsensoren zur Überwachung eines Netzverkehrs an bestimmten Punkten eines das zu schützende Computersystem umfassenden Netzwerks, ein oder mehrere Hostsensoren zur Überwachung eines Betriebssystems, von Applikationen und/oder des eines hostspezifischen Netzverkehrs des zu schützenden Computersystems, ein oder mehrere Datenbankkomponenten, eine Managementstation und eine Auswertungsstation.

Netzbasierte Sensoren bzw. Netzsensoren sind dazu konfiguriert den Netzverkehr des zu schützenden Computersystems oder eines ganzen, das zu schützende Computersystem umfassenden Teilnetzes auf verdächtige Ereignisse zu überwachen. Zum Betrieb jedes Netzsensors wird beispielsweise ein separates Computersystem eingesetzt, so dass andere Applikationen nicht gestört werden können. Entsprechende Netzsensoren können beispielsweise in Kombination mit der zugehörigen Hardware/Software-Plattform als sogenanntes Appliance bereitgestellt werden.

Hostbasierte Sensoren bzw. Hostsensoren sind auf dem zu schützenden Computersystem implementierte Sensoren. Hostsensoren können insbesondere dazu eingesetzt werden, um Angriffe zu erkennen, welche auf Anwendungs- oder Betriebssystemebene durchgeführt werden. Beispiele für derartige Angriffe sind Rechteüberschreitungen von Nutzern, Login-Fehlversuche oder Trojaner. Beispielsweise sind die Hostsensoren ferner Überwachung des hostspezifischen Netzverkehrs konfiguriert.

In den ein oder mehreren Datenbanken bzw. Datenbankkomponenten des IDS werden beispielsweise Zuordnungen zum Erkennen von Angriffen gespeichert. Ferner werden beispielsweise auszuwertende Zugriffsdaten in Zugriffsdatensätzen in den entsprechenden Datenbanken gespeichert bzw. dem IDS zu Auswertung zur Verfügung gestellt. In den ein oder mehreren Datenbankkomponenten des IDS werden beispielsweise Informationen über detektierte Angriffe gespeichert.

Die Managementstation ist beispielsweise zum Konfigurieren und Kalibrieren des IDS ausgelegt. Dies umfasst beispielsweise ein oder mehrere der folgenden Funktionalitäten: Aufnehmen von IDS-Komponenten, wie etwa Sensoren, Datenbanken, Managementstationen in das IDS; Einstellen von Kommunikationsparameter der IDS-Komponenten untereinander, wie etwa IP-Adressen, Namensgebung, kryptographische Schlüssel, Lebenszeichen-Intervalle; Aufnehmen des zu schützenden Computersystems bzw. der zu überwachenden Objekte in das IDS, Erstellen und Anpassen von Überwachungsregeln und Gruppierung dieser zu "IDS-Policies"; Gruppieren von IDS-Sensoren, Zuweisen von "IDS-Policies" zu Sensoren oder Sensorgruppen.

Management- und Auswertungsstation eines IDS können beispielsweise in einer Komponente zusammengefasst oder in Form separater Komponenten implementiert sein.

Die Auswertungsstation verfügt beispielsweise über Funktionen zur Analyse protokollierter Zugriffsdaten und zum Reporting detektierter Angriffe.

Die Kommunikation der IDS-Komponenten untereinander erfolgt beispielsweise über proprietäre Protokolle und/oder über Standardprotokolle, wie etwa SSH oder SCP. Dabei erfolgt eine Kommunikation beispielsweise zwischen ein oder mehreren der folgenden Komponenten: Zwischen Managementstation und IDS-Sensoren zum Übertragen von Konfigurationsdaten, Kommandos und IDS-Policies, sowie zum Abfragen von Statusdaten; zwischen IDS-Sensoren und Managementstation zum Übertragen von Lebenszeichen; zwischen Managementstation und Datenbanken zum Übertragen von Konfigurations- und Statusdaten; zwischen IDS-Sensoren und Auswertungsstation zum Übertragen von Zugriffsdaten und ggf. Lebenszeichen; zwischen Auswertungsstation und Datenbank zum Übertragen von Zugriffsdaten; zwischen IDS-Sensoren und Datenbank zum Übertragen Zugriffsdaten; zwischen wischen Managementstation und Auswertungsstation zum Signalisieren von Konfigurationsalarmen, etwa bei einem Ausbleiben von Lebenszeichen.

Hinzu kommen ferner beispielsweise Kommunikationswege zum Initiieren von Intrusion-Response-Funktionen, wie etwa einer Alarmierung, d.h. einem Ausgeben eines Warnhinweises, und/oder einem Ausführen/Anweisen von Gegenmaßnahmen zur Abwehr eines detektierten Angriffs, zum Zugreifen auf die Management- und Auswertungsstation sowie ggf. eine Kommunikation zwischen verschiedenen Auswertungsstationen.

Nach Ausführungsformen handelt es sich bei dem Angriffserkennungssystem um eines der folgenden Systeme: ein hostbasiertes Angriffserkennungssystem, ein netzwerkbasiertes Angriffserkennungssystem, ein hybrides Angriffserkennungssystem.

Beispielsweise ist das IDS als ein hostbasiertes IDS (HIDS) implementiert. Ein solches HIDS ist beispielsweise auf dem zu schützenden Computersystem implementiert. Die auf Angriffe zu analysierende Daten werden dem HIDS beispielsweise in den Zugriffsdaten, etwa Log-Dateien, Kernel-Daten und anderen Systemdaten, wie etwa aus einer Registrierungsdatenbank, zur Verfügung gestellt. Zum Protokollieren dieser Daten umfasst das HIDS beispielsweise einen entsprechenden Sensor. Das HIDS schlägt beispielsweise Alarm, sobald es in den überwachten Daten einen vermeintlichen Angriff detektiert.

Zusätzlich kann das HIDS beispielsweise als ein Systemintegritätsverifizierer (engl.: "System Integrity Verifiers"/SIV) konfiguriert sein, welche unter Verwendung von Prüfsummen bestimmen, ob Veränderungen an dem zu überwachenden System vorgenommen wurden.

Beispielsweise ist das IDS als ein netzwerkbasiertes IDS (NIDS) implementiert. Ein solches NIDS ist beispielsweise dazu konfiguriert in einem Netzwerk, welches das zu schützende Computersystem umfasst, versendete Pakete aufzuzeichnen, zu analysieren und verdächtige Aktivitäten zu melden. Ferner kann ist NIDS dazu konfiguriert sein, aus dem überwachten Netzwerkverkehr Angriffsmuster bzw. die hier beschriebenen Anomalien als Hinweise auf einen Angriff zu erkennen. Zum Protokollieren dieser Pakte umfasst das NIDS beispielsweise einen entsprechenden Sensor. Wird von einem Netzwerk ein bestimmtes Protokoll verwendet, beispielsweise das Internetprotokoll, muss ein Angriff beispielsweise über dieses Protokoll erfolgen. Somit kann beispielsweise mit nur einem Sensor ein ganzes Netzsegment überwacht werden.

Beispielsweise ist das IDS als ein hybrides IDS implementiert. Ein solches hybrides IDS verbindet die beiden Prinzipien eine HIDS und eines NIDS. Im Vergleich zu einem HIDS oder einem NIDS für sich alleine genommen kann ein hybrides IDS den Vorteil haben, eine höhere Abdeckung bei der Erkennung von aufgetretenen Angriffen gewährleisten zu können. Beispielsweise umfasst ein hybrides IDS ein oder mehrere hostbasierte Sensoren, welche Daten wie ein HIDS erfassen, ein oder mehrere netzwerkbasierte Sensoren, welche Daten wie ein NIDS erfassen, sowie ein zentrales Managementsystem zum Auswerten der erfassten Daten.

Beispielsweise umfasst das Angriffserkennungssystem ein Angriffsabwehrsystem. Das Angriffsabwehrsystem ist beispielsweise dazu konfiguriert ein oder mehrere vordefinierte Gegenmaßnahmen zur Abwehr eines detektierten Angriffs einzuleiten. Ausführungsformen können den Vorteil haben, dass eine effektive Abwehr von Angriffen implementiert werden kann.

Bei einem solchen Angriffsabwehrsystem (engl.: "Intrusion Prevention System"/IPS) handelt es sich um ein IDS, welches über ein Erkennen und beispielsweise Protokollieren von Angriffen hinaus Funktionen bereitstellen, die eine Abwehr erkannter Angriff ermöglichen. Beispielsweise ist ein IPS dazu konfiguriert Angriffe automatisiert und aktiv abzuwehren.

Beispielsweise ist das IPS dazu konfiguriert auf ein Erkennen eines Angriffs hin Datenpakete zu verwerfen, eine Verbindung zu unterbrechen und/oder übertragene Daten zu ändern. Beispielsweise wird hierbei eine Anbindung an ein Firewallsystem verwendet, durch welches dann bestimmte durch das IPS vorgegebene Regeln und/oder Maßnahmen angewandt werden. Automatische Gegenmaßnahmen zur zeitnahe Reaktion auf detektierte Angriffe umfassen Beispiele ein oder mehrere der folgenden Maßnahmen: eine temporäre Regeländerung einer Firewall, um bestimmte Zugangsmöglichkeiten für Angreifer zeitweise zu sperren und Zeit für Sicherungsmaßnahmen zu gewinnen, ein Beenden von Kommunikationsverbindungen durch aktives Einbringen von Reset-Paketen in das Netz oder ein Sperren von Zugriffsrechten auf einem Rechner, wenn ein Angriffsversuch detektiert wird.

IDS und IPS sind Werkzeuge, die den Datenverkehr zu/von IT-Systemen oder Netzwerken aktiv überwachen. Diese sind dazu konfiguriert Ereignisse herauszufiltern, die auf Angriffe, etwa Missbrauchsversuche oder Sicherheitsverletzungen, hindeuten. Ereignisse sollen dabei zeitnah erkannt und gemeldet werden. Während ein IDS an sich Angriffe nur detektiert, kann ein IPS diese zudem auch abwehren bzw. verhindern.

Das IPS kann beispielsweise als ein hostbasiertes IPS (HIPS) auf dem Computersystem implementiert sein, in welches ein Eindringen verhindert werden soll. Das IPS kann beispielsweise als ein netzwerkbasiertes IPS (NIPS) implementiert sein, welches einen Netzwerkverkehr auf einem Netzwerk überwacht, um an das Netzwerk angeschlossene bzw. von dem Netzwerk umfasste zu schützende Computersysteme vor einem unautorisierten Eindringen zu schützen. Ein solches NIPS kann beispielsweise in einem Übertragungsweg (engl.: "inline") eingesetzt werden und dazu konfiguriert sein, kann im Alarmfall den Datenstrom auf dem entsprechenden Übertragungsweg zu unterbrechen und/oder verändern. Das NIPS verfügt beispielsweise über ein oder mehrere Module, welche aktiv von einem Firewallsystem verwendete Regeln beeinflussen. Somit kann indirekt unter Verwendung des Firewallsystems ein Datenstrom unterbrochen oder verändert werden. Das NIPS kann beispielsweise als ein inhaltsbasiertes IPS (engl.: "content based" IPS/CBIPS) implementiert sein. Ein CBIPS untersucht den Inhalt übertragener Daten auf potentielle Anzeichen auf einen Angriff. Das NIPS kann beispielsweise als ein protokollanalysebasiertes IPS (engl.: "protocol analysis" IPS) implementiert sein. Ein Protocol Analysis IPS analysiert Übertragungen auf Protokollebene und sucht dabei nach eventuellen Angriffsmustern.

Ausführungsformen umfassen ferner ein Computersystem mit einem Prozessor und einem Speicher. In dem Speicher sind Programminstruktionen gespeichert. Ein Ausführen der Programminstruktionen durch den Prozessor veranlasst den Prozessor dazu das Computersystem so zu steuern, dass das Computersystem ein Verfahren zum Detektieren eines Angriffs auf ein zu schützendes Computersystem unter Verwendung von protokollierten Zugriffsdaten des zu schützenden Computersystems ausführt.

Das Verfahren umfasst:

- Protokollieren der Zugriffsdaten, wobei das Protokollieren der Zugriffsdaten ein Speichern von Zugriffsdatensätzen in ein oder mehreren Datenbanken umfasst, wobei die Zugriffsdatensätze im Zuge von Zugriffen auf das zu schützende Computersystem erfasste Zugriffsdaten mit Werten zu einer Mehrzahl von Zugriffsparametern umfassen, wobei die Zugriffsdatensätze ferner jeweils eine Zeitangabe umfassen, welche angibt, wann die protokollierten Werte erfasst wurden,

- auf ein Auftreten eines Angriffs auf das zu schützende Computersystem hin, Ausführen einer Anomalieanalyse, wobei die Anomalieanalyse ein Bestimmen von ein oder mehreren Anomalien innerhalb erster Zugriffsdatensätze der protokollierten Zugriffsdatensätze umfasst, deren protokollierte Zugriffsdaten innerhalb eines den Angriff zumindest teilweise umfassenden vordefinierten ersten Zeitintervalls erfasst wurden, wobei die Anomalien jeweils eine Kombination von Werten von Zugriffsparametern sind, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdatensätze unterscheidet, deren Werte in einem vordefinierten zweiten Zeitintervall erfasst wurden,

- Identifizieren derjenigen Zugriffsparameter der Zugriffsdaten von Zugriffen auf das zu schützende Computersystem, deren Werte von den bestimmten ein oder mehreren Anomalien umfasst sind,

- Überwachen der für die identifizierten Zugriffsparameter der Zugriffsdaten in den Zugriffsdatensätzen protokollierten Werte, wobei das Überwachen ein Detektieren eines erneuten Angriffs umfasst auf ein Erfassen von Werten für die identifizierten Zugriffsparameter der Zugriffsdaten von Zugriffen auf das zu schützende Computersystem innerhalb eines vordefinierten dritten Zeitintervalls, für welche sich ein dritter Unterschied in einer dritten Wahrscheinlichkeit eines Auftretens der entsprechenden Werte innerhalb von dritten Zugriffsdatensätzen der protokollierten Zugriffsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

Nach Ausführungsformen ist das Computersystem dazu konfiguriert jede der zuvor beschriebenen Ausführungsformen des Verfahrens zum Detektieren eines Angriffs unter Verwendung protokollierter Zugriffsdaten auszuführen.

Nach Ausführungsformen handelt es sich bei den Zugriffsdaten um Zugriffsdaten des Computersystems selbst, d.h. es handelt sich bei dem Computersystem um das zu schützende Computersystem. Nach Ausführungsformen handelt es sich bei den Zugriffsdaten um Zugriffsdaten eines weiteren Computersystems, d.h. zu schützenden Computersystems, welche das Computersystem empfängt bzw. auf welche das Computersystem Zugriff besitzt und welche das Computersystem analysiert. In diesem Fall handelt es sich bei dem Computersystem um ein Computersystem, welches zum Schützend des weiteren, d.h. zu schützenden, Computersystems konfiguriert ist.

Beispielsweise erfolgt der Angriff auf das Computersystem selbst, d.h. es handelt sich bei dem Computersystem um das zu schützende Computersystem. Beispielsweise erfolgt der Angriff auf ein weiteres Computersystem, welches mit dem Computersystem verbunden ist. In diesem Fall handelt es sich bei dem Computersystem um ein Computersystem, welches zum Schützend des weiteren, d.h. zu schützenden, Computersystems konfiguriert ist. Im Falle eines Detektierens des Angriffs auf das weitere Computersystem wird beispielsweise ein Warnhinweis an das weitere Computersystem gesendet.

Nach Ausführungsformen handelt es sich bei den Kombinationen von Werten jeweils um Wertepaare.

Nach Ausführungsformen ist der Unterschied in der Wahrscheinlichkeit eines Auftretens eines ersten Werts $x_0$

eines ersten Zugriffsparameters X eines Wertepaars und eines zweiten Werts $y_0$ eines zweiten Zugriffsparameters Y des Wertepaars innerhalb der Zugriffsdatensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \Sigma_Z \Sigma_{z \in V(Z)} |p_{Z|X=x_0}(z) - p_{Z|Y=y_0}(z)|.$$

Die Summation läuft über alle weiteren, d.h. über dritte Zugriffsparameter Z und deren Werte, d.h. über alle dritten Werte z, welche für die entsprechenden weiteren Zugriffsparameter Z innerhalb der Zugriffsdatensätze der ein oder mehreren Datenbanken protokolliert sind. V(Z) ist die Menge aller protokollierter dritter Werte z der dritten Zugriffsparameter Z. Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem ersten Wert $x_0$ des ersten Zugriffsparameters X ist definiert als

$$p_{Z|X=x_0}(z) = \frac{\left|I_Z(z) \cap I_X^{\triangle t_i}(x_0)\right|}{\left|I_X^{\triangle t_i}(x_0)\right|}.$$

$I_X^{\triangle t_i}(x_0)$ ist die Menge der Zugriffsdatensätze des entsprechenden vordefinierten Zeitintervalls $\Delta t_j$, welche den ersten Wert $x_0$ für den ersten Zugriffsparameter X umfassen. $I_Z(z)$ ist die Menge der Zugriffsdatensätze der ein oder mehreren Datenbanken, welche den dritten Wert z für den weiteren dritten Zugriffsparameter Z umfassen. Die Schnittmenge $I_Z(z) \cap I_X^{\triangle t_i}(x_0)$ ist somit die Menge aller Zugriffsdatensätze des vordefinierten Zeitintervalls $\Delta t_i$, welche sowohl den bestimmten dritten Wert z des weiteren dritten Zugriffsparameters Z, als auch den ersten Wert $x_0$ des ersten Zugriffsparameters X umfassen.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem zweiten Wert $y_0$ des zweiten Zugriffsparameters Y ist definiert als

$$p_{Z|Y=y_0}(z) = \frac{\left|I_Z(z) \cap I_Y^{\triangle t_i}(y_0)\right|}{\left|I_Y^{\triangle t_i}(y_0)\right|}.$$

$I_Y^{\triangle t_i}(y_0)$ ist die Menge der Zugriffsdatensätze des entsprechenden vordefinierten Zeitintervalls $\Delta t_i$ ist, welche den zweiten Wert $y_0$ für den zweiten Zugriffsparameter Y umfassen. Die Schnittmenge $I_Z(z) \cap I_Y^{\triangle t_i}(y_0)$ ist somit die Menge aller Zugriffsdatensätze des vordefinierten Zeitintervalls $\Delta t_i$, welche sowohl den bestimmten dritten Wert z des weiteren dritten Zugriffsparameters Z, als auch den zweiten Wert $y_0$ des zweiten Zugriffsparameters Y umfassen.

Nach Ausführungsformen ist der Unterschied in der Wahrscheinlichkeit des Auftretens des ersten Werts $x_0$ des ersten Zugriffsparameters X des Wertepaars und des zweiten Werts $y_0$ des zweiten Zugriffsparameters Y des Wertepaars innerhalb der Zugriffsdatensätze eines der vordefinierten Zeitintervalle $\Delta t_i$ definiert als ein redundanzfreier Unterschied der Form:

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\|p_{Z|X=x_0 \wedge Y=y_0} - p_{Z|X=x_0}\|_1 = \frac{1}{2} \cdot \Sigma_Z \Sigma_{z \in V(Z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \Sigma_Z \Sigma_{z \in V(Z)} |p_{Z|X=x_0 \wedge Y=y_0}(z) - p_{Z|Y=y_0}(z)|.$$

Eine Wahrscheinlichkeit eines Auftretens eines bestimmten dritten Werts z eines weiteren dritten Zugriffsparameters Z aus der Menge der dritten Zugriffsparameter, über welche summiert wird, in Kombination mit dem ersten Wert $x_0$ des ersten Zugriffsparameters X sowie dem zweiten Wert $y_0$ des zweiten Zugriffsparameters Y ist definiert als

$$p_{Z|X=x_0 \wedge Y=y_0}(z) = \frac{\left| I_Z(z) \cap I_X^{\triangle t_i}(x_0) \cap I_Y^{\triangle t_i}(y_0) \right|}{\left| I_X^{\triangle t_i}(x_0) \cap I_Y^{\triangle t_i}(y_0) \right|}.$$

$I_X^{\triangle t_i}(x_0)$ ist die Menge der Zugriffsdatensätze des entsprechenden vordefinierten Zeitintervalls $\triangle t_i$, welche den ersten Wert $x_0$ für den ersten Zugriffsparameter X umfassen. $I_Y^{\triangle t_i}(y_0)$ ist die Menge der Zugriffsdatensätze des entsprechenden vordefinierten Zeitintervalls $\triangle t_i$ ist, welche den zweiten Wert $y_0$ für den zweiten Zugriffsparameter Y umfassen. $I_Z(z)$ ist die Menge der Zugriffsdatensätze der ein oder mehreren Datenbanken, welche den dritten Wert z für den weiteren dritten Zugriffsparameter Z umfassen. Die Schnittmenge $I_Z(z) \cap I_X^{\triangle t_i}(x_0) \cap I_Y^{\triangle t_i}(y_0)$ ist somit die Menge aller Zugriffsdatensätze des vordefinierten Zeitintervalls $\triangle t_i$, welche sowohl den bestimmten dritten Wert z des weiteren dritten Zugriffsparameters Z, als auch den ersten Wert $x_0$ des ersten Zugriffsparameters X und den zweiten Wert $y_0$ des zweiten Zugriffsparameters Y umfassen.

Im Falle des redundanzfreien Unterschieds wird die Wahrscheinlichkeit eines Auftretens der Kombination der Werte $x_0$ und z bzw. $y_0$ und z von der Wahrscheinlichkeit eines Auftretens der Kombination der Werte $x_0$, $y_0$ und z abgezogen.

Ausführungsformen umfassen ferner ein verteiltes Computersystem, welches eine Mehrzahl von Servern umfasst. Bei einem ersten Server der Mehrzahl von Servern handelt es sich um ein Computersystem nach einer der zuvor beschriebenen Ausführungsformen eines Computersystems zum Detektieren eines Angriffs auf ein zu schützendes Computersystem unter Verwendung von protokollierten Zugriffsdaten des zu schützenden Computersystems. Bei dem zu schützenden Computersystem handelt es sich um das verteilte Computersystem. Auf ein oder mehreren der Server der Mehrzahl von Servern werden jeweils Zugriffsdaten protokolliert.

Nach Ausführungsformen ist das verteilte Computersystem dazu konfiguriert jede der zuvor beschriebenen Ausführungsformen des Verfahrens zum Detektieren eines Angriffs unter Verwendung protokollierter Zugriffsdaten auszuführen.

Nach Ausführungsformen erfolgt das Ausführen der Anomalieanalyse und das Identifizieren derjenigen Zugriffsparameter der Zugriffsdaten, deren Werte von den bestimmten ein oder mehreren Anomalien umfasst sind, durch den ersten Server. Die identifizierten Zugriffsparameter werden von dem ersten Server an die weiteren Server der Mehrzahl von Servern des verteilten Computersystems weitergeleitet. Die weiteren Server speichern jeweils die identifizierten Zugriffsparameter. Das Überwachen der für die identifizierten Zugriffsparameter in den Zugriffsdatensätzen protokollierten Werte erfolgt jeweils durch den die entsprechenden Werte protokollierenden Server der Mehrzahl von Servern.

Nach Ausführungsformen erfolgt das Ausführen der Anomalieanalyse, das Identifizieren derjenigen Zugriffsparameter der Zugriffsdaten, deren Werte von den bestimmten ein oder mehreren Anomalien umfasst sind, und das Überwachen der für die identifizierten Zugriffsparameter in den Zugriffsdatensätzen protokollierten Werte durch den ersten Server. Auf das Detektieren des Angriffs hin, werden durch den ersten Server ein oder mehrere Server der Mehrzahl von Servern bestimmt, auf welche der Angriff erfolgt.

Unter einer "Datenbank" wird hier eine gespeicherte Menge von Daten verstanden. Die Menge von Daten kann strukturiert sei, beispielsweise gemäß einer für die Datenbank vorgegebenen Struktur. Ferner kann zur Verwaltung der Daten der Datenbank ein "Datenbankmanagementsystem" bzw. eine Datenverwaltungssoftware bereitgestellt werden. Unter einem "Datenbankmanagementsystem" wird hier eine auf einem Computersystem ausgeführte Datenverwaltungssoftware zum Speichern und Wiedergewinnen von Daten in einer Datenbank verstanden. Beispielsweise gibt das Datenbankmanagementsystem die für die Speicherung der Daten zu verwendende Struktur vor. Je nach der verwendeten Datenverwaltungssoftware können die Daten in unterschiedlicher Form bzw. unter Verwendung unterschiedlicher Strukturen gespeichert werden. Beispielsweise werden die Daten in Datensätzen aus jeweils mehreren Datenfeldern gespeichert werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Im Weiteren werden Ausführungsformen der Erfindung mit Bezugnahme auf die Zeichnungen näher erläutert. Es zeigen:

Figur 1     ein schematisches Diagramm eines exemplarischen Computersystems zum Detektieren eines Angriffs,
Figur 2     ein schematisches Diagramm eines exemplarischen verteilten Computersystems mit einem Server zum Detektieren eines Angriffs,
Figur 3     ein schematisches Diagramm eines exemplarischen verteilten Computersystems mit einem Server zum Detektieren eines Angriffs,
Figur 4     ein schematisches Diagramm einer exemplarischen Zugriffsdatenanalyse zum Detektieren eines Angriffs,
Figur 5     ein schematisches Diagramm einer exemplarischen Zugriffsdatenanalyse zum Detektieren eines Angriffs,
Figur 6     ein schematisches Diagramm einer exemplarischen Zugriffsdatenanalyse zum Detektieren eines Angriffs,
Figur 7     ein Flussdiagramm eines exemplarischen Verfahrens zum Detektieren eines Angriffs und
Figur 8     ein Flussdiagramm eines exemplarischen Verfahrens zum Detektieren eines Angriffs.

Elemente der nachfolgenden Ausführungsformen, die einander entsprechen, werden mit denselben Bezugszeichen gekennzeichnet.

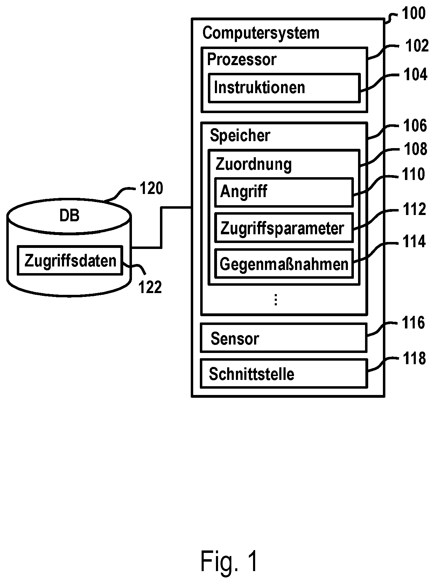

Figur 1 zeigt ein Computersystem 100 zum Detektieren eines Angriffs auf ein geschütztes Computersystem. Hierzu analysiert und überwacht das Computersystem 100 Zugriffsdaten 122. Das Computersystem 100 umfasst einen Prozessor 102, einen Speicher 106 und eine Kommunikationsschnittstelle 118. Der Prozessor 102 ist dazu konfiguriert unter Ausführen von Programminstruktion 104 das Computersystem 100 zum Analysieren von Zugriffsdaten 122 und Detektieren eines Angriffs zu steuern. Beispielsweise protokolliert das Computersystem 100 die Zugriffsdaten 122. Beispielsweise handelt es sich bei dem Computersystem 100 um das zu schützende Computersystem. Beispielsweise ist das Computersystem 100 zum Schützen eines weiteren zu schützenden Computersystems konfiguriert. Beispielsweise handelt es sich bei den protokollierten Zugriffsdaten 122 um Zugriffsdaten des zu schützenden Computersystems, welche beispielsweise von dem zu schützenden Computersystem oder dem Computersystem 100 protokolliert werden.

Die Zugriffsdaten 122 werden in Form von Zugriffsdatensätzen in ein oder mehreren Datenbanken 120 gespeichert. Die Zugriffsdatensätze umfassen Werte zu einer Mehrzahl von Zugriffsparametern eines zu schützenden Computersystems, beispielsweise des Computersystems 100 oder eines weiteren Computersystems. Das Computersystem 100 besitzt Zugriff auf die ein oder mehreren Datenbanken 120. Beispielsweise umfasst das Computersystem 100 die ein oder mehreren Datenbanken 120. Beispielsweise handelt es sich bei den ein oder mehreren Datenbanken 120 um externe bzw. entfernte Datenbanken. Bei den protokollierten Zugriffsdaten 122 kann es sich um Zugriffsdaten des Computersystems 100 und/oder um Zugriffsdaten eines oder mehrerer weiterer zu schützender Computersysteme, wie etwa Servern, handeln. Die protokollierten Zugriffsdaten 122 umfassen beispielsweise Log-Daten des zu schützenden Computersystems, Kernel-Daten des zu schützenden Computersystems und/oder Daten aus Datenpaketen, welche an das zu schützende Computersystem oder von dem zu schützenden Computersystem gesendet werden. Die Zugriffsdaten 122 werden beispielsweise jeweils mit einer Zeitangabe, etwa einem Zeitstempel, protokolliert, welche angibt, wann die protokollierten Werte erfasst wurden. Somit lassen sich die protokollierten Werte bzw. die sie umfassenden Zugriffsdatensätze Zeitintervallen zuordnen. Ferner können die Zugriffsdaten 122 Daten umfassen, welche unter Verwendung ein oder mehrerer Sensoren, etwa den Sensoren 116 des Computersystems 100 zur Überwachung von Zugriffen auf das zu schützende Computersystem, etwa das Computersystems 100 oder ein weiteres Computersystem, erfasst werden.

Auf einen Angriff auf das zu schützende Computersystem hin, führt das Computersystems 100 eine Anomalieanalyse unter Verwendung der Zugriffsdaten 122 aus. Im Zuge der Anomalieanalyse werden ein oder mehreren Anomalien innerhalb erster Zugriffsdatensätze der Zugriffsdaten 122 bestimmt, deren protokollierte Werte innerhalb eines den Angriff zumindest teilweise umfassenden vordefinierten ersten Zeitintervalls erfasst wurden. Anomalien treten jeweils in Form von Kombinationen von Werten von Zugriffsparametern des überwachten Computersystems, beispielsweise des Computersystems 100 auf, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdaten 122 unterscheidet, deren Werte in einem vordefinierten zweiten Zeitintervall erfasst wurden. Basierend auf dieser Anomalieanalyse werden diejenigen Zugriffsparameter 112 des überwachten Computersystems identifiziert, deren Werte von den bestimmten ein oder mehreren Anomalien umfasst werden. Die Unterschiede in den Wahrscheinlichkeiten sind ein Maß für eine Korrelation zwischen den betrachteten Werten der Zugriffsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation bei einem Angriff signifikant zu- oder abnimmt. Es wird dabei nach ein oder mehreren Kombinationen von Zugriffsparametern gesucht, für deren Werte sich eine Korrelation bei einem Angriff signifikant ändert und die damit als Indikator für den entsprechenden Angriff dienen können. Die identifizierten Zugriffsparameter 112 werden dem Angriff 110 bzw. einem Identifikator desselben zugeordnet. Die resultierende Zuordnung 108 wird gespeichert und als Vergleichsdatensatz für ein Detektieren des Angriffs 110 verwendet. Die Zuordnung kann beispielsweise in dem Speicher 106 Computersystem 100 oder in den ein oder mehreren Datenbanken 120 gespeichert werden.

Weitere Zugriffsdaten 122, welche in den ein oder mehreren Datenbanken 120 protokolliert werden, werden von dem Computersystem 100, welchem die Zuordnung 108 vorliegt und/oder welches Zugriff auf die Zuordnung 108 besitzt, kontinuierlich überwacht. Falls Werte für die identifizierten Zugriffsparameter 112 der Zuordnung 108 innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Zugriffsdatensätzen der protokollierten Zugriffsdaten 122, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet, wird ein zugeordneter Angriff 110 detektiert. Beispielsweise wird auf das Detektieren des Angriffs 110 hin ein Warnhinweis über die Kommunikationsschnittstelle des Computersystem 100 an das zu schützende Computersystem ausgegeben, welches von dem Angriff direkt betroffen ist. Beispielsweise wird auf das detektieren des Angriffs 110 hin ein Warnhinweis über die Kommunikationsschnittstelle des Computersystem 100 an ein Admin-Computersystem ausgegeben, welches einem Administrator eines zu schützenden verteilten Computersystems zugeordnet ist. Beispielsweise wird der Warnhinweis über eine Nutzerschnittstelle des Computersystems 100 auf einer Ausgabevorrichtung des Computersystems 100, wie etwa einem Display, ausgegeben. In diesem Fall handelt es sich bei dem Computersystem 100 beispielsweise um das zu schützende Computersystem.

Ferner können auf das Detektieren des Angriffs 110 auszuführende Gegenmaßnahmen 114 zur Abwehr oder Beschränkung der Auswirkungen des Angriffs 110 festgelegt und der Zuordnung 108 hinzugefügt werden. Beispielsweise umfassen die Gegenmaßnahmen 114 ausführbare Programminstruktionen, welche zur Abwehr oder Beschränkung der Auswirkungen des Angriffs 110 auszuführen sind. Auf das Detektieren des Angriffs 110 hin, werden die Gegenmaßnahmen 114, beispielsweise von dem Computersystem 100 und/oder weiteren Computersystemen, wie etwa dem zu schützenden Computersystem, automatisch ausgeführt. Die Gegenmaßnahmen 114 umfassen beispielsweise ein Unterbrechen einer Verbindung, über welche der Angriff erfolgt, ein Blockieren von Anweisungen, welche im Zug des Angriffs an das zu schützende Computersystem gesendet werden, ein Verwerfen von Datenpaketen, anhand deren Daten der Angriff detektiert wird, und/oder ein Verändern der Zugriffsdaten von Zugriffen auf das zu schützende Computersystem, anhand derer der Angriff detektiert wird.

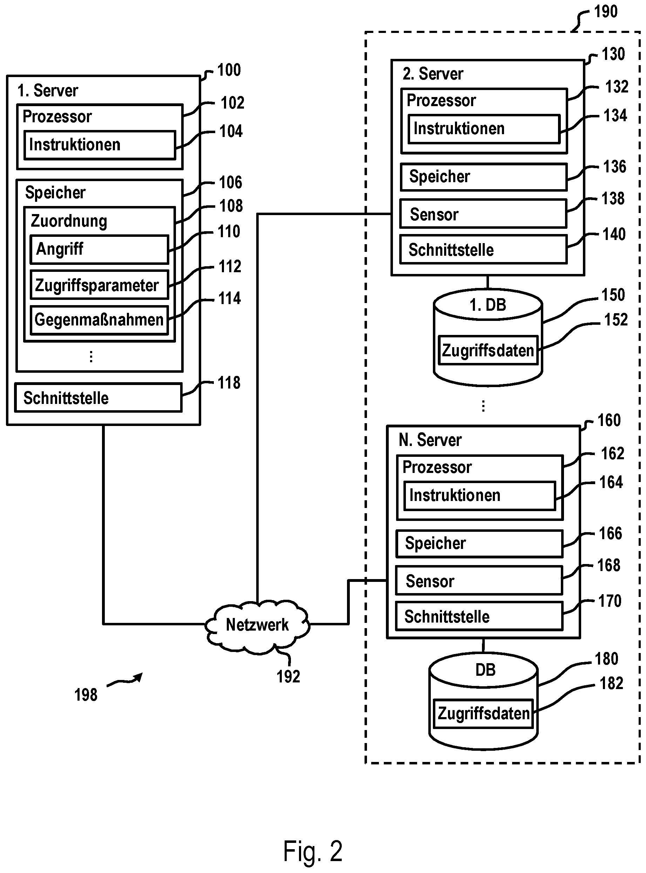

Figur 2 zeigt ein verteiltes Computersystem 198 mit einem Server 100 zum Analysieren von Zugriffsdaten 152, 182. Bei dem Server 100 handelt es sich beispielsweise um das Computersystem 100 aus Figur 1. Beispielsweise erfasst das Computersystem 100 selbst keine Zugriffsdaten. Beispielsweise erfasst das Computersystem 100 auch selbst Zugriffsdaten. Bei den analysierten und überwachten Zugriffsdaten 152, 182 handelt es sich beispielsweise um Zugriffsdaten von Servern 130, 160 einer Servergruppe 190 mit einer Mehrzahl von N Servern des verteilten Computersystems 198, wobei N eine natürliche Zahl größer 1 ist. Die Server 130, 160 der Servergruppe 190 umfassen beispielsweise jeweils einen Prozessor 132, 162 zum Ausführen von Programminstruktionen 134, 164, einen Speicher 136, 166, und eine Kommunikationsschnittstelle 140, 170. Die Server 130, 160 sind beispielsweise dazu konfiguriert jeweils Zugriffsdaten 152, 182 in Form von Zugriffsdatensätzen in ein oder mehreren Datenbanken 150, 180 zu protokollieren. Zum Erfassen von der Zugriffsdaten 152, 182 können die Server 130, 160 beispielsweise zusätzlich ein oder mehrere Sensoren 138, 168 umfassen.

Die Server 150, 160 der Servergruppe 190 kommunizieren beispielsweise über ein Netzwerk 192 untereinander und mit dem ersten Server 100. Bei dem Netzwerk 192 handelt es sich beispielsweise um öffentliches Netzwerk, wie etwa das Internet, oder ein privates Netzwerk, wie etwa ein Intranet und/oder ein internes Kommunikationsnetzwerk des verteilten Computersystems 198.

Auf einen Angriff auf einen oder mehrere der Server 150, 160 der Servergruppe 190 hin wird beispielsweise ein Warnhinweis bzw. eine Angriffsmeldung an den ersten Server 100 gesendet. Die Angriffsmeldung gibt beispielsweise Art und Zeit des Angriffs sowie den oder die von dem Angriff betroffenen Server an. Der erste Server 100 fragt auf den Erhalt der Angriffsmeldung hin Zugriffsdaten aus den Datenbanken 150, 180 an, welche innerhalb eines den Angriff zumindest teilweise umfassenden vordefinierten Zeitintervalls protokolliert wurden. Der erste Server 100 empfängt auf seine Anfrage hin die entsprechenden Zugriffsdaten und führt eine Anomalieanalyse unter Verwendung dieser Zugriffsdaten aus. Im Zuge der Anomalieanalyse werden ein oder mehreren Anomalien innerhalb der empfangenen Zugriffsdaten, d.h., erster Zugriffsdatensätze der Zugriffsdaten 152, 182, bestimmt, deren protokollierte Werte innerhalb eines den Angriff zumindest teilweise umfassenden vordefinierten ersten Zeitintervalls erfasst wurden. Anomalien treten jeweils in Form von Kombinationen von Werten von Zugriffsparametern der überwachten Computersystem 130, 160, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdaten 152, 192 unterscheidet, deren Werte in einem vordefinierten zweiten Zeitintervall erfasst wurden. Basierend auf dieser Anomalieanalyse werden diejenigen Zugriffsparameter 112 des überwachten Computersystems identifiziert, deren Werte von den bestimmten ein oder mehreren Anomalien umfasst. Beispielsweise werden Angaben zu den Zugriffsparametern 112, für deren Werte ein Auftreten einer Anomalie im Falle eines Angriffs 110 zu erwarten ist, dem entsprechenden Angriff 110 zugeordnet. Diese Zuordnung 108 wird beispielsweise in dem ersten Server 100 hinterlegt. Ferner können beispielsweise Gegenmaßnahmen gegen den Angriff 110 festgelegt und der Zuordnung 108 hinzugefügt werden.

Der erste Server sendet die Zuordnung 108 beispielsweise an die Server 150, 160 der Servergruppe 190, welche die identifizierten Zugriffsparameter 112 zur Überwachung der von ihnen protokollierten Zugriffsdaten 152, 182 verwenden. Tritt in den protokollierten Zugriffsdaten 152, 182 eine Anomalie innerhalb der identifizierten Zugriffsparameter 112 auf, wird ein Angriff 110 detektiert. Beispielsweise sendet der den Angriff 110 detektierende Server 130, 160 einen Warnhinweis über den Angriff 110 an die weiteren Server der Servergruppe 190 und/oder an den ersten Server 100. Ferner führt der den Angriff 110 detektierende Server 130, 160 beispielsweise ein oder mehrere von der Zuordnung 108 definierte Gegenmaßnahmen 114 aus. Zusätzlich können ein oder mehrere der den Warnhinweis empfangenden Server der Servergruppe 190 und/oder der erste Server 100 ebenfalls ein oder mehrere von der Zuordnung 108 definierte Gegenmaßnahmen 114 ausführen.

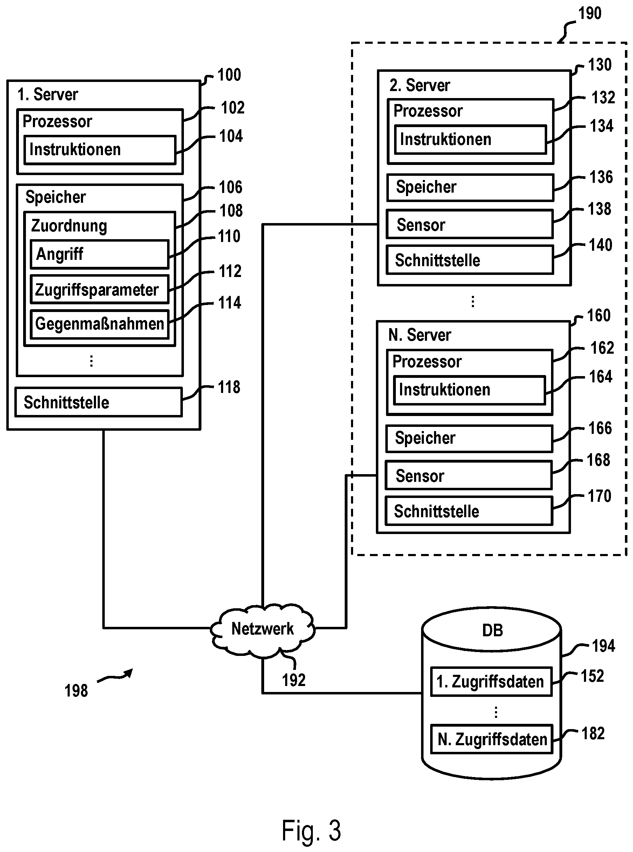

Figur 3 zeigt ein verteiltes Computersystem 198 mit einem Server 100 zum Analysieren von Zugriffsdaten 152, 182, dessen Aufbau und Funktionsweise analog zu dem verteiltes Computersystem 198 der Figur 2 ist. Der Unterschied zu dem verteilten Computersystem 198 der Figur 2 besteht darin, dass die Zugriffsdaten 152, 182 der Server 150, 160 der Servergruppe 190 in ein oder mehreren Datenbanken, beispielsweise in einer zentralen Datenbank 194, gespeichert werden, auf welche beispielsweise der erste Server 100 Zugriff besitzt. Auf einen Empfang einer Angriffsmeldung von einem der Server 150, 160 der Servergruppe 190 hin kann der erste Server 100 mithin Zugriffsdaten der einzelnen Server 150, 160, welche innerhalb eines den Angriff zumindest teilweise umfassenden vordefinierten Zeitintervalls protokolliert wurden, aus der zentralen Datenbanken 194 auslesen. Der erste Server 100 führt eine Anomalieanalyse durch und identifiziert Zugriffsparameter, deren Werte von den ein oder mehreren Anomalien umfasst sind. Ferner erstellt der erste Server 100 die Zuordnung 108 zwischen den identifizierten Zugriffsparametern 110, dem Angriff 110 und gegebenenfalls Gegenmaßnahmen 114 gegen den Angriff 110. Ferner überwacht beispielsweise der erste Server 100 die in der zentralen Datenbank 194 protokollierten Zugriffsdaten 152, 182. Tritt in den protokollierten Zugriffsdaten 152, 182 eine Anomalie innerhalb der identifizierten Zugriffsparameter 112 auf, wird ein, beispielsweise wiederholter, Angriff 110 von dem ersten Server 100 detektiert. Beispielsweise sendet der erste Server 100 einen Warnhinweis über den Angriff 110 an die Server 130, 150 der Servergruppe 190. Ferner veranlasst der erste Server 100 beispielsweise ein Ausführen von ein oder mehrere von der Zuordnung 108 definierte Gegenmaßnahmen 114 durch ein oder mehrere Server 130, 150 der Servergruppe 190 und/oder durch den Server 100.

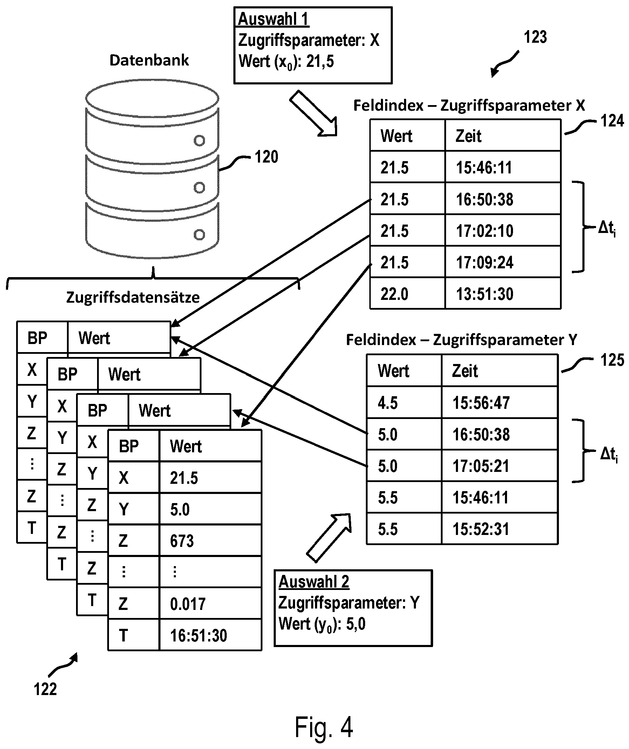

Figur 4 zeigt ein schematisches Diagramm einer exemplarischen Zugriffsdatenanalyse zum Detektieren eines Angriffs. In ein oder mehreren Datenbanken 120 sind Zugriffsdaten 122 in Form von Zugriffsdatensätzen gespeichert. Diese Zugriffsdatensätze umfassen Werte zu einer Mehrzahl von Zugriffsparametern X, Y, Z, welche während eines Betriebes eines zu schützenden Computersystems erfasste wurden. Ferner umfassen die Zugriffsdatensätze jeweils eine Zeitangabe T, welche angibt, wann die protokollierten Werte erfasst wurden. Ferner wird beispielsweise eine normalisierte Indexstruktur 123 bereitgestellt. Diese Indexstruktur 123 führt die in den Zugriffsdatensätzen der Zugriffsdaten 122 für die Zugriffsparameter gespeicherten Werte auf. Beispielsweise umfasst die Indexstruktur 123 eine Mehrzahl von Teilindizes 124, 125. Die Teilindizes 124, 125 umfassen beispielsweise jeweils die erfassten Werte für einen der Zugriffsparameter. Beispielsweise erfasst ein erster Teilindex 124 die Werte des Zugriffsparameters X, d.h. stellt einen Feldindex für den Zugriffsparameter X bereit. Beispielsweise erfasst ein zweiter Teilindex 125 die Werte des Zugriffsparameters Y, d.h. stellt einen Feldindex für den Zugriffsparameter Y bereit. Die Indexstruktur 123 kann beispielsweise weitere (nicht dargestellte) Teilindizes für die weiteren Zugriffsparameter Z der Zugriffsdaten 122 umfassen. Beispielsweise umfassen die Teilindizes 124, 125 zudem jeweils eine Zeitangabe, welche angibt, wann die entsprechenden Werte erfasst wurden.

Soll nun ein Unterschied einer Wahrscheinlichkeit eines Auftretens für Werte zweier Zugriffsparameter, beispielsweise X und Y, bestimmt werden, werden für jeden dieser Zugriffsparameter jeweils Werte ausgewählt. Beispielsweise wird für den ersten Zugriffsparameter X ein erster Wert $x_0$ ausgewählt, z.B. 21,5, und für den zweiten Zugriffsparameter Y ein zweiter Wert $y_0$, z.B. 5,0. Für diese ausgewählten Werte wird ein Unterschied in der Wahrscheinlichkeit eines Auftretens innerhalb eines bestimmten Zeitintervalls $\Delta t_i$ bestimmt. Hierzu wird in den Zugriffsdaten 122 unter Verwendung der Indexstruktur 123 geprüft, in welchen Zugriffsdatensätzen aus dem Zeitintervall $\Delta t_i$ die entsprechenden Werte vorkommen.

Beispielsweise wird der entsprechende Unterschied in der Wahrscheinlichkeit eines Auftretens des ersten Werts $x_0$ des ersten Zugriffsparameters X und des zweiten Werts $y_0$ des zweiten Zugriffsparameters Y innerhalb der Zugriffsdatensätze des Zeitintervalls $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren, d.h. über dritte Zugriffsparameter Z und deren Werte, d.h. über alle dritten Werte z, welche für die entsprechenden weiteren Zugriffsparameter Z innerhalb der Zugriffsdatensätze der ein oder mehreren Datenbanken 120 protokolliert sind. V(Z) ist die Menge aller protokollierter dritter Werte z der dritten Zugriffsparameter Z. Der Faktor ½ dient der Normalisierung, um sicherzustellen, dass die Wahrscheinlichkeitsdifferenz zwischen 0 und 1 liegt. Beispielsweise können für den Faktor auch andere Werte verwendet werden.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem ersten Wert $x_0$ des ersten Zugriffsparameters X ist definiert als

$$p_{Z|X=x_0}(z) = \frac{\left|I_Z(z) \cap I_X^{\triangle t_i}(x_0)\right|}{\left|I_X^{\triangle t_i}(x_0)\right|}.$$

$I_X^{\triangle t_i}(x_0)$ ist die Menge der Zugriffsdatensätze des entsprechenden vordefinierten Zeitintervalls $\Delta t_i$, welche den ersten Wert $x_0$ für den ersten Zugriffsparameter X umfassen. $I_Z(z)$ ist die Menge der Zugriffsdatensätze der Datenbank, welche den dritten Wert z für den weiteren dritten Zugriffsparameter Z umfassen. Die Schnittmenge $I_Z(z) \cap I_X^{\triangle t_i}(x_0)$ ist somit die Menge aller Zugriffsdatensätze des vordefinierten Zeitintervalls $\Delta t_i$, welche sowohl den bestimmten dritten Wert z des weiteren dritten Zugriffsparameters Z, als auch den ersten Wert $x_0$ des ersten Zugriffsparameters X umfassen.

Eine Wahrscheinlichkeit eines Auftretens eines bestimmten dritten Werts z aus der Menge der dritten Werte eines weiteren dritten Zugriffsparameters Z aus der Menge der dritten Zugriffsparameter, über welche summiert wird, in Kombination mit dem zweiten Wert $y_0$ des zweiten Zugriffsparameters Y ist definiert als

$$p_{Z|Y=y_0}(z) = \frac{\left|I_Z(z) \cap I_Y^{\triangle t_i}(y_0)\right|}{\left|I_Y^{\triangle t_i}(y_0)\right|}.$$

$I_Y^{\triangle t_i}(y_0)$ ist die Menge der Zugriffsdatensätze des entsprechenden vordefinierten Zeitintervalls $\Delta t_i$ ist, welche den zweiten Wert $y_0$ für den zweiten Zugriffsparameter Y umfassen. Die Schnittmenge $I_Z(z) \cap I_Y^{\triangle t_i}(y_0)$ ist somit die Menge aller Zugriffsdatensätze des vordefinierten Zeitintervalls $\Delta t_i$, welche sowohl den bestimmten dritten Wert z des weiteren dritten Zugriffsparameters Z, als auch den zweiten Wert $y_0$ des zweiten Zugriffsparameters Y umfassen.

Beispielsweise ist der Unterschied in der Wahrscheinlichkeit des Auftretens des ersten Werts $x_0$ des ersten Zugriffsparameters X des Wertepaars und des zweiten Werts $y_0$ des zweiten Zugriffsparameters Y des Wertepaars innerhalb der Zugriffsdatensätze des Zeitintervalls $\Delta t_i$ definiert als ein redundanzfreier Unterschied der Form:

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|.$$

Eine Wahrscheinlichkeit eines Auftretens eines bestimmten dritten Werts z eines weiteren dritten Zugriffsparameters Z aus der Menge der dritten Zugriffsparameter, über welche summiert wird, in Kombination mit dem ersten Wert $x_0$ des ersten Zugriffsparameters X sowie dem zweiten Wert $y_0$ des zweiten Zugriffsparameters Y ist definiert als

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

$I_X^{\triangle t_i}(x_0)$ ist die Menge der Zugriffsdatensätze des entsprechenden vordefinierten Zeitintervalls $\Delta t_i$, welche den ersten Wert $x_0$ für den ersten Zugriffsparameter X umfassen. $I_Y^{\triangle t_i}(y_0)$ ist die Menge der Zugriffsdatensätze des entsprechenden vordefinierten Zeitintervalls $\Delta t_i$ ist, welche den zweiten Wert $y_0$ für den zweiten Zugriffsparameter Y umfassen. $I_Z(z)$ ist die Menge der Zugriffsdatensätze der Datenbank, welche den dritten Wert z für den weiteren dritten Zugriffsparameter Z umfassen. Die Schnittmenge $I_Z(z) \cap I_X^{\triangle t_i}(x_0) \cap I_Y^{\triangle t_i}(y_0)$ ist somit die Menge aller Zugriffsdatensätze des vordefinierten Zeitintervalls $\Delta t_i$, welche sowohl den bestimmten dritten Wert z des weiteren dritten Zugriffsparameters Z, als auch den ersten Wert $x_0$ des ersten Zugriffsparameters X und den zweiten Wert $y_0$ des zweiten Zugriffsparameters Y umfassen.

Basierend auf der Indexabfrage der Indexstruktur 123 kann die Anzahl der Zugriffsdatensätze innerhalb des Zeitintervalls $\Delta t_i$ bestimmt werde, welche Feld x mit dem Wert 21,5 und Feld y mit dem Wert 5,0 umfassen. Basierend darauf kann die Wahrscheinlichkeit für ein Auftreten der entsprechenden Werte sowie der Unterschied der Wahrscheinlichkeiten bestimmt werden.

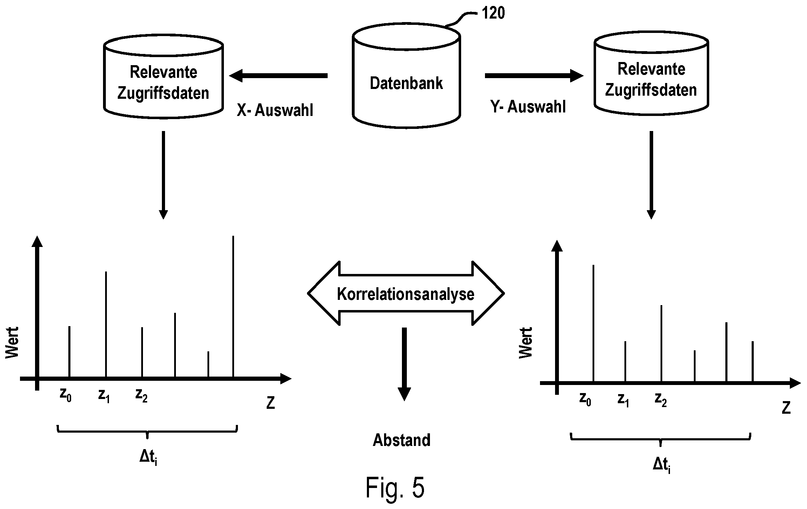

Figur 5 zeigt eine weitere schematische Darstellung der exemplarischen Zugriffsdatenanalyse aus Figur 4. Aus den ein oder mehreren Datenbanken 120 werden die relevanten Zugriffsdaten für die X-Auswahl, d.h. diejenigen Zugriffsdatensätze aus dem Zeitintervall $\Delta t_i$, die den Wert $x_0$ für den Zugriffsparameter X umfassen, extrahiert. Diese Zugriffsdatensätze umfassen beispielsweise die dargestellten Werte $z_0$, $z_1$, $z_2$, etc. für die weiteren Zugriffsparameter Z. Ferner werden aus den ein oder mehreren Datenbanken 120 die relevanten Zugriffsdaten für die Y-Auswahl, d.h. diejenigen Zugriffsdatensätze aus dem Zeitintervall $\Delta t_i$, die den Wert $y_0$ für den Zugriffsparameter Y umfassen, extrahiert. Diese Zugriffsdatensätze umfassen beispielsweise die dargestellten Werte $z_0$, $z_1$, $z_2$, etc. für die weiteren Zugriffsparameter Z. Unter Verwendung der jeweiligen Werte $z_0$, $z_1$, $z_2$, etc. für die weiteren Zugriffsparameter Z wird eine Korrelationsanalyse vorgenommen. Das Ergebnis dieser Korrelationsanalyse ist ein Grad der Korrelation zwischen den beiden Werten $x_0$ und $y_0$ für die beiden Zugriffsparameter X und Y. Der Grad der Korrelation wird auch als Abstand bezeichnet. Hierbei handelt es sich um den oben beschriebenen Unterschied in der Wahrscheinlichkeit eines Auftretens der beiden Werten $x_0$ und $y_0$ für die beiden Zugriffsparameter X und Y in den Zugriffsdatensätzen des Zeitintervalls $\Delta t_i$. Je geringer der Unterschied, desto größer die Korrelation. Desto größer der Unterschied, desto geringer die Korrelation. Zunächst werden im Zuge einer Anomalieanalyse beispielsweise diejenigen Zugriffsparameter identifiziert, etwa die beiden Zugriffsparameter X und Y, deren Unterschied eine Anomalie in einem einen Angriff zumindest teilweise umfassenden vordefinierten Zeitintervall aufweist. Eine Anomalie liegt vor, wenn die für das den Angriff zumindest teilweise umfassende vordefinierte Zeitintervall bestimmte Korrelation signifikant von einer Referenzkorrelation eines Referenzzeitintervalls $\Delta t_j$ abweicht, d.h. der Unterschied größer oder gleich einem vordefinierten Größenwert ist.

Diese identifizierten Zugriffsparameter X und Y werden dann im Zuge einer Überwachung der protokollierten Werte, wie in Figur 5 gezeigt, auf ihre Korrelation hin geprüft. Weicht die für das überwachte Zeitintervall $\Delta t_i$ bestimmte Korrelation signifikant von einer Referenzkorrelation eines Referenzzeitintervalls $\Delta t_j$ ab, d.h. ist der Unterschied größer oder gleich einem vordefinierten Größenwert, stellt dies ein Indiz für einen Angriff dar.

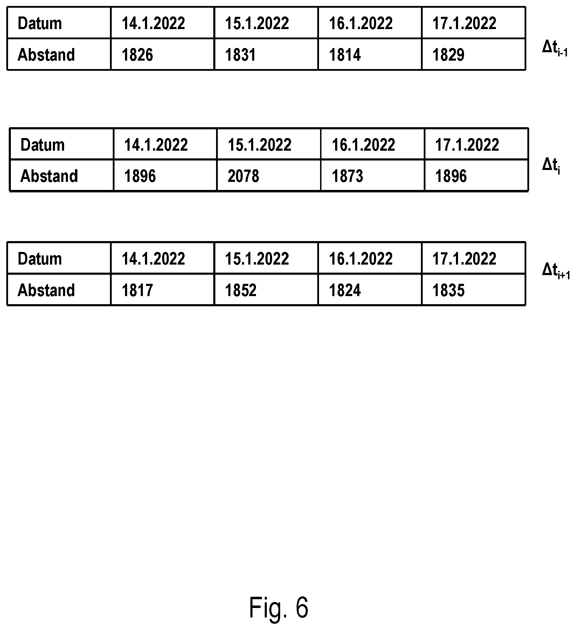

Figur 6 zeigt exemplarische Abstände der beiden Werten $x_0$ und $y_0$ für die beiden Zugriffsparameter X und Y aus Figur 5 im Zuge einer Zugriffsdatenanalyse zum Detektieren eines Angriffs. Es werden exemplarisch für unterschiedliche Zeitintervalle $\Delta t_{i-1}$, $\Delta t_i$, $\Delta t_{i+1}$, an vier unterschiedlichen Tagen, z.B. "14.1.2022", "15.1.2022", "16.1.2022", "17.1.2022", die jeweiligen Abstände zwischen den Werten $x_0$ und $y_0$ für die beiden Zugriffsparameter X und Y dargestellt. Die Abstände sind in diesem Fall nicht normiert, d.h. liegen nicht im Intervall von 0 bis 1. Der Abstand zwischen den Werten $x_0$ und $y_0$ für die beiden Zugriffsparameter X und Y für das Zeitintervall $\Delta t_i$ am 15.1.2022 unterscheidet sich deutlich von den anderen Abständen. Mithin liegt hier eine Anomalie vor. Beispielsweise ist in dem Zeitintervall $\Delta t_i$ am 15.1.2022 ein Angriff aufgetreten. Somit kann ein Auftreten einer Anomalie, wie der in Figur 6 für das Zeitintervall $\Delta t_i$ am 15.1.2022 gezeigten Anomalie, als ein Indiz für einen Angriff verwendet werden. Wird eine entsprechende Anomalie erfasst, wird ein Angriff detektiert.

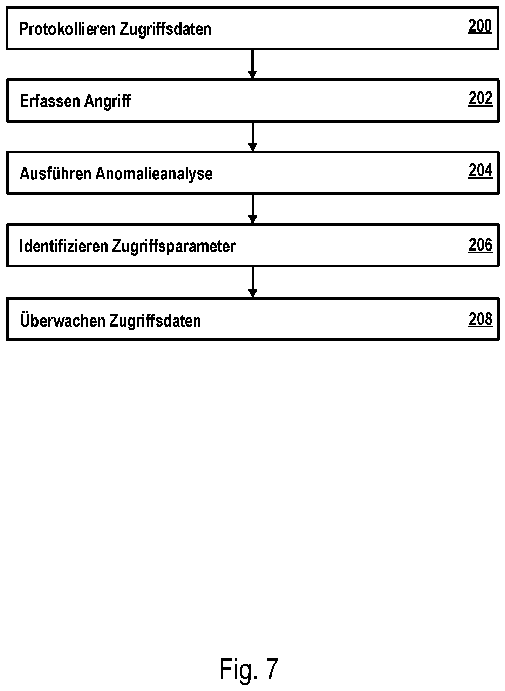

Figur 7 zeigt ein exemplarisches Verfahren zum Analysieren von Zugriffsdaten. In Block 200 werden Zugriffsdaten protokolliert. Hierzu werden die entsprechenden Zugriffsdaten umfassende Zugriffsdatensätzen in ein oder mehreren Datenbanken gespeichert. Die gespeicherten Zugriffsdatensätze umfassen während des Betriebes eines zu schützenden Computersystems erfasste Werte zu einer Mehrzahl von Zugriffsparametern des Computersystems. Ferner umfassen die Zugriffsdatensätze jeweils eine Zeitangabe, welche angibt, wann die protokollierten Werte erfasst wurden. In Block 202 wird ein Angriff detektiert, auf dessen Detektion hin in Block 204 eine Anomalieanalyse ausgeführt wird. Die Anomalieanalyse umfasst ein Bestimmen von ein oder mehreren Anomalien innerhalb erster Zugriffsdatensätze der protokollierten Zugriffsdatensätze, deren protokollierte Werte innerhalb eines den Angriff zumindest teilweise umfassenden vordefinierten ersten Zeitintervalls erfasst wurden. Die Anomalien sind dabei jeweils eine Kombination von Werten von Zugriffsparametern des Computersystems, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdatensätze unterscheidet, deren Werte in einem vordefinierten zweiten Zeitintervall erfasst wurden. In Block 206 werden diejenigen Zugriffsparameter des Computersystems identifiziert, deren Werte von den bestimmten ein oder mehreren Anomalien umfasst sind. Ferner wird beispielsweise eine Zuordnung der identifizierten Zugriffsparameter zu dem in Block 202 detektierten Angriff erstellt. Diese Zuordnung wird beispielsweise für eine Überwachung zukünftig protokollierter Zugriffsdatensätze gespeichert. In Block 208 werden die für die identifizierten Zugriffsparameter des Computersystems in den Zugriffsdatensätzen protokollierten Werte überwacht. Bei den überwachten Zugriffsdatensätzen handelt es sich beispielsweise um Zugriffsdatensätze neu protokollierter Zugriffsdaten, d.h. von Zugriffdaten, welche beispielsweise nach dem Ausführen der Blöcke 200 bis 206 protokolliert werden.

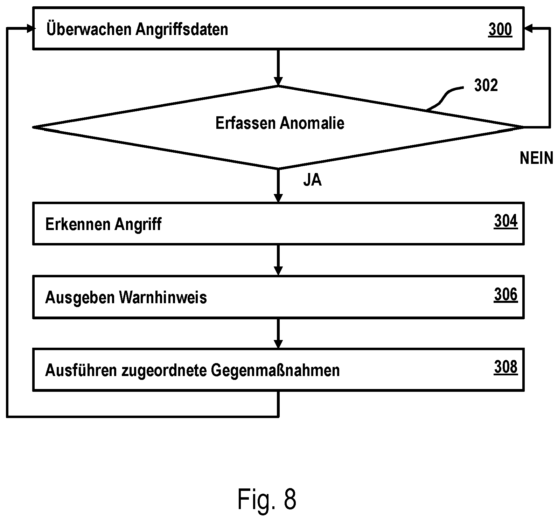

Figur 8 zeigt ein exemplarisches Verfahren zum Detektieren eines Angriffs auf ein Computersystem unter Verwendung von Zugriffsparametern, welche beispielsweise wie in dem in Figur 7 gezeigten Verfahren identifiziert wurden. Beispielsweise wird eine entsprechende Zuordnung der identifizierten Zugriffsparameter zu dem Angriff verwendet. In Block 300 werden protokollierte Zugriffsdaten überwacht. Dabei werden die für die identifizierten Zugriffsparameter in den Zugriffsdatensätzen protokollierten Werte überwacht und geprüft, ob eine Anomalie erfasst wird. Eine Anomalie wird erfasst, falls Werte für die identifizierten Zugriffsparameter des Computersystems innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Zugriffsdatensätzen der protokollierten Zugriffsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet. Wird keine Anomalie für die identifizierten Zugriffsparameter erfasst, wird die Überwachung der Zugriffsdaten in Block 300 unverändert fortgesetzt. Wird eine Anomalie für die identifizierten Zugriffsparameter erfasst, wird das Verfahren in Block 304 fortgesetzt. In Block 304 wird ein Angriff detektiert, welche den identifizierten Zugriffsparametern zugeordnet ist. In Block 306 wird beispielsweise ein Warnhinweis über den Angriff ausgegeben. In Block 308 werden beispielsweise hinterlegte Gegenmaßnahmen ausgeführt, welche ebenfalls der charakteristischen Merkmalskombination und/oder dem detektierten Angriff zugeordnet sind.

**Bezugszeichenliste**

100    Computersystem
102    Prozessor

104     Programminstruktionen
106     Speicher
108     Zuordnung
110     Angriff
112     Zugriffsparameter
114     Gegenmaßnahmen
116     Sensor
118     Kommunikationsschnittstelle
120     Datenbank
122     Zugriffsdaten
123     Indexstruktur
124     Teilindex
125     Teilindex
130     Server
132     Prozessor
134     Programminstruktionen
136     Speicher
138     Sensor
140     Kommunikationsschnittstelle
150     Datenbank
152     Zugriffsdaten
160     Server
162     Prozessor
164     Programminstruktionen
166     Speicher
168     Sensor
170     Kommunikationsschnittstelle
180     Datenbank
182     Zugriffsdaten
190     Servergruppe
192     Netzwerk
194     Datenbank
198     verteiltes Computersystem

## Patentansprüche

1.  Verfahren zum Detektieren eines Angriffs (110) auf ein zu schützendes Computersystem (100, 130, 160, 198) unter Verwendung von protokollierten Zugriffsdaten (122, 152, 182) von Zugriffen auf das zu schützende Computersystem (100, 130, 160, 198), wobei das Verfahren umfasst:

    • Protokollieren der Zugriffsdaten (122, 152, 182), wobei das Protokollieren der Zugriffsdaten (122, 152, 182) ein Speichern von Zugriffsdatensätzen in ein oder mehreren Datenbanken (120, 150, 180, 194) umfasst, wobei die Zugriffsdatensätze im Zuge von Zugriffen auf das zu schützende Computersystem (100, 130, 160, 198) erfasste Zugriffsdaten mit Werten zu einer Mehrzahl von Zugriffsparametern umfassen, wobei die Zugriffsdatensätze ferner jeweils eine Zeitangabe umfassen, welche angibt, wann die protokollierten Werte erfasst wurden,
    • auf ein Auftreten eines Angriffs auf das zu schützende Computersystem (100, 130, 160, 198) hin, Ausführen einer Anomalieanalyse, wobei die Anomalieanalyse ein Bestimmen von ein oder mehreren Anomalien innerhalb erster Zugriffsdatensätze der protokollierten Zugriffsdatensätze umfasst, deren protokollierte Zugriffsdaten innerhalb eines den Angriff (110) zumindest teilweise umfassenden vordefinierten ersten Zeitintervalls erfasst wurden, wobei die Anomalien jeweils eine Kombination von Werten von Zugriffsparametern sind, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdatensätze unterscheidet, deren Werte in einem vordefinierten zweiten Zeitintervall erfasst wurden,
    • Identifizieren derjenigen Zugriffsparameter (112) der Zugriffsdaten von Zugriffen auf das zu schützende Computersystem (100, 130, 160, 198), deren Werte von den bestimmten ein oder mehreren Anomalien umfasst sind,

- Überwachen der für die identifizierten Zugriffsparameter (112) der Zugriffsdaten in den Zugriffsdatensätzen protokollierten Werte, wobei das Überwachen ein Detektieren eines erneuten Angriffs (110) umfasst auf ein Erfassen von Werten für die identifizierten Zugriffsparameter (112) der Zugriffsdaten von Zugriffen auf das zu schützende Computersystem (100, 130, 160, 198) innerhalb eines vordefinierten dritten Zeitintervalls, für welche sich ein dritter Unterschied in einer dritten Wahrscheinlichkeit eines Auftretens der entsprechenden Werte innerhalb von dritten Zugriffsdatensätzen der protokollierten Zugriffsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

2. Verfahren nach Anspruch 1, wobei es sich bei den Kombinationen von Werten jeweils um Wertepaare handelt.

3. Verfahren nach Anspruch 2, wobei der Unterschied in der Wahrscheinlichkeit eines Auftretens eines ersten Werts $x_0$ eines ersten Zugriffsparameters X eines Wertepaars und eines zweiten Werts $y_0$ eines zweiten Zugriffsparameters Y des Wertepaars innerhalb der Zugriffsdatensätze eines der vordefinierten Zeitintervalle $\Delta t_i$ definiert ist als

$$\frac{1}{2}\left\|p_{Z|X=x_0} - p_{Z|Y=y_0}\right\|_1 = \frac{1}{2} \cdot \Sigma_Z \Sigma_{z \in V(Z)} \left|p_{Z|X=x_0}(z) - p_{Z|Y=y_0}(z)\right|,$$

wobei die Summation über alle weiteren dritten Zugriffsparameter Z und alle dritten Werte z läuft, welche für den weiteren dritten Zugriffsparameter Z innerhalb der Zugriffsdatensätze der ein oder mehreren Datenbanken (120, 150, 180, 194) protokolliert sind,
wobei eine Wahrscheinlichkeit eines Auftretens eines dritten Werts z eines weiteren dritten Zugriffsparameters Z in Kombination mit dem ersten Wert $x_0$ des ersten Zugriffsparameters X definiert ist als

$$p_{Z|X=x_0}(z) = \frac{\left|I_Z(z) \cap I_X^{\Delta t_i}(x_0)\right|}{\left|I_X^{\Delta t_i}(x_0)\right|},$$

wobei $I_X^{\Delta t_i}(x_0)$ die Menge der Zugriffsdatensätze des entsprechenden vordefinierten Zeitintervalls $\Delta t_i$ ist, welche den ersten Wert $x_0$ für den ersten Zugriffsparameter X umfassen, wobei $I_z(z)$ die Menge der Zugriffsdatensätze der ein oder mehreren Datenbanken (120, 150, 180, 194) ist, welche den dritten Wert z für den weiteren dritten Zugriffsparameter Z umfassen,
wobei eine Wahrscheinlichkeit eines Auftretens eines dritten Werts z eines weiteren dritten Zugriffsparameters Z in Kombination mit dem zweiten Wert $y_0$ des zweiten Zugriffsparameters Y definiert ist als

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

wobei $I_Y^{\Delta t_i}(y_0)$ die Menge der Zugriffsdatensätze des entsprechenden vordefinierten Zeitintervalls $\Delta t_i$ ist, welche den zweiten Wert $y_0$ für den zweiten Zugriffsparameter Y umfassen.

4. Verfahren nach Anspruch 2, wobei der Unterschied in der Wahrscheinlichkeit des Auftretens des ersten Werts $x_0$ des ersten Zugriffsparameters X des Wertepaars und des zweiten Werts $y_0$ des zweiten Zugriffsparameters Y des Wertepaars innerhalb der Zugriffsdatensätze eines der vordefinierten Zeitintervalle $\Delta t_i$ definiert ist als ein redundanzfreier Unterschied der Form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

wobei

$$\frac{1}{2}\left\|p_{Z|X=x_0\wedge Y=y_0} - p_{Z|X=x_0}\right\|_1 = \frac{1}{2}\cdot\sum_{Z}\sum_{z\in V(Z)}\left|p_{Z|X=x_0\wedge Y=y_0}(z) - p_{Z|X=x_0}(z)\right|$$

und

$$\frac{1}{2}\left\|p_{Z|X=x_0\wedge Y=y_0} - p_{Z|Y=y_0}\right\|_1 = \frac{1}{2}\cdot\sum_{Z}\sum_{z\in V(z)}\left|p_{Z|X=x_0\wedge Y=y_0}(z) - p_{Z|Y=y_0}(z)\right|,$$

wobei

$$p_{Z|X=x_0\wedge Y=y_0}(z) = \frac{\left|I_Z(z)\cap I_X^{\triangle t_i}(x_0)\cap I_Y^{\triangle t_i}(y_0)\right|}{\left|I_X^{\triangle t_i}(x_0)\cap I_Y^{\triangle t_i}(y_0)\right|}.$$

5. Verfahren nach einem der vorangehenden Ansprüche, wobei auf das Detektieren des Angriffs (110) hin ein Warnhinweis ausgegeben wird, und/oder

wobei die Zugriffsdaten (122, 152, 182) ein oder mehrere der folgenden Daten umfassen: Log-Daten zu Zugriffen auf das zu schützende Computersystem, Kernel-Daten zu Zugriffen auf das zu schützende Computersystem, Daten aus Paketen, welche an das zu schützende Computersystem oder von dem zu schützenden Computersystem gesendet werden, und/oder

wobei auszuführende Gegenmaßnahmen (114) zur Vermeidung des Angriffs (110) festgelegt werden, wobei eine Zuordnung (108) der auszuführenden Gegenmaßnahmen (114) zu dem Angriff (110) gespeichert wird, wobei auf das Detektieren des Angriffs (110) hin automatisch die dem Angriff (110) zugeordneten Gegenmaßnahmen (114) ausgeführt werden,

wobei die dem Angriff (110) zugeordneten Gegenmaßnahmen (114) beispielsweise ein oder mehrere der folgenden Gegenmaßnahmen umfassen:

- ein Unterbrechen einer Verbindung, über welche der Angriff erfolgt;
- ein Blockieren von Anweisungen, welche im Zug des Angriffs an das zu schützende Computersystem (100, 130, 160, 198) gesendet werden;
- ein Verwerfen von Datenpakten, welche die erfassten Werten für die identifizierten Zugriffsparameter (112) der Zugriffsdaten (122, 152, 182) von Zugriffen auf das zu schützende Computersystem (100, 130, 160, 198) innerhalb eines vordefinierten dritten Zeitintervalls umfassen, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet;
- ein Verändern der Zugriffsdaten (122, 152, 182) von Zugriffen auf das zu schützende Computersystem (100, 130, 160, 198) innerhalb des vordefinierten dritten Zeitintervalls, wobei das Verändern der Zugriffdaten ein Verändern der erfassten Werten für die identifizierten Zugriffsparameter (112) der Zugriffsdaten von Zugriffen auf das zu schützende Computersystem (100, 130, 160, 198) umfasst, für welche sich der dritte Unterschied in der dritten Wahrscheinlichkeit des Auftretens der entsprechenden Werte innerhalb der dritten Zugriffsdatensätzen der protokollierten Zugriffsdatensätze mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet, und/oder

wobei das Detektieren des Angriffs (110) auf ein Erfassen der Werte für eine vorbestimmte Mindestanzahl von Zugriffsparametern der identifizierten Zugriffsparameter (112) der Zugriffsdaten (122, 152, 182) von Zugriffen auf das zu schützende Computersystem (100, 130, 160, 198) innerhalb des vordefinierten dritten Zeitintervalls hin erfolgt, für welche sich der dritte Unterschied in der dritten Wahrscheinlichkeit des Auftretens der entsprechenden Werte innerhalb der dritten Zugriffsdatensätzen mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet,

wobei das Detektieren des Angriffs (110) beispielsweise auf ein Erfassen der Werte für alle identifizierten Zugriffsparameter (112) der Zugriffsdaten von Zugriffen auf das zu schützende Computersystem (100, 130, 160, 198) innerhalb des vordefinierten dritten Zeitintervalls hin erfolgt, für welche sich der dritte Unterschied in der dritten Wahrscheinlichkeit des Auftretens der entsprechenden Werte innerhalb der dritten Zugriffsdatensätzen mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet, und/oder

wobei es sich bei dem vordefinierten Größenwert um einen positiven Größenwert, einen negativen Größenwert oder um den Betrag des Unterschieds zwischen den beiden entsprechenden Unterschieden in den Wahrscheinlichkeiten des Auftretens der entsprechenden Werte handelt, und/oder

wobei es sich bei dem vordefinierten Größenwert um einen prozentualen Größenwert oder einen absoluten Größenwert handelt, und/oder

wobei das Speichern der Zugriffsdatensätze ein Erstellen und Speichern eines normalisierten Index (123, 124, 125) der von den Zugriffsdatensätzen umfassten Werte für die Zugriffsparameter der Zugriffsdaten von Zugriffen auf das zu schützende Computersystem (100, 130, 160, 198) umfasst, wobei die Anomalieanalyse unter Verwendung des normalisierten Indexes (123, 124, 125) ausgeführt wird, und/oder

wobei das Verfahren ausgeführt wird von ein oder mehreren Netzwerkkomponenten eines Netzwerks, von ein oder mehreren zusätzlichen Computersystemen oder von dem zu schützenden Computersystem selbst.

6. Verfahren nach einem der vorangehenden Ansprüche, wobei es sich bei dem zu schützenden Computersystem um ein verteiltes Computersystem (198) handelt, welches eine Mehrzahl von Servern (100, 130, 160) umfasst, wobei auf jedem der Server der Mehrzahl von Servern (100, 130, 160) jeweils Zugriffsdaten (152, 182) protokolliert werden.

7. Verfahren nach Anspruch 6, wobei das Ausführen der Anomalieanalyse und das Identifizieren derjenigen Zugriffsparameter (112) der Zugriffsdaten durch einen ersten Server (100) der Mehrzahl von Servern (100, 130, 160) erfolgt und die identifizierten Zugriffsparameter (112) der Zugriffsdaten, deren Werte von den bestimmten ein oder mehreren Anomalien umfasst sind, von dem ersten Server an die weiteren Server (130, 160) der Mehrzahl von Servern (100, 130, 160) des verteilten Computersystems (198) weitergeleitet werden, wobei die weiteren Server (130, 160) die identifizierten Zugriffsparameter (112) jeweils speichern, wobei das Überwachen der für die identifizierten Zugriffsparameter (112) in den Zugriffsdatensätzen (152, 182) protokollierten Werte jeweils durch den die entsprechenden Werte protokollierenden Server (130, 160) der Mehrzahl von Servern (100, 130, 160) erfolgt,

wobei die Zuordnung (108) der auszuführenden Gegenmaßnahmen (114) zu dem Angriff (110) beispielsweise jeweils in den einzelnen Servern (130, 160) der Mehrzahl von Servern (100, 130, 160) gespeichert wird und auf das Detektieren des Angriffs (110) durch einen Server (130, 160) der Mehrzahl von Servern (100, 130, 160) hin beispielsweise die gespeicherten, dem Angriff (110) zugeordneten Gegenmaßnahmen (114) durch den entsprechenden Server (130, 160) der Mehrzahl von Servern (100, 130, 160) automatisch ausgeführt werden.

8. Verfahren nach Anspruch 6, wobei das Ausführen der Anomalieanalyse, das Identifizieren derjenigen Zugriffsparameter (112) der Zugriffsdaten, deren Werte von den bestimmten ein oder mehreren Anomalien umfasst sind, und das Überwachen der für die identifizierten Zugriffsparameter (112) in den Zugriffsdatensätzen (152, 182) protokollierten Werte durch den ersten Server (100) erfolgt, wobei auf das Detektieren des Angriffs (110) hin durch den ersten Server (100) ein oder mehrere Server (130, 160) der Mehrzahl von Servern (100, 130, 160) bestimmt werden, auf welche der Angriff (110) erfolgt,

wobei für die ein oder mehreren bestimmten Server (130, 160) durch den ersten Server (100) beispielsweise jeweils ein Warnhinweis ausgegeben wird, und/oder

wobei die Zuordnung (108) der auszuführenden Gegenmaßnahmen (114) zu dem Angriff (110) beispielsweise in dem ersten Server der Servergruppe gespeichert wird und auf das Detektieren des Angriffs (110) durch den ersten Server hin beispielsweise ein oder mehrere Befehle automatisch an die ein oder mehrere bestimmten Server der Servergruppe gesendet werden, welche die durch die ein oder mehrere bestimmten Server auszuführenden Gegenmaßnahmen (114) definieren, welche dem Angriff (110) zugeordneten sind.

9. Verfahren nach einem der vorangehenden Ansprüche, wobei das Verfahren unter Verwendung eines Angriffserkennungssystems ausgeführt wird,

wobei es sich bei dem Angriffserkennungssystem beispielsweise um eines der folgenden Systeme handelt: ein hostbasiertes Angriffserkennungssystem, ein netzwerkbasiertes Angriffserkennungssystem, ein hybrides Angriffserkennungssystem.

10. Computersystem (100, 130, 160) mit einem Prozessor (102, 132, 162) und einem Speicher (106, 136, 166), wobei in dem Speicher (106, 136, 166) Programminstruktionen (104, 134, 164) gespeichert sind, wobei ein Ausführen der Programminstruktionen (104, 134, 164) durch den Prozessor (102, 132, 162) den Prozessor (102, 132, 162) dazu veranlasst das Computersystem (100, 130, 160) so zu steuern, dass das Computersystem (100, 130, 160) ein Verfahren zum Detektieren eines Angriffs (110) auf ein zu schützendes Computersystem (100, 130, 160, 198) unter Verwendung von protokollierten Zugriffsdaten (122, 152, 182) des zu schützenden Computersystems (100, 130, 160, 198) ausführt, wobei das Verfahren umfasst:

• Protokollieren der Zugriffsdaten (122, 152, 182), wobei das Protokollieren der Zugriffsdaten (122, 152, 182) ein Speichern von Zugriffsdatensätzen in ein oder mehreren Datenbanken (120, 150, 180, 194) umfasst, wobei die Zugriffsdatensätze im Zuge von Zugriffen auf das zu schützende Computersystem (100, 130, 160, 198) erfasste Zugriffsdaten mit Werten zu einer Mehrzahl von Zugriffsparametern umfassen, wobei die Zugriffsdatensätze ferner jeweils eine Zeitangabe umfassen, welche angibt, wann die protokollierten Werte erfasst wurden,
• auf ein Auftreten eines Angriffs auf das zu schützende Computersystem (100, 130, 160, 198) hin, Ausführen einer Anomalieanalyse, wobei die Anomalieanalyse ein Bestimmen von ein oder mehreren Anomalien innerhalb erster Zugriffsdatensätze der protokollierten Zugriffsdatensätze umfasst, deren protokollierte Zugriffsdaten innerhalb eines den Angriff (110) zumindest teilweise umfassenden vordefinierten ersten Zeitintervalls erfasst wurden, wobei die Anomalien jeweils eine Kombination von Werten von Zugriffsparametern sind, für welche sich ein erster Unterschied in einer ersten Wahrscheinlichkeit eines Auftretens der entsprechenden Werte innerhalb der ersten Zugriffsdatensätze mindestens um einen vordefinierten Größenwert von einem zweiten Unterschied in einer zweiten Wahrscheinlichkeit eines Auftretens der entsprechenden Werte innerhalb von zweiten Zugriffsdatensätze der protokollierten Zugriffsdatensätze unterscheidet, deren Werte in einem vordefinierten zweiten Zeitintervall erfasst wurden,
• Identifizieren derjenigen Zugriffsparameter (112) der Zugriffsdaten von Zugriffen auf das zu schützende Computersystem (100, 130, 160, 198), deren Werte von den bestimmten ein oder mehreren Anomalien umfasst sind,
• Überwachen der für die identifizierten Zugriffsparameter (112) der Zugriffsdaten in den Zugriffsdatensätzen protokollierten Werte, wobei das Überwachen ein Detektieren eines erneuten Angriffs (110) umfasst auf ein Erfassen von Werten für die identifizierten Zugriffsparameter (112) der Zugriffsdaten von Zugriffen auf das zu schützende Computersystem (100, 130, 160, 198) innerhalb eines vordefinierten dritten Zeitintervalls, für welche sich ein dritter Unterschied in einer dritten Wahrscheinlichkeit eines Auftretens der entsprechenden Werte innerhalb von dritten Zugriffsdatensätzen der protokollierten Zugriffsdatensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Zugriffsdatensätze unterscheidet.

**11.** Computersystem (100, 130, 160) nach Anspruch 10, wobei es sich bei den Kombinationen von Werten jeweils um Wertepaare handelt.

**12.** Computersystem (100, 130, 160) nach Anspruch 11, wobei der Unterschied in der Wahrscheinlichkeit eines Auftretens eines ersten Werts $x_0$ eines ersten Zugriffsparameters X eines Wertepaars und eines zweiten Werts $y_0$ eines zweiten Zugriffsparameters Y des Wertepaars innerhalb der Zugriffsdatensätze eines der vordefinierten Zeitintervalle $\Delta t_i$ definiert ist als

$$\frac{1}{2}\left\|p_{Z|X=x_0} - p_{Z|Y=y_0}\right\|_1 = \frac{1}{2} \cdot \sum_Z \sum_{z \in V(Z)} \left|p_{Z|X=x_0}(z) - p_{Z|Y=y_0}(z)\right|,$$

wobei die Summation über alle weiteren dritten Zugriffsparameter Z und alle dritten Werte z läuft, welche für den weiteren dritten Zugriffsparameter Z innerhalb der Zugriffsdatensätze der ein oder mehreren Datenbanken (120, 150, 180, 194) protokolliert sind,
wobei eine Wahrscheinlichkeit eines Auftretens eines dritten Werts z eines weiteren dritten Zugriffsparameters Z in Kombination mit dem ersten Wert $x_0$ des ersten Zugriffsparameters X definiert ist als

$$p_{Z|X=x_0}(z) = \frac{\left|I_Z(z) \cap I_X^{\triangle t_i}(x_0)\right|}{\left|I_X^{\triangle t_i}(x_0)\right|},$$

wobei $I_X^{\triangle t_i}(x_0)$ die Menge der Zugriffsdatensätze des entsprechenden vordefinierten Zeitintervalls $\Delta t_i$ ist, welche den ersten Wert $x_0$ für den ersten Zugriffsparameter X umfassen, wobei $I_z(z)$ die Menge der Zugriffsdatensätze der ein oder mehreren Datenbanken (120, 150, 180, 194) ist, welche den dritten Wert z für den weiteren dritten Zugriffsparameter Z umfassen,
wobei eine Wahrscheinlichkeit eines Auftretens eines dritten Werts z eines weiteren dritten Zugriffsparameters Z in Kombination mit dem zweiten Wert $y_0$ des zweiten Zugriffsparameters Y definiert ist als

$$p_{Z|Y=y_0}(z) = \frac{\left| I_Z(z) \cap I_Y^{\triangle t_i}(y_0) \right|}{\left| I_Y^{\triangle t_i}(y_0) \right|},$$

wobei $I_Y^{\triangle t_i}(y_0)$ die Menge der Zugriffsdatensätze des entsprechenden vordefinierten Zeitintervalls $\triangle t_i$ ist, welche den zweiten Wert $y_0$ für den zweiten Zugriffsparameter Y umfassen.

13. Computersystem (100, 130, 160) nach Anspruch 11, wobei der Unterschied in der Wahrscheinlichkeit des Auftretens des ersten Werts $x_0$ des ersten Zugriffsparameters X des Wertepaars und des zweiten Werts $y_0$ des zweiten Zugriffsparameters Y des Wertepaars innerhalb der Zugriffsdatensätze eines der vordefinierten Zeitintervalle $\triangle t_i$ definiert ist als ein redundanzfreier Unterschied der Form

$$\frac{1}{2}\left( \left\| p_{Z|X=x_0 \wedge Y=y_0} - p_{Z|X=x_0} \right\|_1 - \left\| p_{Z|X=x_0 \wedge Y=y_0} - p_{Z|Y=y_0} \right\|_1 \right),$$

wobei

$$\frac{1}{2}\left\| p_{Z|X=x_0 \wedge Y=y_0} - p_{Z|X=x_0} \right\|_1 = \frac{1}{2} \cdot \sum_Z \sum_{z \in V(Z)} \left| p_{Z|X=x_0 \wedge Y=y_0}(z) - p_{Z|X=x_0}(z) \right|$$

und

$$\frac{1}{2}\left\| p_{Z|X=x_0 \wedge Y=y_0} - p_{Z|Y=y_0} \right\|_1 = \frac{1}{2} \cdot \sum_Z \sum_{z \in V(Z)} \left| p_{Z|X=x_0 \wedge Y=y_0}(z) - p_{Z|Y=y_0}(z) \right|,$$

wobei

$$p_{Z|X=x_0 \wedge Y=y_0}(z) = \frac{\left| I_Z(z) \cap I_X^{\triangle t_i}(x_0) \cap I_Y^{\triangle t_i}(y_0) \right|}{\left| I_X^{\triangle t_i}(x_0) \cap I_Y^{\triangle t_i}(y_0) \right|}.$$

14. Verteiltes Computersystem (198), welches eine Mehrzahl von Servern (100, 130, 160) umfasst, wobei es sich bei einem ersten Server (100) der Mehrzahl von Servern (100, 130, 160) um das Computersystem (100) nach einem der Ansprüche 10 bis 13 handelt, wobei es sich bei dem zu schützenden Computersystem um das verteilte Computersystem (198) handelt, wobei auf ein oder mehreren der Server (100, 130, 160) der Mehrzahl von Servern (100, 130, 160) jeweils Zugriffsdaten (152, 182) protokolliert werden.

15. Verteiltes Computersystem (198) nach Anspruch 14, wobei das Ausführen der Anomalieanalyse und das Identifizieren derjenigen Zugriffsparameter (112) der Zugriffsdaten, deren Werte von den bestimmten ein oder mehreren Anomalien umfasst sind, durch den ersten Server (100) erfolgt und die identifizierten Zugriffsparameter (112) von dem ersten Server (100) an die weiteren Server (130, 160) der Mehrzahl von Servern (100, 130, 160) des verteilten Computersystems (198) weitergeleitet werden, wobei die weiteren Server (130, 160) die identifizierten Zugriffsparameter (112) jeweils speichern, wobei das Überwachen der für die identifizierten Zugriffsparameter (112) in den Zugriffsdatensätzen (152, 182) protokollierten Werte jeweils durch den die entsprechenden Werte protokollierenden Server (100, 130, 160) der Mehrzahl von Servern (100, 130, 160) erfolgt, oder
wobei das Ausführen der Anomalieanalyse, das Identifizieren derjenigen Zugriffsparameter (112) der Zugriffsdaten, deren Werte von den bestimmten ein oder mehreren Anomalien umfasst sind, und das Überwachen der für die identifizierten Zugriffsparameter (112) in den Zugriffsdatensätzen (152, 182) protokollierten Werte durch den ersten Server (100) erfolgt, wobei auf das Detektieren des Angriffs (110) hin durch den ersten Server (100) ein oder mehrere Server (100, 130, 160) der Mehrzahl von Servern (100, 130, 160) bestimmt werden, auf welche der Angriff (110) erfolgt.

**Claims**

1. A method for detecting an attack (110) on a computer system (100, 130, 160, 198) to be protected using logged access data (122, 152, 182) of accesses to the computer system (100, 130, 160, 198) to be protected, the method comprising:

   • logging the access data (122, 152, 182), wherein the logging of the access data (122, 152, 182) comprises storing access data records in one or more databases (120, 150, 180, 194), wherein the access data records comprise access data recorded during accesses to the computer system (100, 130, 160, 198) to be protected with values for a plurality of access parameters, wherein the access data records further comprise a time indication indicating when the logged values were recorded,
   • in response to an occurrence of an attack on the computer system (100, 130, 160, 198) to be protected, performing an anomaly analysis, wherein the anomaly analysis comprises determining one or more anomalies within first access data records of the logged access data records whose logged access data were recorded within a predefined first time interval at least partially comprising the attack (110), wherein the anomalies are each a combination of values of access parameters for which a first difference in a first probability of occurrence of the corresponding values within the first access data records differs by at least a predefined magnitude value from a second difference in a second probability of occurrence of the corresponding values within second access data records of the logged access data records, the values of which were recorded within a predefined second time interval,
   • identifying those access parameters (112) of the access data of accesses to the computer system (100, 130, 160, 198) to be protected whose values are comprised by the determined one or more anomalies,
   • monitoring the values logged for the identified access parameters (112) of the access data in the access data records, wherein the monitoring comprises detecting a further attack (110) upon detecting values for the identified access parameters (112) of the access data of accesses to the computer system (100, 130, 160, 198) to be protected within a predefined third time interval, for which a third difference in a third probability of occurrence of the corresponding values within third access data records of the logged access data records, whose logged values are recorded within the predefined third time interval, differs by at least the predefined magnitude value from the second difference in the second probability of occurrence of the corresponding values within the second access data records.

2. The method of claim 1, wherein the combinations of values are pairs of values.

3. The method of claim 2, wherein the difference in the probability of occurrence of a first value $x_0$ of a first access parameter X of a value pair and of a second value $y_0$ of a second access parameter Y of the value pair within the access data records of one of the predefined time intervals $\Delta t_i$ is defined as

$$\frac{1}{2}\left\|p_{Z|X=x_0} - p_{Z|Y=y_0}\right\|_1 = \frac{1}{2} \cdot \Sigma_Z \Sigma_{z \in V(Z)} \left|p_{Z|X=x_0}(z) - p_{Z|Y=y_0}(z)\right|,$$

wherein the summation runs over all further third access parameters Z and all third values z which are logged for the further third access parameter Z within the access data records of the one or more databases (120, 150, 180, 194),
wherein a probability of occurrence of a third value z of a further third access parameter Z in combination with the first value $x_0$ of the first access parameter X is defined as

$$p_{Z|X=x_0}(z) = \frac{\left|I_Z(z) \cap I_X^{\Delta t_i}(x_0)\right|}{\left|I_X^{\Delta t_i}(x_0)\right|},$$

wherein $I_X^{\Delta t_i}(x_0)$ is the set of access data records of the corresponding predefined time interval $\Delta t_i$ comprising the first value $x_0$ for the first access parameter X, wherein $I_Z(z)$ is the set of access data records of the one or more databases (120, 150, 180, 194) comprising the third value z for the further third access parameter Z,

wherein a probability of occurrence of a third value z of a further third access parameter Z in combination with the second value $y_0$ of the second access parameter Y is defined as

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

wherein $I_Y^{\Delta t_i}(y_0)$ is the set of access data records of the corresponding predefined time interval $\Delta t_i$ which comprise the second value $y_0$ for the second access parameter Y.

4. The method of claim 2, wherein the difference in the probability of occurrence of the first value $x_0$ of the first access parameter X of the value pair and the second value $y_0$ of the second access parameter Y of the value pair within the access data records of one of the predefined time intervals $\Delta t_i$ is defined as a redundancy-free difference of the form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

wherein

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|$$

and

$$\frac{1}{2}\left\|p_{Z|X=x_0 \wedge Y=y_0} - p_{Z|Y=y_0}\right\|_1 = \frac{1}{2} \cdot \sum_Z \sum_{z \in V(Z)} \left|p_{Z|X=x_0 \wedge Y=y_0}(z) - p_{Z|Y=y_0}(z)\right|,$$

wherein

$$p_{Z|X=x_0 \wedge Y=y_0}(z) = \frac{\left|I_Z(z) \cap I_X^{\Delta t_i}(x_0) \cap I_Y^{\Delta t_i}(y_0)\right|}{\left|I_X^{\Delta t_i}(x_0) \cap I_Y^{\Delta t_i}(y_0)\right|}.$$

5. The method of any of the preceding claims, wherein upon the detecting of the attack (110), a warning message is issued, and/or

wherein the access data (122, 152, 182) comprises one or more of the following data: log data relating of accesses to the computer system to be protected, kernel data of accesses to the computer system to be protected, data from packets sent to or from the computer system to be protected, and/or
wherein countermeasures (114) to be executed to prevent the attack (110) are specified, wherein an assignment (108) of the countermeasures (114) to be executed to the attack (110) is stored, wherein upon the detecting of the attack (110), the countermeasures (114) assigned to the attack (110) are automatically executed,
wherein the countermeasures (114) assigned to the attack (110) comprise, for example, one or more of the following countermeasures:

- interrupting a connection through which the attack is carried out;
- blocking instructions sent to the computer system (100, 130, 160, 198) to be protected in the course of the attack;
- rejecting data packets which comprise the recorded values for the identified access parameters (112) of the access data (122, 152, 182) of accesses to the computer system (100, 130, 160, 198) to be protected within a predefined third time interval, for which the third difference in the third probability of occurrence of the corresponding values within the third access data records of the logged access data records differs by at least the predefined magnitude value from the second difference in the second probability of occurrence of the corresponding values within the second access data records;

• modifying the access data (122, 152, 182) of accesses to the computer system (100, 130, 160, 198) to be protected within the predefined third time interval, wherein the modifying of the access data comprises modifying the recorded values for the identified access parameters (112) of the access data of accesses to the computer system (100, 130, 160, 198) to be protected for which the third difference in the third probability of occurrence of the corresponding values within the third access data records of the logged access data records differs by at least the predefined magnitude value from the second difference in the second probability of occurrence of the corresponding values within the second access data records, and/or

wherein the detecting of the attack (110) is based on recording the values for a predetermined minimum number of access parameters of the identified access parameters (112) of the access data (122, 152, 182) of accesses to the computer system (100, 130, 160, 198) to be protected within the predefined third time interval, for which the third difference in the third probability of occurrence of the corresponding values within the third access data records differs by at least the predefined magnitude value from the second difference in the second probability of occurrence of the corresponding values within the second access data records,

wherein the detecting of the attack (110) is performed, for example, upon acquiring the values for all identified access parameters (112) of the access data of accesses to the computer system (100, 130, 160, 198) to be protected within the predefined third time interval, for which the third difference in the third probability of occurrence of the corresponding values within the third access data records differs by at least the predefined magnitude value from the second difference in the second probability of occurrence of the corresponding values within the second access data records, and/or

wherein the predefined magnitude value is a positive magnitude value, a negative magnitude value, or the absolute value of the difference between the two corresponding differences in the probabilities of occurrence of the corresponding values, and/or

wherein the predefined magnitude value is a percentage magnitude value or an absolute magnitude value, and/or

wherein the storing of the access data records comprises creating and storing a normalized index (123, 124, 125) of the values comprised in the access data records for the access parameters of the access data of accesses to the computer system (100, 130, 160, 198) to be protected, wherein the anomaly analysis is performed using the normalized index (123, 124, 125), and/or

wherein the method is executed by one or more network components of a network, by one or more additional computer systems, or by the computer system to be protected itself.

6. The method of any of the preceding claims, wherein the computer system to be protected is a distributed computer system (198) comprising a plurality of servers (100, 130, 160), wherein access data (152, 182) is logged on each of the servers of the plurality of servers (100, 130, 160).

7. The method of claim 6, wherein the performing of the anomaly analysis and the identifying of the access parameters (112) of the access data are executed by a first server (100) of the plurality of servers (100, 130, 160), and the identified access parameters (112) of the access data, whose values are comprised by the determined one or more anomalies, are forwarded from the first server to the other servers (130, 160) of the plurality of servers (100, 130, 160) of the distributed computer system (198), wherein the other servers (130, 160) store the identified access parameters (112), wherein the monitoring of the values logged for the identified access parameters (112) in the access data records (152, 182) is executed by the server (130, 160) of the plurality of servers (100, 130, 160) logging the corresponding values, wherein the assignment (108) of the countermeasures (114) to be executed to the attack (110) is stored, for example, in the individual servers (130, 160) of the plurality of servers (100, 130, 160) and, upon the detecting of the attack (110) by a server (130, 160) of the plurality of servers (100, 130, 160), the stored countermeasures (114) assigned to the attack (110) are, for example, automatically executed by the corresponding server (130, 160) of the plurality of servers (100, 130, 160).

8. The method of claim 6, wherein the performing of the anomaly analysis, the identifying of those access parameters (112) of the access data whose values are comprised by the determined one or more anomalies, and the monitoring of the values logged for the identified access parameters (112) in the access data records (152, 182) are executed by the first server (100), wherein, upon the detecting of the attack (110) by the first server (100), one or more servers (130, 160) of the plurality of servers (100, 130, 160) are determined on which the attack (110) is being carried out,

wherein, for example, a warning message is issued by the first server (100) for each of the one or more determined servers (130, 160), and/or

wherein the assignment (108) of the countermeasures (114) to be executed to the attack (110) is stored, for example, in the first server of the server group, and upon the detecting of the attack (110) by the first server, for example, one or more commands are automatically sent to the one or more determined servers of the server group, which define the countermeasures (114) to be executed by the one or more determined servers, which are assigned to the attack (110).

9. The method of any of the preceding claims, wherein the method is executed using an attack detection system, wherein the attack detection system is, for example, one of the following systems: a host-based attack detection system, a network-based attack detection system, a hybrid attack detection system.

10. A computer system (100, 130, 160) comprising a processor (102, 132, 162) and a memory (106, 136, 166), wherein program instructions (104, 134, 164) are stored in the memory (106, 136, 166), wherein an execution of the program instructions (104, 134, 164) by the processor (102, 132, 162) causes the processor (102, 132, 162) to control the computer system (100, 130, 160) such that the computer system (100, 130, 160) executes a method for detecting an attack (110) on a computer system (100, 130, 160, 198) to be protected using logged access data (122, 152, 182) of the computer system (100, 130, 160, 198) to be protected, the method comprising:

   • logging the access data (122, 152, 182), wherein the logging of the access data (122, 152, 182) comprises storing access data records in one or more databases (120, 150, 180, 194), wherein the access data records comprise access data recorded during accesses to the computer system (100, 130, 160, 198) to be protected with values for a plurality of access parameters, wherein the access data records further comprise a time indication indicating when the logged values were recorded,
   • in response to an occurrence of an attack on the computer system (100, 130, 160, 198) to be protected, performing an anomaly analysis, wherein the anomaly analysis comprises determining one or more anomalies within first access data records of the logged access data records whose logged access data was recorded within a predefined first time interval at least partially comprising the attack (110), wherein the anomalies are each a combination of values of access parameters for which a first difference in a first probability of occurrence of the corresponding values within the first access data records differs by at least a predefined magnitude value from a second difference in a second probability of occurrence of the corresponding values within second access data records of the logged access data records, the values of which were recorded within a predefined second time interval,
   • identifying those access parameters (112) of the access data of accesses to the computer system (100, 130, 160, 198) to be protected whose values are comprised by the determined one or more anomalies,
   • monitoring the values logged for the identified access parameters (112) of the access data in the access data records, wherein the monitoring comprises detecting a further attack (110) upon detecting values for the identified access parameters (112) of the access data of accesses to the computer system (100, 130, 160, 198) to be protected within a predefined third time interval, for which a third difference in a third probability of occurrence of the corresponding values within third access data records of the logged access data records, whose logged values are recorded within the predefined third time interval, differs by at least the predefined magnitude value from the second difference in the second probability of occurrence of the corresponding values within the second access data records.

11. The computer system (100, 130, 160) of claim 10, wherein the combinations of values are pairs of values.

12. The computer system (100, 130, 160) of claim 11, wherein the difference in the probability of occurrence of a first value $x_0$ of a first access parameter X of a value pair and of a second value $y_0$ of a second access parameter Y of the value pair within the access data records of one of the predefined time intervals $\Delta t_i$ is defined as

$$\frac{1}{2}\left\|p_{Z|X=x_0} - p_{Z|Y=y_0}\right\|_1 = \frac{1}{2} \cdot \sum_Z \sum_{z \in V(Z)}\left|p_{Z|X=x_0}(z) - p_{Z|Y=y_0}(z)\right|,$$

wherein the summation runs over all further third access parameters Z and all third values z which are logged for the further third access parameter Z within the access data records of the one or more databases (120, 150, 180, 194),
wherein a probability of occurrence of a third value z of a further third access parameter Z in combination with the first value $x_0$ of the first access parameter X is defined as

$$p_{Z|X=x_0}(z) = \frac{\left|I_Z(z) \cap I_X^{\Delta t_i}(x_0)\right|}{\left|I_X^{\Delta t_i}(x_0)\right|},$$

wherein $I_X^{\Delta t_i}(x_0)$ is the set of access data records of the corresponding predefined time interval $\Delta t_i$ comprising the first value $x_0$ for the first access parameter X, wherein $I_Z(z)$ is the set of access data records of the one or more databases (120, 150, 180, 194) comprising the third value z for the further third access parameter Z, wherein a probability of occurrence of a third value z of a further third access parameter Z in combination with the second value $y_0$ of the second access parameter Y is defined as

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

wherein $I_Y^{\Delta t_i}(y_0)$ is the set of access data records of the corresponding predefined time interval $\Delta t_i$ which comprise the second value $y_0$ for the second access parameter Y.

13. The computer system (100, 130, 160) of claim 11, wherein the difference in the probability of occurrence of the first value $x_0$ of the first access parameter X of the value pair and the second value $y_0$ of the second access parameter Y of the value pair within the access data records of one of the predefined time intervals $\Delta t_i$ is defined as a redundancy-free difference of the form

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

wherein

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|$$

and

$$\frac{1}{2}\left\|p_{Z|X=x_0 \wedge Y=y_0} - p_{Z|Y=y_0}\right\|_1 = \frac{1}{2} \cdot \Sigma_Z \Sigma_{z \in V(Z)} \left|p_{Z|X=x_0 \wedge Y=y_0}(z) - p_{Z|Y=y_0}(z)\right|,$$

wherein

$$p_{Z|X=x_0 \wedge Y=y_0}(z) = \frac{\left|I_Z(z) \cap I_X^{\Delta t_i}(x_0) \cap I_Y^{\Delta t_i}(y_0)\right|}{\left|I_X^{\Delta t_i}(x_0) \cap I_Y^{\Delta t_i}(y_0)\right|}.$$

14. A distributed computer system (198) comprising a plurality of servers (100, 130, 160), wherein a first server (100) of the plurality of servers (100, 130, 160) is the computer system (100) according to any one of claims 10 to 13, wherein the computer system to be protected is the distributed computer system (198), wherein access data (152, 182) is logged on each of one or more of the servers (100, 130, 160) of the plurality of servers (100, 130, 160).

15. The distributed computer system (198) of claim 14, wherein the performing of the anomaly analysis and the identifying of those access parameters (112) of the access data whose values are comprised by the determined one or more anomalies are executed by the first server (100) and the identified access parameters (112) are forwarded by the first server (100) to the other servers (130, 160) of the plurality of servers (100, 130, 160) of the distributed computer system (198), wherein the other servers (130, 160) each store the identified access parameters (112), wherein the monitoring of the values logged for the identified access parameters (112) in the access data records (152, 182) is executed by the server (100, 130, 160) of the plurality of servers (100, 130, 160) that logs the corresponding values, or

wherein the performing of the anomaly analysis, the identifying of those access parameters (112) of the access data whose values are comprised by the determined one or more anomalies, and the monitoring of the values logged for the identified access parameters (112) in the access data records (152, 182) are executed by the first server (100), wherein, upon the detecting of the attack (110) by the first server (100), one or more servers (100, 130, 160) of the plurality of servers (100, 130, 160) are determined on which the attack (110) is being carried out.

**Revendications**

1. Procédé de détection d'une attaque (110) sur un système informatique à protéger (100, 130, 160, 198) en utilisant des données d'accès journalisées (122, 152, 182) d'accès au système informatique à protéger (100, 130, 160, 198), le procédé comprenant :

• la journalisation des données d'accès (122, 152, 182), la journalisation des données d'accès (122, 152, 182) comprenant le stockage d'ensembles de données d'accès dans une ou plusieurs bases de données (120, 150, 180, 194), les ensembles de données d'accès comprenant des données d'accès acquises au cours d'accès au système informatique à protéger (100, 130, 160, 198) avec des valeurs d'une pluralité de paramètres d'accès, les ensembles de données d'accès comprenant en outre chacun une indication de temps qui indique quand les valeurs journalisées ont été acquises,
• en réponse à une occurrence d'une attaque sur le système informatique à protéger (100, 130, 160, 198), l'exécution d'une analyse d'anomalie, l'analyse d'anomalie comprenant la détermination d'une ou plusieurs anomalies dans des premiers ensembles de données d'accès des ensembles de données d'accès journalisés dont les données d'accès journalisées ont été acquises dans un premier intervalle de temps prédéfini comprenant au moins en partie l'attaque (110), les anomalies étant chacune une combinaison de valeurs de paramètres d'accès pour lesquelles une première différence dans une première probabilité d'occurrence des valeurs correspondantes dans les premiers ensembles de données d'accès diffère d'au moins une valeur de grandeur prédéfinie d'une deuxième différence dans une deuxième probabilité d'occurrence des valeurs correspondantes dans des deuxièmes ensembles de données d'accès des ensembles de données d'accès journalisés dont les valeurs ont été acquises dans un deuxième intervalle de temps prédéfini,
• l'identification des paramètres d'accès (112) des données d'accès au système informatique à protéger (100, 130, 160, 198) dont les valeurs sont comprises dans les une ou plusieurs anomalies déterminées,
• la surveillance des valeurs journalisées pour les paramètres d'accès identifiés (112) des données d'accès dans les ensembles de données d'accès, la surveillance comprenant la détection d'une nouvelle attaque (110) pour une acquisition de valeurs pour les paramètres d'accès identifiés (112) des données d'accès au système informatique à protéger (100, 130, 160, 198) dans un troisième intervalle de temps prédéfini pour lesquelles une troisième différence dans une troisième probabilité d'occurrence des valeurs correspondantes dans des troisièmes ensembles de données d'accès des ensembles de données d'accès journalisés dont les valeurs journalisées sont acquises dans le troisième intervalle de temps prédéfini diffère d'au moins la valeur de grandeur prédéfinie de la deuxième différence dans la deuxième probabilité d'occurrence des valeurs correspondantes dans les deuxièmes ensembles de données d'accès.

2. Procédé selon la revendication 1, dans lequel les combinaisons de valeurs sont chacune des paires de valeurs.

3. Procédé selon la revendication 2, dans lequel la différence dans la probabilité d'occurrence d'une première valeur $x_0$ d'un premier paramètre d'accès X d'une paire de valeurs et d'une deuxième valeur $y_0$ d'un deuxième paramètre d'accès Y de la paire de valeurs dans les ensembles de données d'accès de l'un des intervalles de temps prédéfinis $\Delta t_i$ est définie par

$$\frac{1}{2}\left\|p_{Z|X=x_0} - p_{Z|Y=y_0}\right\|_1 = \frac{1}{2} \cdot \sum_Z \sum_{z \in V(Z)} \left|p_{Z|X=x_0}(z) - p_{Z|Y=y_0}(z)\right|,$$

la sommation s'étendant sur tous les autres troisièmes paramètres d'accès Z et toutes les troisièmes valeurs z qui sont journalisées pour l'autre troisième paramètre d'accès Z dans les ensembles de données d'accès des une ou plusieurs bases de données (120, 150, 180, 194),
une probabilité d'occurrence d'une troisième valeur z d'un autre troisième paramètre d'accès Z en combinaison avec la première valeur $x_0$ du premier paramètre d'accès X étant définie par

$$p_{Z|X=x_0}(z) = \frac{\left|I_Z(z) \cap I_X^{\triangle t_i}(x_0)\right|}{\left|I_X^{\triangle t_i}(x_0)\right|},$$

$I_X^{\triangle t_i}(x_0)$ étant le set des ensembles de données d'accès de l'intervalle de temps prédéfini $\Delta t_i$ correspondant qui comprennent la première valeur $x_0$ pour le premier paramètre d'accès X, $I_z(z)$ étant le set des ensembles de données d'accès des une ou plusieurs bases de données (120, 150, 180, 194) qui comprennent la troisième valeur z pour l'autre troisième paramètre d'accès Z,

une probabilité d'occurrence d'une troisième valeur z d'un autre troisième paramètre d'accès Z en combinaison avec la deuxième valeur $y_0$ du deuxième paramètre d'accès Y étant définie par

$$p_{Z|Y=y_0}(z) = \frac{\left|I_Z(z) \cap I_Y^{\triangle t_i}(y_0)\right|}{\left|I_Y^{\triangle t_i}(y_0)\right|},$$

$I_Y^{\triangle t_i}(y_0)$ étant le set des ensembles de données d'accès de l'intervalle de temps prédéfini $\Delta t_i$ correspondant qui comprennent la deuxième valeur $y_0$ pour le deuxième paramètre d'accès Y.

4. Procédé selon la revendication 2, dans lequel la différence dans la probabilité d'occurrence de la première valeur $x_0$ du premier paramètre d'accès X de la paire de valeurs et de la deuxième valeur $y_0$ du deuxième paramètre d'accès Y de la paire de valeurs dans les ensembles de données d'accès de l'un des intervalles de temps prédéfinis $\Delta t_i$ est définie par une différence sans redondance de la forme

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

dans laquelle

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)} \left|p_{Z|X=x_0 \wedge Y=y_0}(z) - p_{Z|X=x_0}(z)\right|$$

et

$$\frac{1}{2}\left\|p_{Z|X=x_0 \wedge Y=y_0} - p_{Z|Y=y_0}\right\|_1 = \frac{1}{2} \cdot \sum_Z \sum_{z \in V(Z)} \left|p_{Z|X=x_0 \wedge Y=y_0}(z) - p_{Z|Y=y_0}(z)\right|,$$

dans laquelle

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

5. Procédé selon l'une des revendications précédentes, dans lequel un avertissement est émis en réponse à la détection de l'attaque (110), et/ou

dans lequel les données d'accès (122, 152, 182) comprennent une ou plusieurs des données suivantes : des données de journal d'accès au système informatique à protéger, des données de noyau d'accès au système informatique à protéger, des données de paquets qui sont envoyés au système informatique à protéger ou par le système informatique à protéger, et/ou
dans lequel des contre-mesures à exécuter (114) sont définies pour éviter l'attaque (110), dans lequel une association (108) des contre-mesures à exécuter (114) à l'attaque (110) est mémorisée, dans lequel les contre-mesures (114) associées à l'attaque (110) sont exécutées automatiquement en réponse à la détection de l'attaque (110),

dans lequel les contre-mesures (114) associées à l'attaque (110) comprennent par exemple une ou plusieurs des contre-mesures suivantes :

- une interruption d'une connexion par le biais de laquelle l'attaque a lieu ;
- un blocage d'instructions qui sont envoyées au cours de l'attaque au système informatique à protéger (100, 130, 160, 198) ;
- un rejet de paquets de données qui comprennent les valeurs acquises pour les paramètres d'accès identifiés (112) des données d'accès (122, 152, 182) d'accès au système informatique à protéger (100, 130, 160, 198) dans un troisième intervalle de temps prédéfini pour lesquelles la troisième différence dans la troisième probabilité d'occurrence des valeurs correspondantes dans les troisièmes ensembles de données d'accès des ensembles de données d'accès journalisés diffère d'au moins la valeur de grandeur prédéfinie de la deuxième différence dans la deuxième probabilité d'occurrence des valeurs correspondantes dans les deuxièmes ensembles de données d'accès ;
- une modification des données d'accès (122, 152, 182) d'accès au système informatique à protéger (100, 130, 160, 198) dans le troisième intervalle de temps prédéfini, la modification des données d'accès comprenant une modification des valeurs acquises pour les paramètres d'accès identifiés (112) des données d'accès d'accès au système informatique à protéger (100, 130, 160, 198) pour lesquelles la troisième différence dans la troisième probabilité d'occurrence des valeurs correspondantes dans les troisièmes ensembles de données d'accès des ensembles de données d'accès journalisés diffère d'au moins la valeur de grandeur prédéfinie de la deuxième différence dans la deuxième probabilité d'occurrence des valeurs correspondantes dans les deuxièmes ensembles de données d'accès, et/ou

dans lequel la détection de l'attaque (110) a lieu pour une acquisition des valeurs pour un nombre minimal prédéterminé de paramètres d'accès des paramètres d'accès identifiés (112) des données d'accès (122, 152, 182) d'accès au système informatique à protéger (100, 130, 160, 198) dans le troisième intervalle de temps prédéfini pour lesquelles la troisième différence dans la troisième probabilité d'occurrence des valeurs correspondantes dans les troisièmes ensembles de données d'accès diffère d'au moins la valeur de grandeur prédéfinie de la deuxième différence dans la deuxième probabilité d'occurrence des valeurs correspondantes dans les deuxièmes ensembles de données d'accès,

dans lequel la détection de l'attaque (110) a lieu par exemple pour une acquisition des valeurs pour tous les paramètres d'accès identifiés (112) des données d'accès d'accès au système informatique à protéger (100, 130, 160, 198) dans le troisième intervalle de temps prédéfini pour lesquelles la troisième différence dans la troisième probabilité d'occurrence des valeurs correspondantes dans les troisièmes ensembles de données d'accès diffère d'au moins la valeur de grandeur prédéfinie de la deuxième différence dans la deuxième probabilité d'occurrence des valeurs correspondantes dans les deuxièmes ensembles de données d'accès, et/ou

dans lequel la valeur de grandeur prédéfinie est une valeur de grandeur positive, une valeur de grandeur négative ou la valeur absolue de la différence entre les deux différences correspondantes dans les probabilités d'occurrence des valeurs correspondantes, et/ou

dans lequel la valeur de grandeur prédéfinie est une valeur de grandeur en pourcentage ou une valeur de grandeur absolue, et/ou

dans lequel le stockage des ensembles de données d'accès comprend une création et un stockage d'un index normalisé (123, 124, 125) des valeurs comprises par les ensembles de données d'accès pour les paramètres d'accès des données d'accès d'accès au système informatique à protéger (100, 130, 160, 198), l'analyse d'anomalie étant effectuée en utilisant l'index normalisé (123, 124, 125), et/ou

dans lequel le procédé est effectué par un ou plusieurs composants de réseau d'un réseau, par un ou plusieurs systèmes informatiques supplémentaires ou par le système informatique à protéger lui-même.

6. Procédé selon l'une des revendications précédentes, dans lequel le système informatique à protéger est un système informatique distribué (198) qui comprend une pluralité de serveurs (100, 130, 160), des données d'accès (152, 182) étant respectivement journalisées sur chacun des serveurs de la pluralité de serveurs (100, 130, 160).

7. Procédé selon la revendication 6, dans lequel l'exécution de l'analyse d'anomalie et l'identification des paramètres d'accès (112) des données d'accès sont effectuées par un premier serveur (100) de la pluralité de serveurs (100, 130, 160) et les paramètres d'accès identifiés (112) des données d'accès dont les valeurs sont comprises dans les une ou plusieurs anomalies déterminées sont transmis du premier serveur aux autres serveurs (130, 160) de la pluralité de serveurs (100, 130, 160) du système informatique distribué (198), les autres serveurs (130, 160) stockant respectivement les paramètres d'accès identifiés (112), la surveillance des valeurs journalisées pour les paramètres d'accès identifiés (112) dans les ensembles de données d'accès (152, 182) étant effectuée respectivement par le serveur (130, 160) de la pluralité de serveurs (100, 130, 160) journalisant les valeurs correspondantes,

dans lequel l'association (108) des contre-mesures à exécuter (114) à l'attaque (110) est par exemple respectivement mémorisée dans les différents serveurs (130, 160) de la pluralité de serveurs (100, 130, 160) et, en réponse à la détection de l'attaque (110) par un serveur (130, 160) de la pluralité de serveurs (100, 130, 160), par exemple les contre-mesures mémorisées (114) associées à l'attaque (110) sont exécutées automatiquement par le serveur correspondant (130, 160) de la pluralité de serveurs (100, 130, 160).

8. Procédé selon la revendication 6, dans lequel l'exécution de l'analyse d'anomalie, l'identification des paramètres d'accès (112) des données d'accès dont les valeurs sont comprises dans les une ou plusieurs anomalies déterminées et la surveillance des valeurs journalisées pour les paramètres d'accès identifiés (112) dans les ensembles de données d'accès (152, 182) sont effectuées par le premier serveur (100), un ou plusieurs serveurs (130, 160) de la pluralité de serveurs (100, 130, 160) sur lesquels l'attaque (110) est effectuée étant déterminés en réponse à la détection de l'attaque (110) par le premier serveur (100),

dans lequel un avertissement est par exemple respectivement émis pour les un ou plusieurs serveurs déterminés (130, 160) par le premier serveur (100), et/ou

dans lequel l'association (108) des contre-mesures à exécuter (114) à l'attaque (110) est par exemple mémorisée dans le premier serveur du groupe de serveurs et, en réponse à la détection de l'attaque (110) par le premier serveur, par exemple une ou plusieurs instructions sont envoyées automatiquement aux un ou plusieurs serveurs déterminés du groupe de serveurs qui définissent les contre-mesures à exécuter (114) par les un ou plusieurs serveurs déterminés qui sont associées à l'attaque (110).

9. Procédé selon l'une des revendications précédentes, dans lequel le procédé est effectué en utilisant un système de détection d'attaque,

dans lequel le système de détection d'attaque est par exemple l'un des systèmes suivants : un système de détection d'attaque basé sur un hôte, un système de détection d'attaque basé sur un réseau, un système de détection d'attaque hybride.

10. Système informatique (100, 130, 160) comprenant un processeur (102, 132, 162) et une mémoire (106, 136, 166), des instructions de programme (104, 134, 164) étant mémorisées dans la mémoire (106, 136, 166), une exécution des instructions de programme (104, 134, 164) par le processeur (102, 132, 162) amenant le processeur (102, 132, 162) à commander le système informatique (100, 130, 160) de telle sorte que le système informatique (100, 130, 160) exécute un procédé de détection d'une attaque (110) sur un système informatique à protéger (100, 130, 160, 198) en utilisant des données d'accès journalisées (122, 152, 182) du système informatique à protéger (100, 130, 160, 198), le procédé comprenant :

• la journalisation des données d'accès (122, 152, 182), la journalisation des données d'accès (122, 152, 182) comprenant le stockage d'ensembles de données d'accès dans une ou plusieurs bases de données (120, 150, 180, 194), les ensembles de données d'accès comprenant des données d'accès acquises au cours d'accès au système informatique à protéger (100, 130, 160, 198) avec des valeurs d'une pluralité de paramètres d'accès, les ensembles de données d'accès comprenant en outre chacun une indication de temps qui indique quand les valeurs journalisées ont été acquises,

• en réponse à une occurrence d'une attaque sur le système informatique à protéger (100, 130, 160, 198), l'exécution d'une analyse d'anomalie, l'analyse d'anomalie comprenant la détermination d'une ou plusieurs anomalies dans des premiers ensembles de données d'accès des ensembles de données d'accès journalisés dont les données d'accès journalisées ont été acquises dans un premier intervalle de temps prédéfini comprenant au moins en partie l'attaque (110), les anomalies étant chacune une combinaison de valeurs de paramètres d'accès pour lesquelles une première différence dans une première probabilité d'occurrence des valeurs correspondantes dans les premiers ensembles de données d'accès diffère d'au moins une valeur de grandeur prédéfinie d'une deuxième différence dans une deuxième probabilité d'occurrence des valeurs correspondantes dans des deuxièmes ensembles de données d'accès des ensembles de données d'accès journalisés dont les valeurs ont été acquises dans un deuxième intervalle de temps prédéfini,

• l'identification des paramètres d'accès (112) des données d'accès d'accès au système informatique à protéger (100, 130, 160, 198) dont les valeurs sont comprises dans les une ou plusieurs anomalies déterminées,

• la surveillance des valeurs journalisées pour les paramètres d'accès identifiés (112) des données d'accès dans les ensembles de données d'accès, la surveillance comprenant la détection d'une nouvelle attaque (110) pour une acquisition de valeurs pour les paramètres d'accès identifiés (112) des données d'accès d'accès au système informatique à protéger (100, 130, 160, 198) dans un troisième intervalle de temps prédéfini pour lesquelles une troisième différence dans une troisième probabilité d'occurrence des valeurs correspondantes dans des troisièmes ensembles de données d'accès des ensembles de données d'accès journalisés dont les valeurs journalisées sont acquises dans le troisième intervalle de temps prédéfini diffère d'au moins la valeur de grandeur prédéfinie de la deuxième différence dans la deuxième probabilité d'occurrence des valeurs correspondantes dans les deuxièmes ensembles de données d'accès.

**11.** Système informatique (100, 130, 160) selon la revendication 10, dans lequel les combinaisons de valeurs sont chacune des paires de valeurs.

**12.** Système informatique (100, 130, 160) selon la revendication 11, dans lequel la différence dans la probabilité d'occurrence d'une première valeur $x_0$ d'un premier paramètre d'accès X d'une paire de valeurs et d'une deuxième valeur $y_0$ d'un deuxième paramètre d'accès Y de la paire de valeurs dans les ensembles de données d'accès de l'un des intervalles de temps prédéfinis $\Delta t_i$ est définie par

$$\frac{1}{2}\left\|p_{Z|X=x_0} - p_{Z|Y=y_0}\right\|_1 = \frac{1}{2} \cdot \sum_Z \sum_{z \in V(Z)}\left|p_{Z|X=x_0}(z) - p_{Z|Y=y_0}(z)\right|,$$

la sommation s'étendant sur tous les autres troisièmes paramètres d'accès Z et toutes les troisièmes valeurs z qui sont journalisées pour l'autre troisième paramètre d'accès Z dans les ensembles de données d'accès des une ou plusieurs bases de données (120, 150, 180, 194),
une probabilité d'occurrence d'une troisième valeur z d'un autre troisième paramètre d'accès Z en combinaison avec la première valeur $x_0$ du premier paramètre d'accès X étant définie par

$$p_{Z|X=x_0}(z) = \frac{\left|I_Z(z) \cap I_X^{\Delta t_i}(x_0)\right|}{\left|I_X^{\Delta t_i}(x_0)\right|},$$

$I_X^{\Delta t_i}(x_0)$ étant le set des ensembles de données d'accès de l'intervalle de temps prédéfini $\Delta t_i$ correspondant qui comprennent la première valeur $x_0$ pour le premier paramètre d'accès X, $I_z(z)$ étant le set des ensembles de données d'accès des une ou plusieurs bases de données (120, 150, 180, 194) qui comprennent la troisième valeur z pour l'autre troisième paramètre d'accès Z,
une probabilité d'occurrence d'une troisième valeur z d'un autre troisième paramètre d'accès Z en combinaison avec la deuxième valeur $y_0$ du deuxième paramètre d'accès Y étant définie par

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

$I_Y^{\Delta t_i}(y_0)$ étant le set des ensembles de données d'accès de l'intervalle de temps prédéfini $\Delta t_i$ correspondant qui comprennent la deuxième valeur $y_0$ pour le deuxième paramètre d'accès Y.

**13.** Système informatique (100, 130, 160) selon la revendication 11, dans lequel la différence dans la probabilité d'occurrence de la première valeur $x_0$ du premier paramètre d'accès X de la paire de valeurs et de la deuxième valeur $y_0$ du deuxième paramètre d'accès Y de la paire de valeurs dans les ensembles de données d'accès de l'un des intervalles de temps prédéfinis $\Delta t_i$ est définie par une différence sans redondance de la forme

$$\frac{1}{2}\left(\left\|p_{Z|X=x_0 \wedge Y=y_0} - p_{Z|X=x_0}\right\|_1 - \left\|p_{Z|X=x_0 \wedge Y=y_0} - p_{Z|Y=y_0}\right\|_1\right),$$

dans laquelle

$$\frac{1}{2}\left\|p_{Z|X=x_0 \wedge Y=y_0} - p_{Z|X=x_0}\right\|_1 = \frac{1}{2} \cdot \sum_Z \sum_{z \in V(Z)}\left|p_{Z|X=x_0 \wedge Y=y_0}(z) - p_{Z|X=x_0}(z)\right|$$

et

$$\frac{1}{2} \left\| p_{Z|X=x_0 \wedge Y=y_0} - p_{Z|Y=y_0} \right\|_1 = \frac{1}{2} \cdot \sum_Z \sum_{z \in V(Z)} \left| p_{Z|X=x_0 \wedge Y=y_0}(z) - p_{Z|Y=y_0}(z) \right|,$$

dans laquelle

$$p_{Z|X=x_0 \wedge Y=y_0}(z) = \frac{\left| I_Z(z) \cap I_X^{\triangle t_i}(x_0) \cap I_Y^{\triangle t_i}(y_0) \right|}{\left| I_X^{\triangle t_i}(x_0) \cap I_Y^{\triangle t_i}(y_0) \right|}.$$

14. Système informatique distribué (198) qui comprend une pluralité de serveurs (100, 130, 160), dans lequel un premier serveur (100) de la pluralité de serveurs (100, 130, 160) est le système informatique (100) selon l'une des revendications 10 à 13, dans lequel le système informatique à protéger est le système informatique distribué (198), des données d'accès (152, 182) étant respectivement journalisées sur un ou plusieurs des serveurs (100, 130, 160) de la pluralité de serveurs (100, 130, 160).

15. Système informatique distribué (198) selon la revendication 14, dans lequel l'exécution de l'analyse d'anomalie et l'identification des paramètres d'accès (112) des données d'accès dont les valeurs sont comprises dans les une ou plusieurs anomalies déterminées sont effectuées par le premier serveur (100) et les paramètres d'accès identifiés (112) sont transmis du premier serveur (100) aux autres serveurs (130, 160) de la pluralité de serveurs (100, 130, 160) du système informatique distribué (198), les autres serveurs (130, 160) stockant respectivement les paramètres d'accès identifiés (112), la surveillance des valeurs journalisées pour les paramètres d'accès identifiés (112) dans les ensembles de données d'accès (152, 182) étant effectuée respectivement par le serveur (100, 130, 160) de la pluralité de serveurs (100, 130, 160) journalisant les valeurs correspondantes, ou
dans lequel l'exécution de l'analyse d'anomalie, l'identification des paramètres d'accès (112) des données d'accès dont les valeurs sont comprises dans les une ou plusieurs anomalies déterminées et la surveillance des valeurs journalisées pour les paramètres d'accès identifiés (112) dans les ensembles de données d'accès (152, 182) sont effectuées par le premier serveur (100), un ou plusieurs serveurs (100, 130, 160) de la pluralité de serveurs (100, 130, 160) sur lesquels l'attaque (110) est effectuée étant déterminés en réponse à la détection de l'attaque (110) par le premier serveur (100).

Fig. 1

Fig. 2

Fig. 3

**Auswahl 1**
Zugriffsparameter: X
Wert ($x_0$): 21,5

123

**Datenbank**

120

**Feldindex – Zugriffsparameter X**

124

| Wert | Zeit |
|------|------|
| 21.5 | 15:46:11 |
| 21.5 | 16:50:38 |
| 21.5 | 17:02:10 |
| 21.5 | 17:09:24 |
| 22.0 | 13:51:30 |

$\Delta t_i$

**Zugriffsdatensätze**

| BP | Wert |
|----|------|
| X | |
| Y | |
| Z | |
| ⋮ | |
| Z | |
| T | |

| BP | Wert |
|----|------|
| X | |
| Y | |
| Z | |
| ⋮ | |
| Z | |
| T | |

| BP | Wert |
|----|------|
| X | |
| Y | |
| Z | |
| ⋮ | |
| Z | |
| T | |

| BP | Wert |
|----|------|
| X | 21.5 |
| Y | 5.0 |
| Z | 673 |
| ⋮ | ⋮ |
| Z | 0.017 |
| T | 16:51:30 |

**Feldindex – Zugriffsparameter Y**

125

| Wert | Zeit |
|------|------|
| 4.5 | 15:56:47 |
| 5.0 | 16:50:38 |
| 5.0 | 17:05:21 |
| 5.5 | 15:46:11 |
| 5.5 | 15:52:31 |

$\Delta t_i$

**Auswahl 2**
Zugriffsparameter: Y
Wert ($y_0$): 5,0

122

Fig. 4

Fig. 5

| Datum | 14.1.2022 | 15.1.2022 | 16.1.2022 | 17.1.2022 |
|---|---|---|---|---|
| Abstand | 1826 | 1831 | 1814 | 1829 |

$\Delta t_{i-1}$

| Datum | 14.1.2022 | 15.1.2022 | 16.1.2022 | 17.1.2022 |
|---|---|---|---|---|
| Abstand | 1896 | 2078 | 1873 | 1896 |

$\Delta t_i$

| Datum | 14.1.2022 | 15.1.2022 | 16.1.2022 | 17.1.2022 |
|---|---|---|---|---|
| Abstand | 1817 | 1852 | 1824 | 1835 |

$\Delta t_{i+1}$

Fig. 6

| Protokollieren Zugriffsdaten | **200** |
|---|---|

| Erfassen Angriff | **202** |
|---|---|

| Ausführen Anomalieanalyse | **204** |
|---|---|

| Identifizieren Zugriffsparameter | **206** |
|---|---|

| Überwachen Zugriffsdaten | **208** |
|---|---|

Fig. 7

| Überwachen Angriffsdaten | <u>300</u> |

302

Erfassen Anomalie

NEIN

JA

| Erkennen Angriff | <u>304</u> |

| Ausgeben Warnhinweis | <u>306</u> |

| Ausführen zugeordnete Gegenmaßnahmen | <u>308</u> |

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11159564 B2

**In der Beschreibung aufgeführte Nicht-Patentliteratur**

- Graph clustering and anomaly detection of access control log for forensic purposes. **VON STUDIAWAN HUDAN et al.** Digital Investigation. Elsevier Ltd, 2017, vol. 21, 76-87